# EUROPÄISCHE PATENTSCHRIFT

(11) **EP 2 598 604 B1**
(45) Veröffentlichungstag und Bekanntmachung des Hinweises auf die Patenterteilung: **25.11.2015**
(21) Anmeldenummer: 11728788.8
(22) Anmeldetag: 01.07.2011
(51) Int. Cl.: C09K 19/34, C09K 19/42, C09K 19/04, C09K 19/12, C09K 19/30

(54) **FLÜSSIGKRISTALLINES MEDIUM ENTHALTEND THIOPHENDERIVATE**
LIQUID CRYSTAL MEDIUM CONTAINING THIOPHENE DERIVATIVES
MILIEU À BASE DE CRISTAUX LIQUIDES CONTENANT DES DÉRIVÉS DE THIOPHÈNE

(30) Priorität: 29.07.2010 DE 102010032617
(43) Veröffentlichungstag der Anmeldung: 05.06.2013
(73) Patentinhaber: Merck Patent GmbH, 64293 Darmstadt (DE)
(72) Erfinder: WITTEK, Michael, 64390 Erzhausen (DE); SCHULER, Brigitte, 63762 Grossostheim (DE); JANSEN, Axel, 64293 Darmstadt (DE)
(86) Internationale Anmeldenummer: PCT/EP2011/003271
(87) Internationale Veröffentlichungsnummer: WO 2012/013281

(56) Entgegenhaltungen:
- EP-A2- 0 467 260
- WO-A1-2010/099853
- DE-A1-102009 015 554
- JP-A- 2007 084 487
- US-A- 5 580 488
- MCDONALD R ET AL: "SYNTHESIS AND EVALUATION OF SOME NOVEL CHIRAL HETEROCYCLIC LIQUID CRYSTALLINE MATERIALS EXHIBITING FERRO- AND ANTIFERRO-ELECTRIC PHASES", LIQUID CRYSTALS: AN INTERNATIONAL JOURNAL OF SCIENCE AND TECHNOLOGY, TAYLOR & FRANCIS, GB, Bd. 32, Nr. 3, 1. März 2005 (2005-03-01), Seiten 319-330, XP001225999, ISSN: 0267-8292
- PANTALONE K ET AL: "NEW BENT CORE MESOGENS WITH EXCEPTIONALLY HIGH CLEARING POINTS", LIQUID CRYSTALS: AN INTERNATIONAL JOURNAL OF SCIENCE AND TECHNOLOGY, TAYLOR & FRANCIS, GB, Bd. 29, Nr. 7, 1. Juli 2002 (2002-07-01), Seiten 945-950, XP001125214, ISSN: 0267-8292, DOI: 10.1080/02678290210145139
- SEED A J ET AL: "NOVEL, HIGHLY POLARIZABLE THIOPHENE DERIVATIVES FOR USE IN NONLINEAR OPTICAL APPLICATIONS", LIQUID CRYSTALS: AN INTERNATIONAL JOURNAL OF SCIENCE AND TECHNOLOGY, TAYLOR & FRANCIS, GB, Bd. 30, Nr. 9, 1. September 2003 (2003-09-01), Seiten 1089-1107, XP001169724, ISSN: 0267-8292, DOI: 10.1080/0267829031000154363

## Beschreibung

Die vorliegende Erfindung betrifft flüssigkristalline Medien (FK-Medien) mit Thiophenderivaten und Flüssigkristallanzeigen (FK-Anzeigen) enthaltend diese FK-Medien. Die Medien besitzen eine hohe optische Anisotropie und weisen vorzugsweise einen Gehalt von 25 Gew.-% oder mehr an Thiophenderivaten auf.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie beispielsweise die IPS-Zellen ("in-plane switching"). Vor allem die TN-, STN- und IPS- Zellen, insbesondere die TN-, STN- und IPS-Zellen, sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische Mesophase. Da Flüssigkristalle in der Regel als Mischungen mehrerer Komponenten zur Anwendung gelangen, ist es wichtig, dass die Komponenten untereinander gut mischbar sind. Die einzelnen Verbindungen sollten in einer typischen Mischung, auch Host genannt, eine hohe Löslichkeit besitzen. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Für TV- und Videoanwendungen werden MFK-Anzeigen mit geringen Schaltzeiten benötigt. Solche geringen Schaltzeiten lassen sich besonders dann realisieren, wenn Flüssigkristallmedien mit geringen Werten für die Viskosität, insbesondere der Rotationsviskosität γ₁ verwendet werden. Verdünnende Zusätze verringern jedoch in der Regel den Klärpunkt und damit den Arbeitstemperaturbereich des Mediums.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Bei FK-Anzeigen für TV- und Videoanwendungen (z.B. LCD-TV, Monitore, PDAs, Notebooks, Spielkonsolen) ist eine deutliche Verringerung der Schaltzeiten gewünscht. Es besteht deshalb ein Bedarf an Verbindungen für FK-Medien, die eine Verringerung der Schaltzeiten ermöglichen, ohne gleichzeitig die anderen Eigenschaften des FK-Mediums, wie beispielsweise den Klärpunkt, die dielektrische Anisotropie Δε oder die Doppelbrechung Δn zu verschlechtern. Hierfür sind insbesondere niedrige Rotationsviskositäten wünschenswert.

Bei Anwendungen für FK-Medien mit positiver dielektischer Anisotropie sind generell schnelle Schaltzeiten gefragt. Es ist bekannt, dass eine Verringerung der Schichtdicke d des FK-Mediums in der FK-Zelle theoretisch zu einer Verringerung der Schaltzeiten führt. Deshalb werden hierfür FK-Medien mit höheren Doppelbrechungswerten Δn benötigt, um eine ausreichende optische Verzögerung d Δn zu gewährleisten. Andererseits zeigen jedoch FK-Medien mit höheren Doppelbrechungswerten typischerweise auch höhere Werte der Rotationsviskosität, was wiederum zu längeren Schaltzeiten führt. Die durch Verringerung der Schichtdicke erzielte Verkürzung der Schaltzeit wird somit durch die höhere Rotationsviskosität des verwendeten FK-Mediums zumindest teilweise wieder kompensiert. Es besteht deshalb ein dringender Bedarf an FK-Medien, welche gleichzeitig hohe Doppelbrechungswerte und niedrige Rotationsviskositäten aufweisen. Neben diesen etablierten Displayanwendungen, denen verschiedene elektrooptische Effekte zugrunde liegen, gibt es einige elektrooptische Vorrichtungen, die mit FK-Medien arbeiten. Unter diesen finden sich Drucker, Scanner, Linsen, Belichtungsapparate und elektrooptische Verschlüsse ('shutter'). Letztere können in technischen Apparaten oder Kameras verwendet werden, und neuerdings auch in Anzeigen für dreidimensionale Bilder (3D). Solche 3D-Anzeigevorrichtungen verwenden schnell schaltende FK-Medien als Verschluss um getrennte Strahlen abwechselnd für die Ansteuerung des linken und rechten Auges eines Beobachters zu erzeugen. Das FK-Medium kann dabei, je nach 3D-Technologie, in einer Brille oder in einem Teil des Bildschirms untergebracht sein. Für solche Anwendungen sind sehr schnelle Schaltzeiten erforderlich. Eine hohe Doppelbrechung ist in vielen Fällen ebenfalls wünschenswert, um z. B. eine regelbare Lichtbeugung für FK-Linse zu erreichen. Diese schaltbaren Linsen können in autostereoskopischen Displays bestehend aus einem schaltbaren 2-D Display und schaltbaren optischen Elementen, die zwischen einem 2-D und einem 3-D Modus wechseln können, eingesetzt werden. Die Linsen, ausgebildet als schaltbare Lentikularlinsen weiten die Pixelinhalte des 2-D-Displays fächerförmig in den Raum auf. Jedes Fächerelement beinhaltet die Information eines 3-D-Inhaltes aus einem bestimmten Betrachtungswinkel. Liegen beide Augen des Betrachters in aneinander angrenzenden Fächern, so nimmt der Betrachter eine räumliche stereoskopisches Bild wahr.

Die schaltbare Linse kann dabei als Flüssigkristall-GRIN-Linse ('gradient index lens', Grandientenindexlinse) oder als Flüssigkristall-Replikalinse realisiert werden. Um eine hohe Brechkraft der Linse zu realisieren ist eine hohe optische Doppelbrechung des verwendeten FK-Mediums wünschenswert.

Der Erfindung liegt die Aufgabe zugrunde, Medien insbesondere für derartige MFK-, TN-, STN- oder IPS-Anzeigen bereitzustellen, welche die oben angegebenen gewünschten Eigenschaften besitzen und die oben angegebenen Nachteile nicht oder nur in geringerem Maße zeigen. Insbesondere sollten die FK-Medien schnelle Schaltzeiten und niedrige Rotationsviskositäten bei gleichzeitig hoher dielektrische Anisotropie und hoher Doppelbrechung aufweisen. Darüber hinaus sollten die FK-Medien einen hohen Klärpunkt, einen breiten nematischen Phasenbereich und eine niedrige Schwellenspannung aufweisen.

Es wurde nun gefunden, dass diese Aufgabe gelöst werden kann, wenn man hohe Konzentrationen bestimmter Thiophenderivaten in FK-Medien, insbesondere in FK-Medien mit positiver dielektischer Anisotropie, und in MFK-, TN-, STN- und IPS-Anzeigen, verwendet. Diese Thiophenderivate führen zu FK-Medien mit den oben angegebenen gewünschten Eigenschaften.

Zahlreiche Thiophenverbindungen wurden als Flüssigkristalle beschreiben. Verbindungen und Mischungen sind bekannt, z.B. DE 10 2009 015554 A1; WO 2010/099853 A1; EP 0 467 260 A2; McDonald et al. "Synthesis and evaluation of some novel chiral heterocyclic liquid crystalline materials exhibiting ferro- and antiferro-electric phases" Liquid Crystals 2005, 32, 319 - 330; Pantalone et al. "New bent core mesogens with exceptionally high clearing points" Liquid Crystals 2002, 29, 945 - 950; Seed et al. "Novel, Highly polarizable thiophene derivatives for use in nonlinear optical applications" Liquid Crystals 2003, 30, 1089 - 1107; JP 2007 084487 A; US 5,580,488 A; und aus der Druckschrift WO 2009/129915 A1. Der Anteil an Thiophenverbindungen aus der Druckschrift WO 2009/129915 A1 ist 3 bis 18 Gew.-%.

Gegenstand der vorliegenden Erfindung ist somit ein FK-Medium enthaltend 30 Gew.-% oder mehr an einer oder mehreren Verbindungen der Formel I 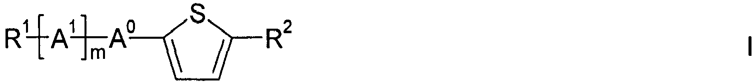 worin die einzelnen Reste folgende Bedeutung besitzen
- R¹ und R²: H, F, Cl, Br, -CN, -SCN, -NCS, SF₅ oder geradkettiges oder verzweigtes Alkyl mit 1 bis 12 C-Atomen, worin auch eine oder mehrere nicht benachbarte CH₂-Gruppen jeweils unabhängig voneinander durch -CH=CH-, -C≡C-, -O-, -CO-, -CO-O-, -O-CO-, -O-CO-O- so ersetzt sein können, dass O-Atome nicht direkt miteinander verknüpft sind, und worin auch ein oder mehrere H-Atome durch F, Cl oder Br ersetzt sein können,
- A⁰: 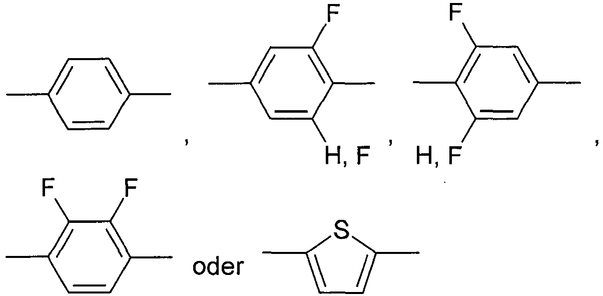
- A¹: unabhängig voneinander Phenylen-1,4-diyl, worin auch eine oder zwei CH-Gruppen durch N ersetzt sein können und ein oder mehrere H-Atome durch Halogen, CN, CH₃, CHF₂, CH₂F, OCH₃, OCHF₂ oder OCF₃ ersetzt sein können, Cyclohexan-1,4-diyl, worin auch eine oder zwei nicht benachbarte CH₂ -Gruppen unabhängig voneinander durch O und/oder S ersetzt sein können, und ein oder mehrere H-Atome durch F ersetzt sein können, Cyclohexen-1,4-diyl, Bicyclo[1.1.1]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl,
- m: 0, 1, oder 2, bevorzugt 1 oder 2, besonders bevorzugt 1.

Ein bevorzugter Gegenstand der Erfindung ist ein FK-Medium welches bei Raumtemperatur eine, vorzugsweise achirale, nematische Phase aufweist, enthaltend eine oder mehrere Verbindungen der Formel I. Die Medien besitzen eine hohe optische Anisotropie und weisen vorzugsweise einen Gehalt von 30 Gew.-% oder mehr an Thiophenderivaten auf.

Weiterer Gegenstand der Erfindung ist die Verwendung von erfindungsgemäßen FK-Medien in elektrooptischen Anzeigen, insbesondere FK-Anzeigen.

Weiterer Gegenstand der Erfindung ist eine FK-Anzeige oder eine elektrooptische Vorrichtung enthaltend eine oder mehrere Verbindungen der Formel I (vorzugsweise 30 Gew--% oder mehr) oder ein erfindungsgemäßes FK-Medium. Insbesondere handelt es sich um eine MFK-, TN-, STN- oder IPS-Anzeige oder um eine elektrooptische schaltbare Linse oder einen Verschluss, vorzugsweise für eine FK-Anzeige, Kamera, Drucker oder Belichtungsapparat.

FK-Medien, die ohne Gegenwart von chiralen Dotierstoffen eine achirale FK-Phase aufweisen, sowie Verbindungen der Formel I, worin die Reste Z^{1,2}, A^{1,2}, R^{1,2} kein Chiralitätszentrum aufweisen, sind generell bevorzugt.

Das Medium enthält 30 Gew.% oder mehr, und besonders bevorzugt 40 Gew.-% oder mehr an Verbindungen der Formel I.

Besonders bevorzugt sind FK-Medien enthaltend Verbindungen der Formel I, worin
A⁰ 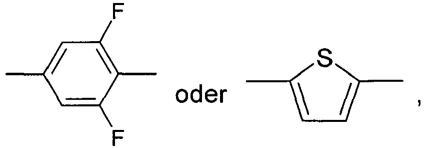 insbesondere 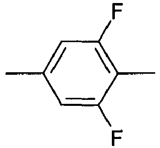 bedeutet.

Die Ringe A¹ in Formel I bedeuten besonders bevorzugt Phenylen-1,4-diyl, welches auch ein oder mehrfach durch F substituiert sein kann.

Besonders bevorzugt bedeutet A¹ in Formel I einen Rest der Formel 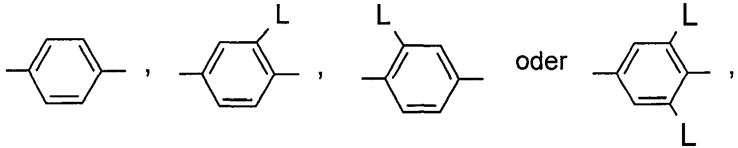 bevorzugt unsubstituiertes 1,4-Phenylen, worin L Halogen, vorzugsweise F bedeutet.

Ferner bevorzugt sind Verbindungen der Formel I, worin R¹ und R² jeweils unabhängig voneinander unverzweigtes Alkyl, Alkenyl oder Alkinyl mit 1 bis 8, vorzugsweise 1 bis 5 C-Atomen bedeuten. Ganz besonders bevorzugt ist R¹ gleich Alkyl. R¹, R² bedeuten jeweils unabhängig voneinander ganz besonders bevorzugt unverzweigtes Alkyl mit 1-5 C-Atomen. Falls R¹ und R² substituiertes Alkyl, Alkoxy, Alkenyl oder Alkinyl bedeuten, beträgt die Gesamtzahl der C-Atome in beiden Gruppen R¹ und R² vorzugsweise weniger als 10.

Bevorzugte Alkylgruppen sind beispielsweise Methyl, Ethyl, n-Propyl, n-Butyl, n-Pentyl, n-Hexyl, n-Heptyl und n-Octyl.

Bevorzugte Alkenylgruppen sind beispielsweise Ethenyl, Propenyl, Butenyl und Pentenyl.

Bevorzugte Alkinylgruppen sind beispielsweise Ethinyl, Propinyl, Butinyl, Pentinyl, Hexinyl, Heptinyl und Octinyl.

Bevorzugte Alkoxygruppen sind beispielsweise Methoxy, Ethoxy, n-Propoxy, n-Butoxy, n-Pentoxy, n-Hexoxy, n-Heptoxy, n-Octoxy.

Halogen bedeutet vorzugsweise F oder Cl.

Besonders bevorzugte Verbindungen der Formel I sind solche ausgewählt aus folgenden Unterformeln 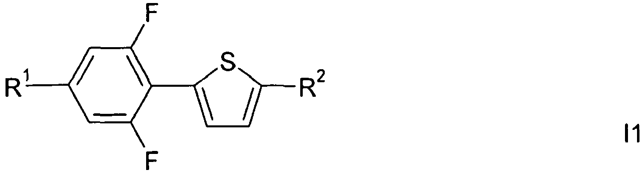 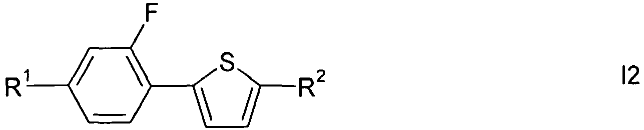 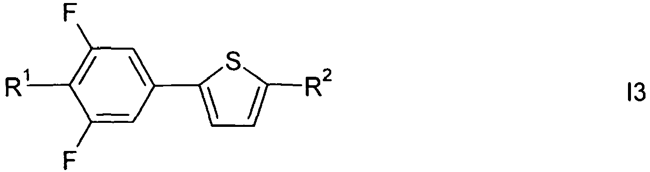 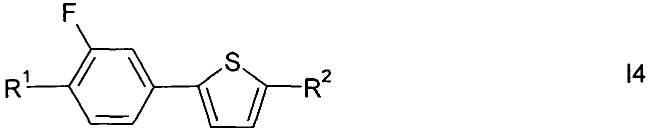 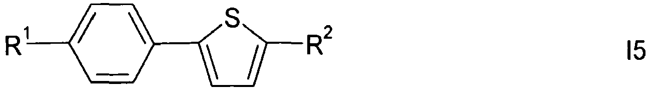 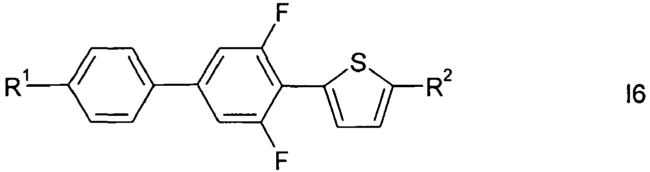 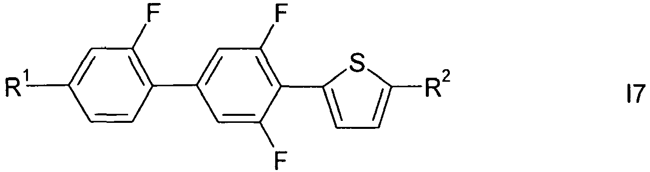 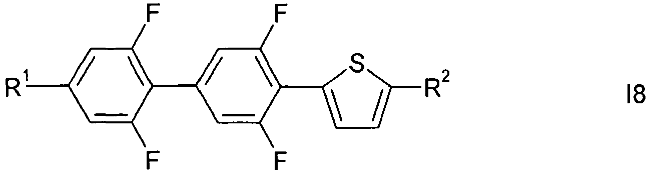 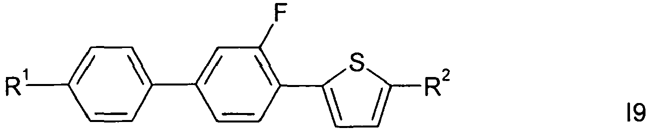 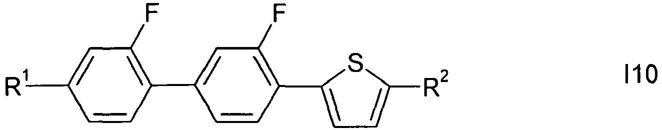 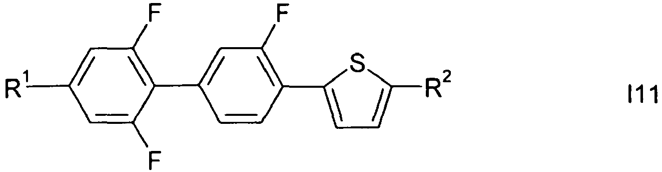 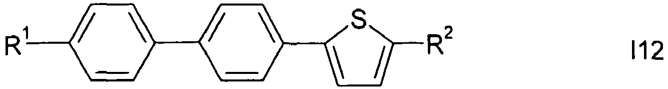 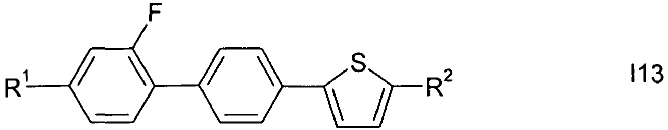 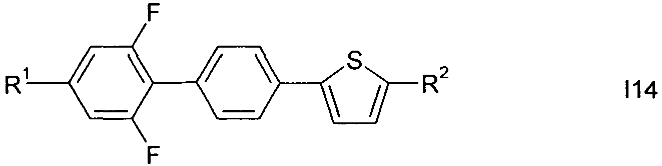 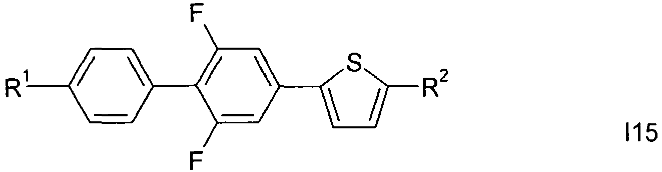 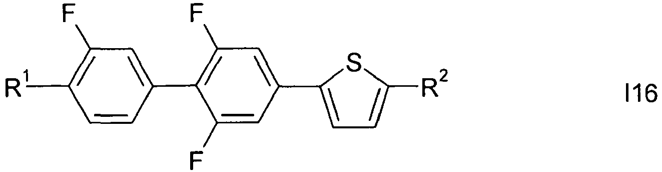 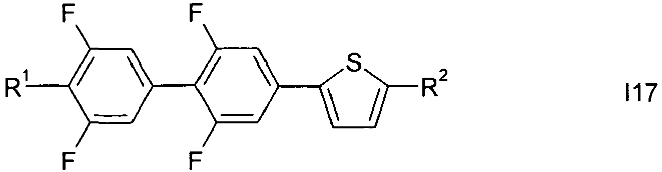 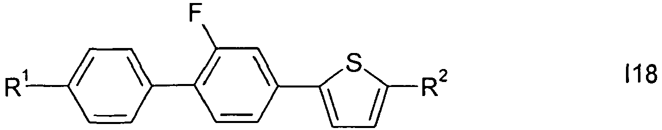 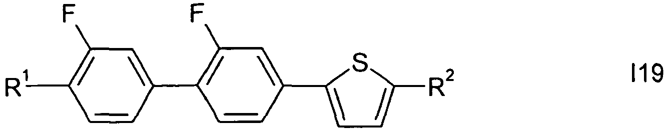 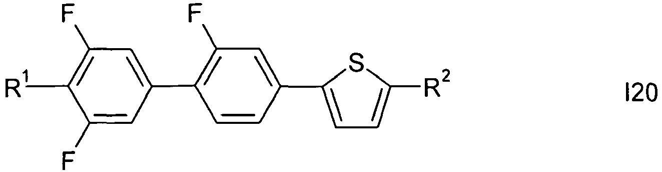 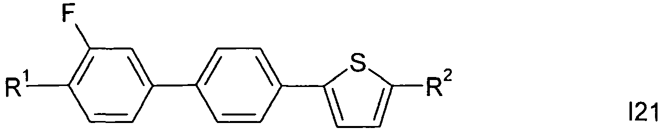 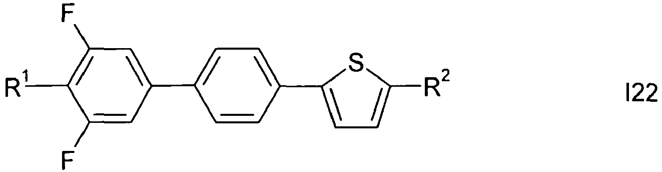 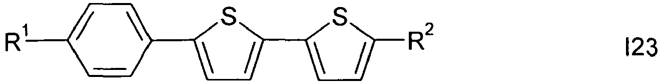 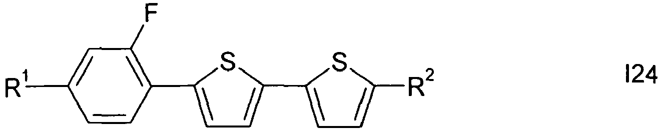 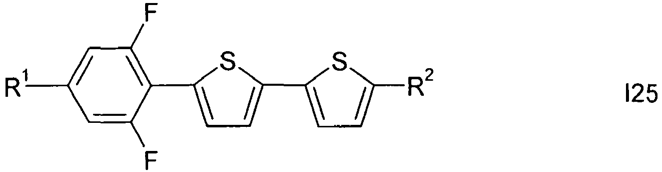 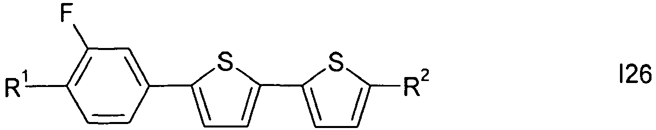 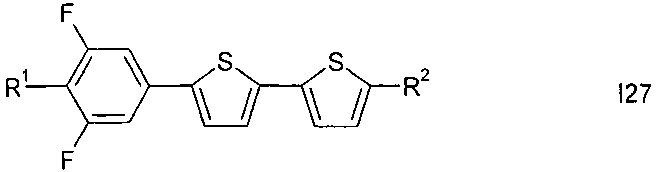 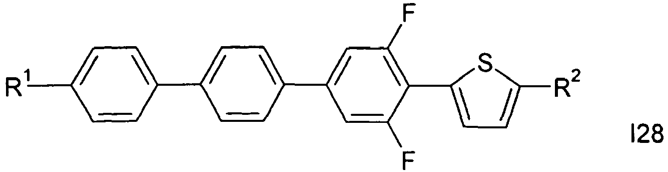 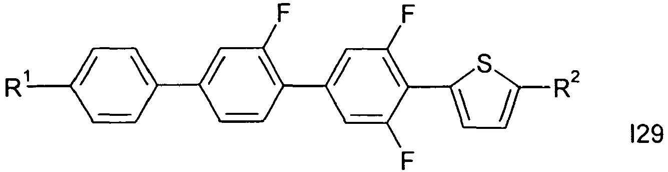 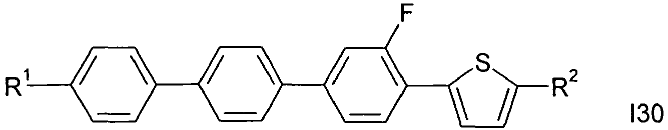 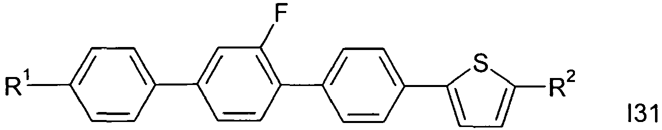 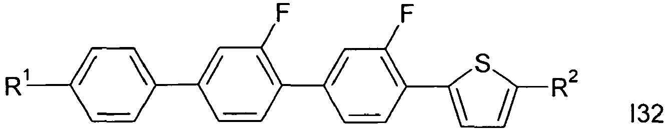 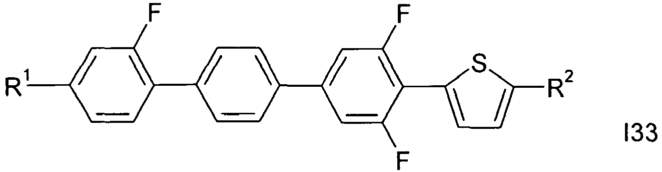 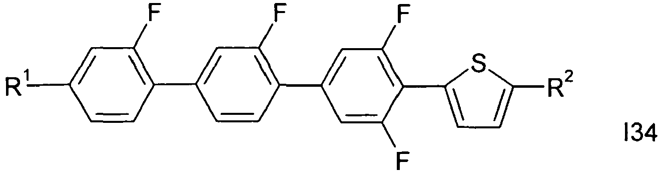 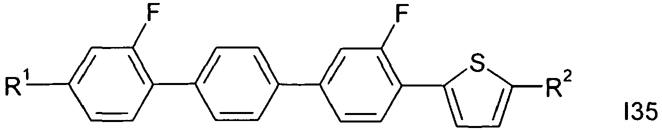 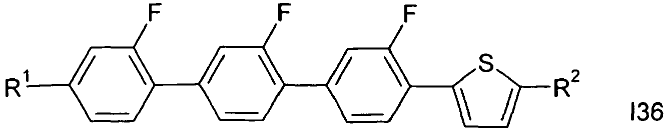 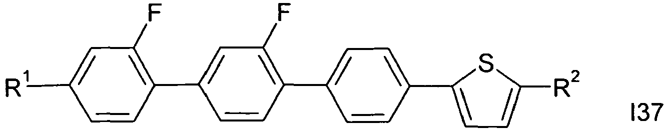 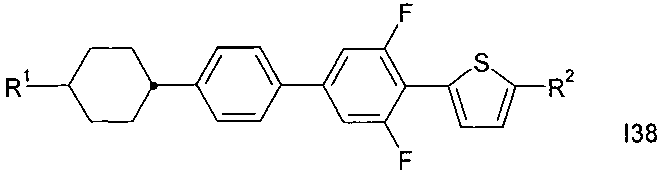 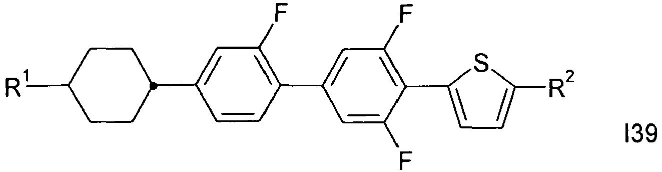 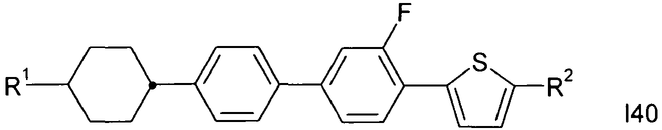 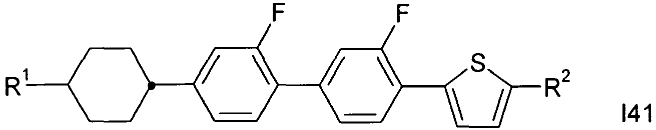 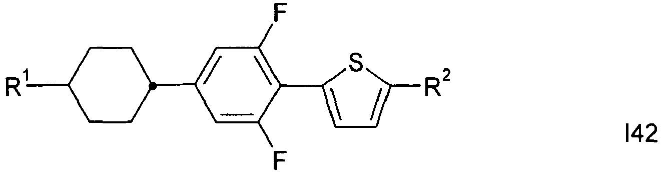 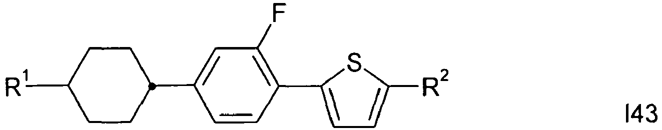 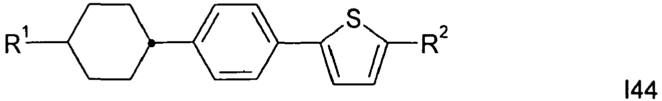 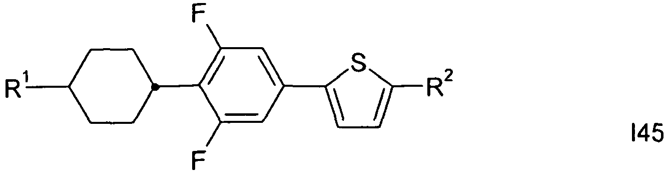 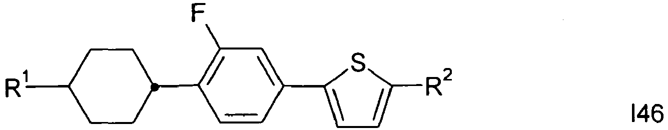 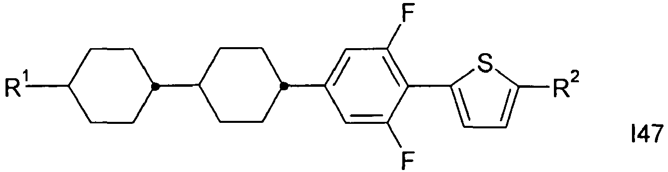 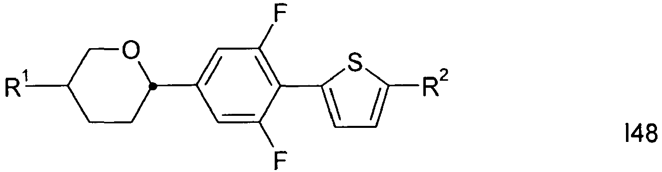 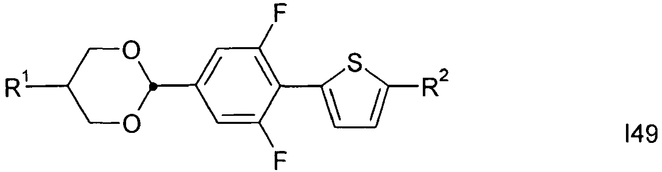 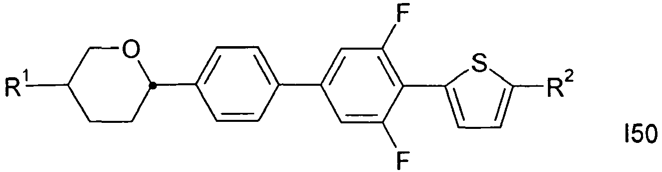 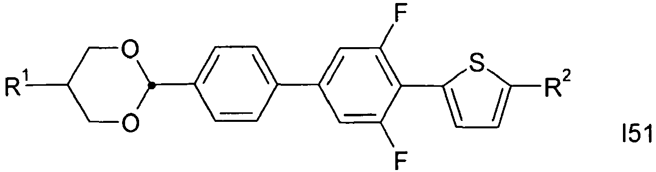 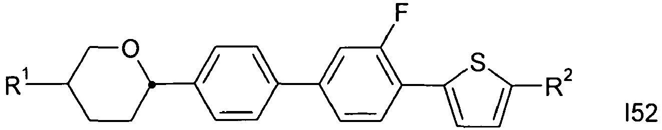 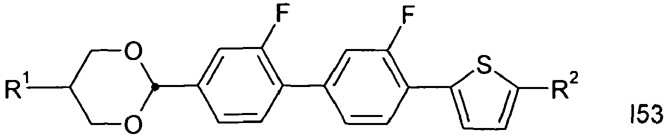 worin R¹ und R² die vor- und nachstehend angegebenen Bedeutungen besitzen. R¹ und R² bedeuten darin vorzugsweise optional fluoriertes Alkyl, Alkenyl, Alkinyl oder Alkoxy mit 1 bis 12 C-Atomen, besonders bevorzugt optional fluoriertes Alkyl, Alkenyl oder Alkinyl mit 1 bis 6 C-Atomen. Die Verbindungen der Formel I1 bis I37 sind aufgrund der hohen dielektrischen Anisotropie in Relation zur Viskosität besonders bevorzugt, insbesondere die Verbindungen I1 bis I27, und ganz besonders die Verbindungen der Formel I6.

Die Synthese von geeigneten Thiophenen der Formel I ist bekannt, z.B. aus WO 2009/129915 A1, und den internationalen Anmeldungen PCT/EP2010/000636 und PCT/EP2010/000968. Weitere Verbindungen der Formel I können in Analogie zu bekannten und/oder in Standardwerken der organischen Chemie beschriebenen Verfahren, wie beispielsweise in Houben-Weyl, Methoden der organischen Chemie, Thieme-Verlag, Stuttgart, und in Analogie zu den Beispielsynthesen hergestellt werden.

Besonders bevorzugte erfindungsgemäße FK-Medien werden im Folgenden genannt:
- FK-Medium, welches zusätzlich eine oder mehrere Verbindungen der Formel II und/oder III enthält: 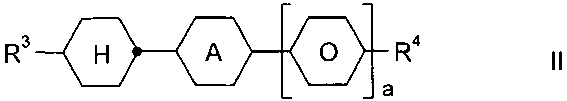 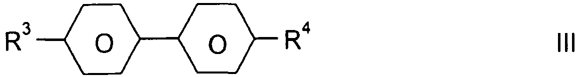 worin
   - A: 1,4-Phenylen oder trans-1,4-Cyclohexylen bedeutet,
   - a: 0 oder 1 ist,
   - R³: Alkyl oder Alkenyl mit 1 bis 8 bzw. 2 bis 9 C-Atomen bedeutet, vorzugsweise Alkenyl, und
   - R⁴: Alkyl mit 1 bis 12 C-Atomen, wobei auch eine oder zwei nicht benachbarte CH₂-Gruppen durch -O-, -CH=CH-, -CO-, -OCO-oder -COO- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

Die Verbindungen der Formel II sind vorzugsweise ausgewählt aus der Gruppe bestehend aus folgenden Formeln: 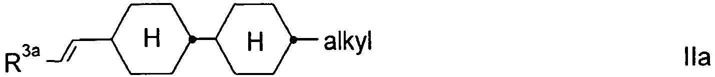 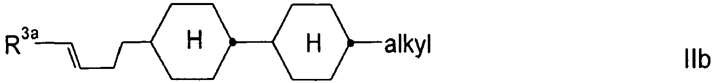 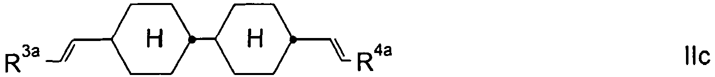 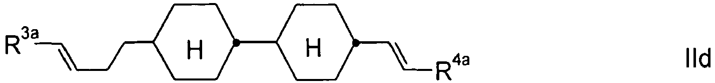 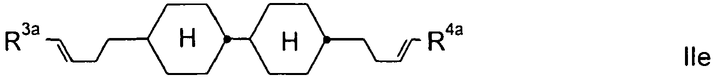 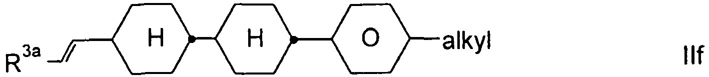 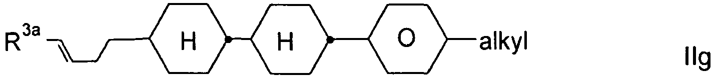 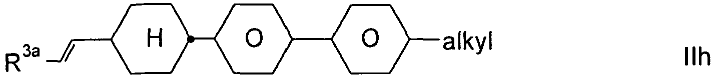 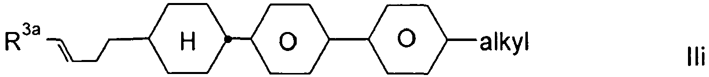 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIa und IIf, insbesondere worin R^{3a} H oder CH₃, vorzugsweise H, bedeutet, und Verbindungen der Formel IIc, insbesondere worin R^{3a} und R^{4a} H, CH₃ oder C₂H₅ bedeuten.

Die Verbindungen der Formel III sind vorzugsweise ausgewählt aus der Gruppe bestehend aus den folgenden Formeln: 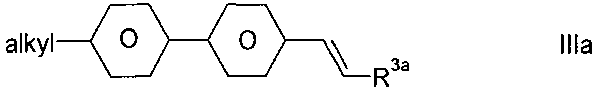 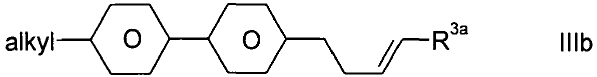 worin "alkyl" und R^{3a} die oben angegebenen Bedeutungen haben und R^{3a} vorzugsweise H oder CH₃ bedeutet. Besonders bevorzugt sind Verbindungen der Formel IIIb;
- FK-Medium, welches zusätzlich eine oder mehrere Verbindungen ausgewählt aus der Gruppe bestehend aus den folgenden Formeln enthält: 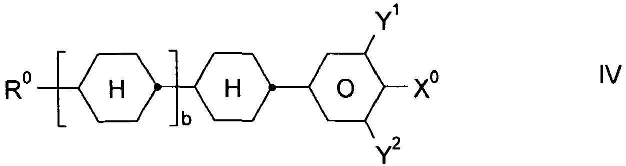 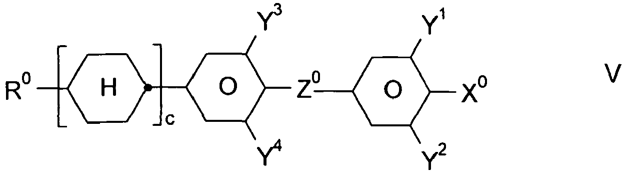 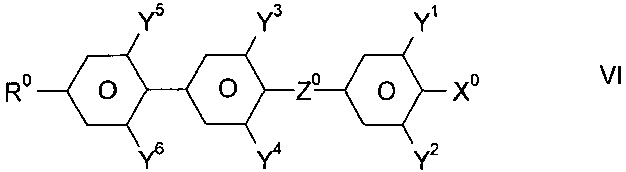 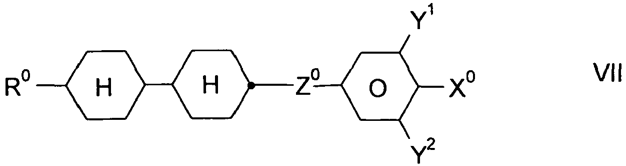 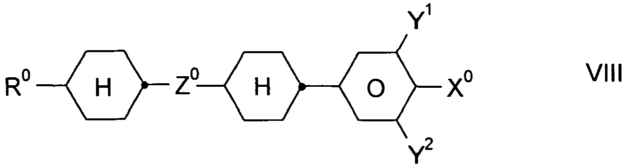 worin
   - R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 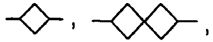 -O-, -CO-O- oder -O-CO- so ersetzt sein können, dass O-Atome nicht direkt miteinander verknüpft sind, und worin auch ein oder mehrere H-Atome durch Halogen ersetzt sein können,
   - X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
   - Y¹⁻⁶: jeweils unabhängig voneinander H oder F,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
b und c jeweils unabhängig voneinander 0 oder 1
bedeuten.

In den Verbindungen der Formel IV bis VIII bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit jeweils bis zu 6 C-Atomen.

Die Verbindungen der Formel IV sind vorzugsweise ausgewählt aus der Gruppe bestehend aus den folgenden Formeln: 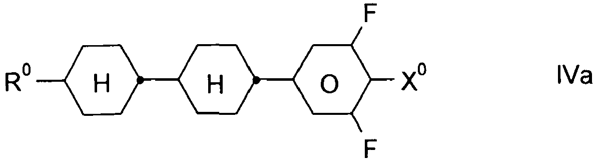 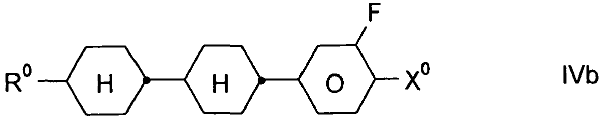 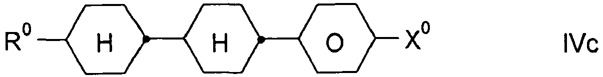 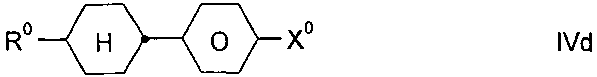 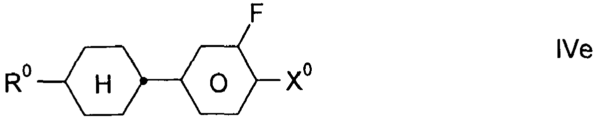 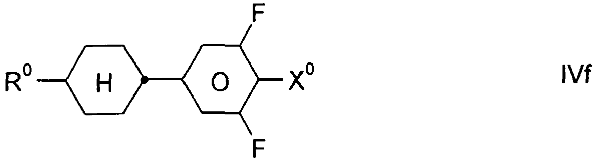 worin R⁰ und X⁰ die oben angegebenen Bedeutungen haben.

Vorzugsweise bedeutet in Formel IV R⁰ Alkyl mit 1 bis 8 C-Atomen und X⁰ F, Cl, OCHF₂ oder OCF₃, ferner OCH=CF₂. In der Verbindung der Formel IVb bedeutet R⁰ vorzugsweise Alkyl oder Alkenyl. In der Verbindung der Formel IVd bedeutet X⁰ vorzugsweise Cl, ferner F.

Die Verbindungen der Formel V sind vorzugsweise ausgewählt aus der Gruppe bestehend aus den folgenden Formeln: 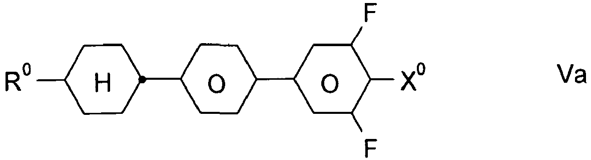 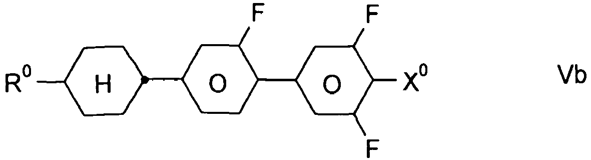 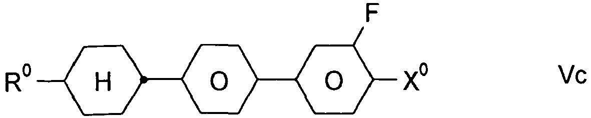 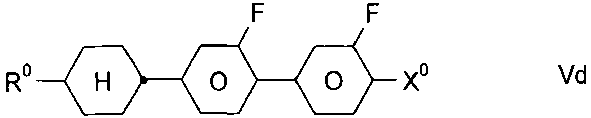 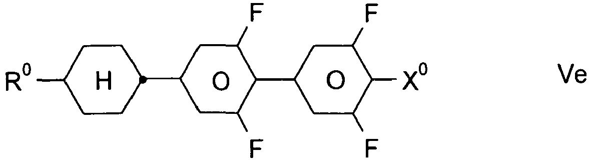 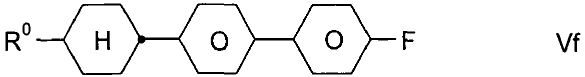 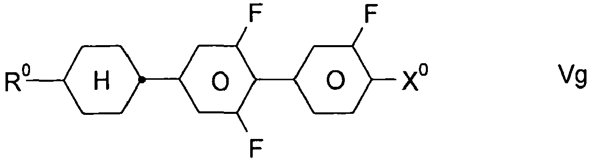 worin R⁰ und X⁰ die oben angegebenen Bedeutungen haben. Vorzugsweise bedeutet R⁰ in Formel V Alkyl mit 1 bis 8 C-Atomen und X⁰ F;
- FK-Medium, welches eine oder mehrere Verbindungen der Formel VI-1 enthält: 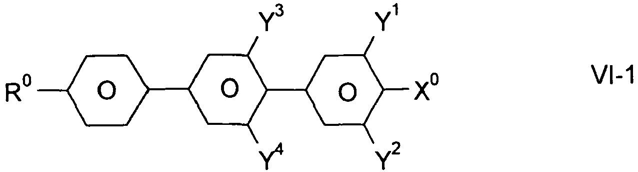 worin Y¹ bevorzugt F bedeutet,
   besonders bevorzugt solche ausgewählt aus der Gruppe bestehend aus den folgenden Formeln: 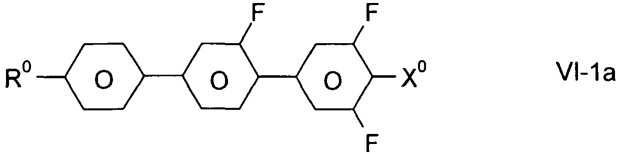 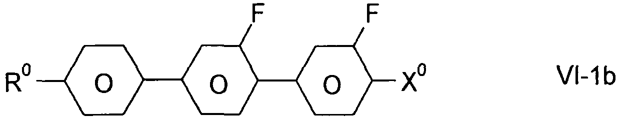 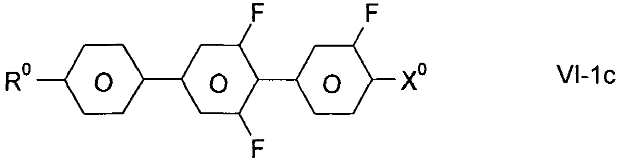 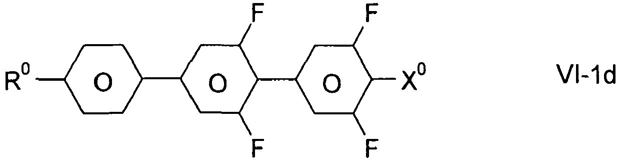 worin R⁰ und X⁰ die oben angegebenen Bedeutungen haben. Vorzugsweise bedeutet R⁰ in Formel VI Alkyl mit 1 bis 8 C-Atomen und X⁰ F, ferner OCF₃.
- FK-Medium, welches eine oder mehrere Verbindungen der Formel VI-2 enthält: 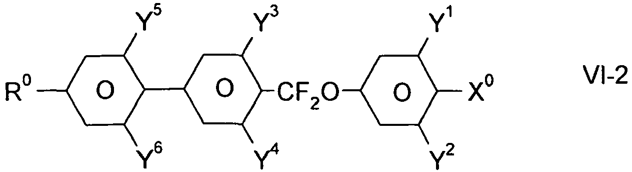 besonders bevorzugt solche ausgewählt aus der Gruppe bestehend aus den folgenden Formeln: 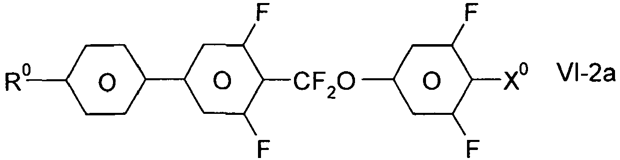 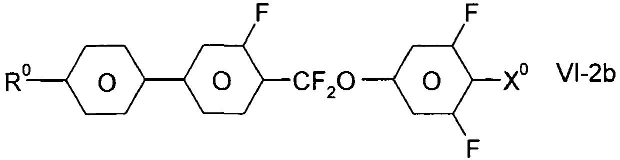 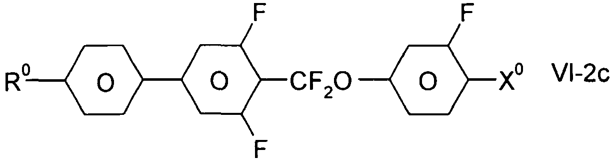 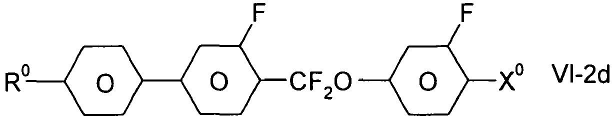 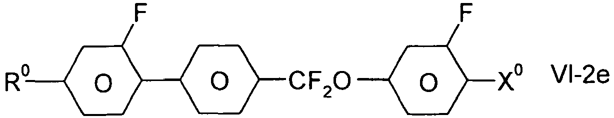 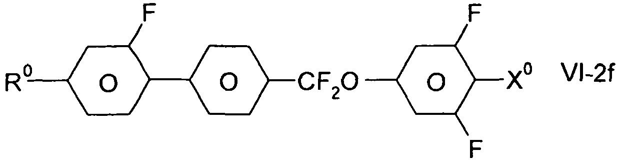 worin R⁰ und X⁰ die oben angegebenen Bedeutungen haben.

Vorzugsweise bedeutet R⁰ in Formel VI Alkyl mit 1 bis 8 C-Atomen und X⁰ F;
- FK-Medium, welches vorzugsweise eine oder mehrere Verbindungen der Formel VII, worin Z⁰ -CF₂O-, -CH₂CH₂ oder -COO-, bedeutet, enthält, besonders bevorzugt solche ausgewählt aus der Gruppe bestehend aus den folgenden Formeln: 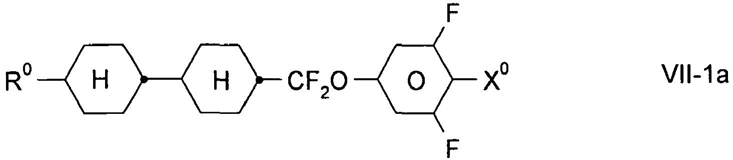 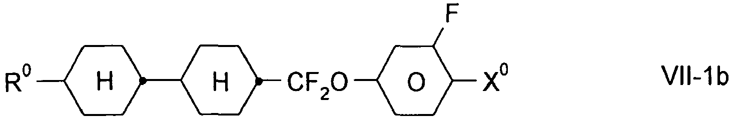 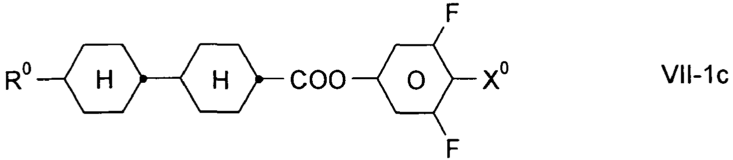 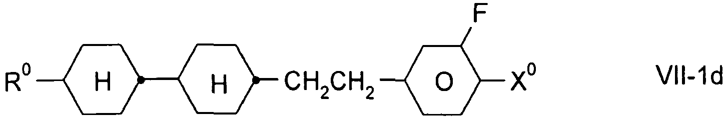 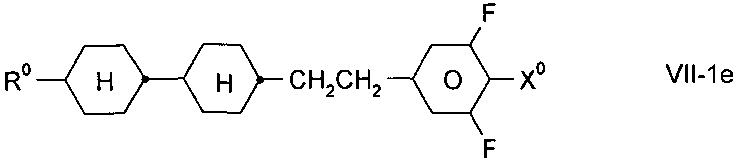 worin R⁰ und X⁰ die oben angegebenen Bedeutungen haben. Vorzugsweise bedeutet R⁰ in Formel VII Alkyl mit 1 bis 8 C-Atomen und X⁰ F, ferner OCF₃.

Die Verbindungen der Formel VIII sind vorzugsweise ausgewählt aus der Gruppe bestehend aus den folgenden Formeln: 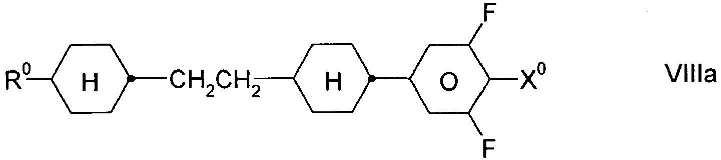 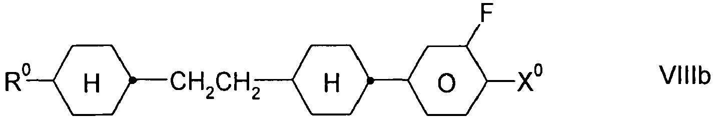 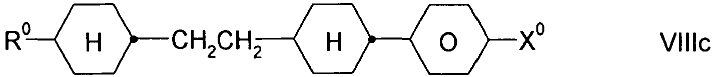 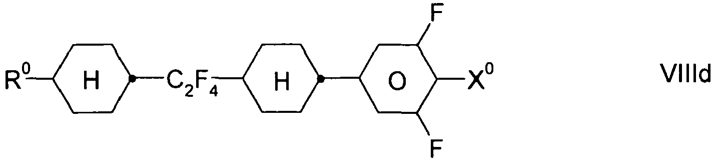 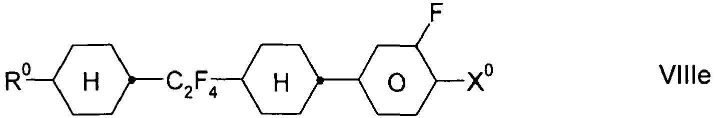 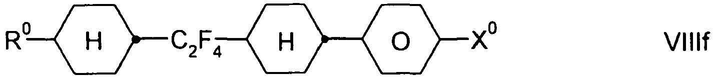 worin R⁰ und X⁰ die oben angegebenen Bedeutungen haben. Vorzugsweise bedeutet R⁰ einen geradkettigen Alkylrest mit 1 bis 8 C-Atomen. X⁰ bedeutet vorzugsweise F.
- FK-Medium, welches zusätzlich eine oder mehrere Verbindungen der folgenden Formel enthält: 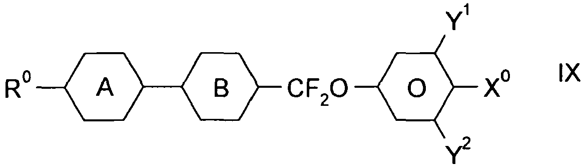 worin R⁰, X⁰, Y¹ und Y² die oben angegebene Bedeutung besitzen, und 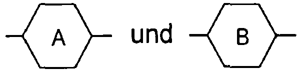 jeweils unabhängig voneinander 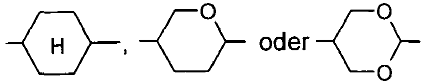 bedeuten, wobei die Ringe A und B nicht beide gleichzeitig Cyclohexylen bedeuten;

Die Verbindungen der Formel IX sind vorzugsweise ausgewählt aus der Gruppe bestehend aus den folgenden Formeln: 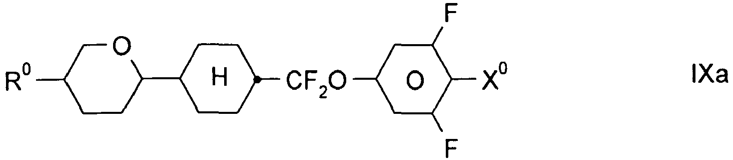 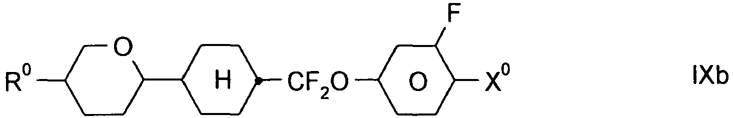 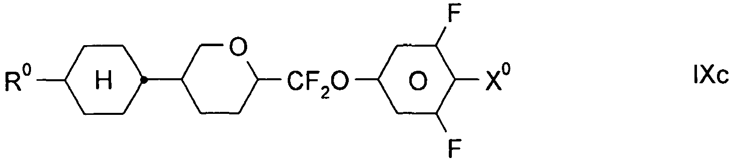 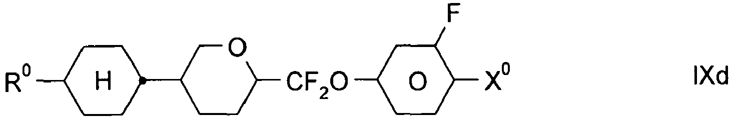 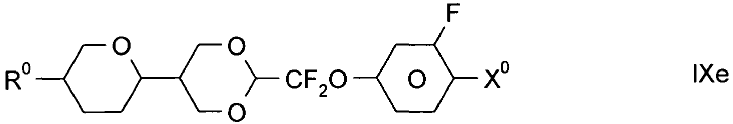 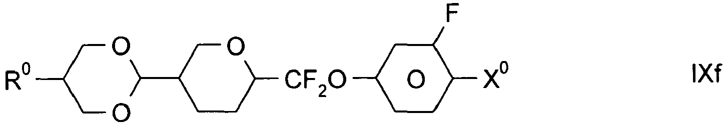 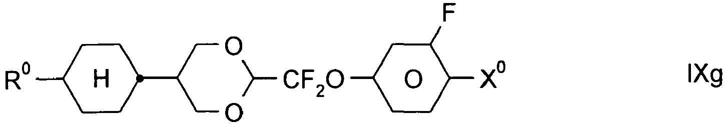 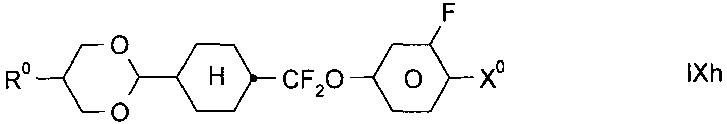 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel IXa;
- FK-Medium, welches zusätzlich eine oder mehrere Verbindungen ausgewählt aus der Gruppe bestehend aus den folgenden Formeln enthält: 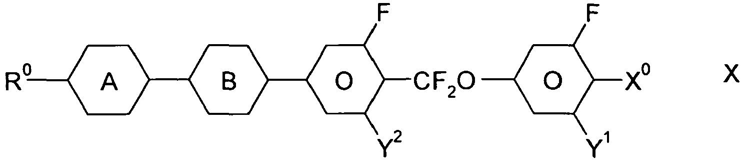 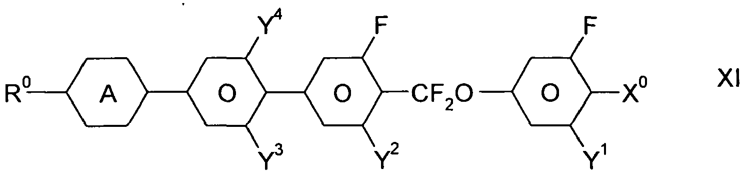 worin R⁰, X⁰ und Y¹⁻⁴ die oben angegebenen Bedeutungen besitzen, und 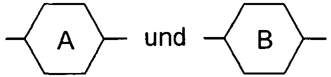 jeweils unabhängig voneinander 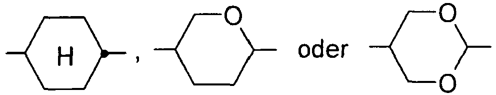 bedeuten;

Die Verbindungen der Formeln X und XI sind vorzugsweise ausgewählt aus der Gruppe bestehend aus den folgenden Formeln: 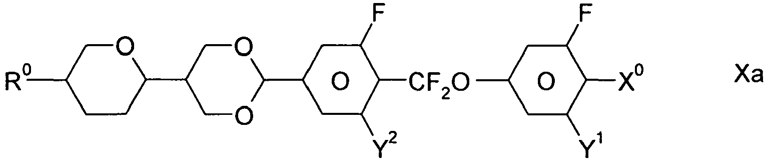 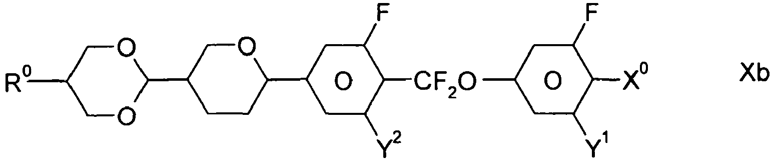 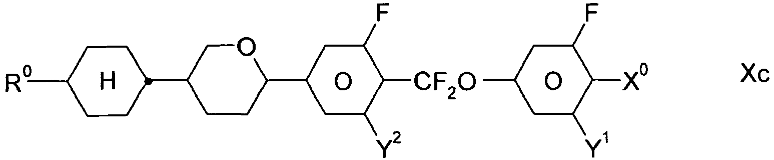 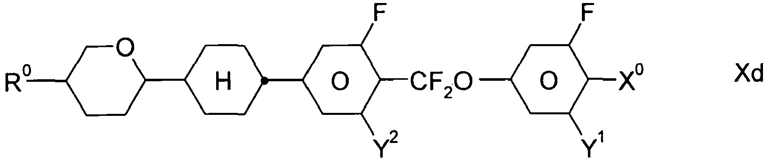 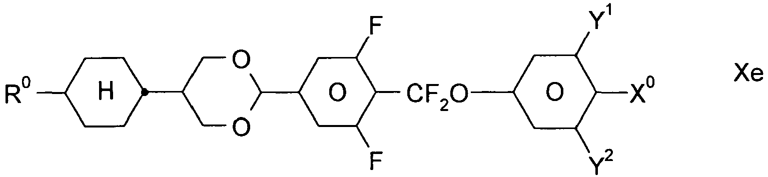 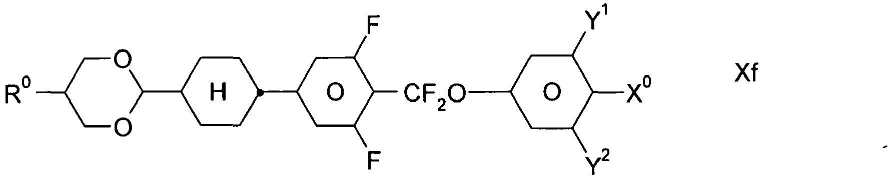 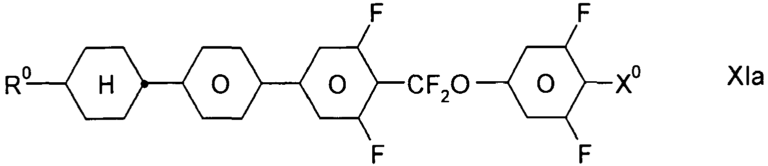 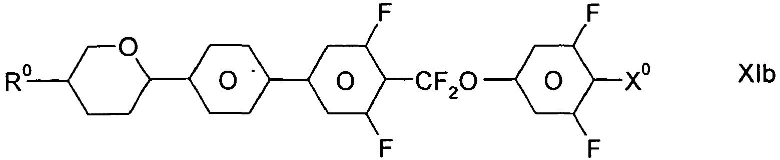 worin R⁰ und X⁰ die oben angegebenen Bedeutungen haben. Vorzugsweise bedeutet R⁰ Alkyl mit 1 bis 8 C-Atomen und X⁰ F. Besonders bevorzugte Verbindungen sind solche, worin Y¹ F und Y² H oder F, vorzugsweise F, bedeuten;
- FK-Medium, welches zusätzlich eine oder mehrere Verbindungen der folgenden Formel enthält: 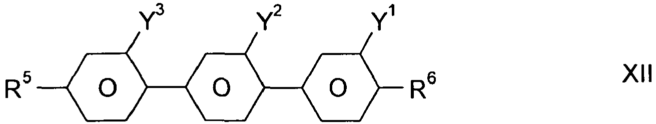 worin R⁵ und R⁶ jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten. Y¹⁻³ bedeutet unabhängig voneinander H oder F. Vorzugsweise bedeuten ein oder zwei der Gruppen aus Y¹⁻³ F.

Bevorzugte Verbindungen der Formel XII sind solche ausgewählt aus der Gruppe bestehend aus den folgenden Formeln: 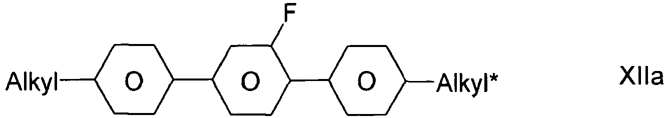 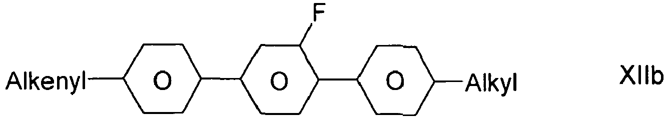 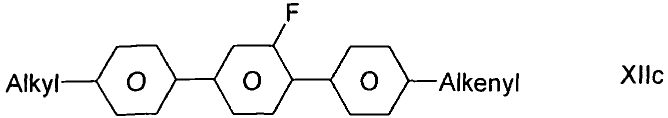 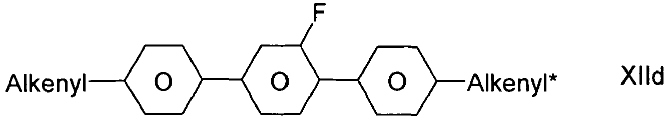 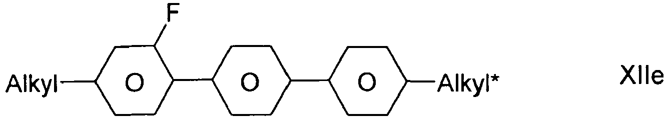 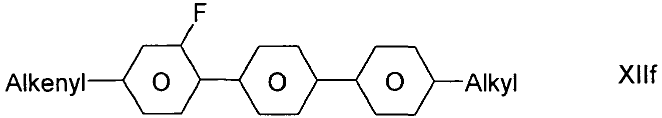 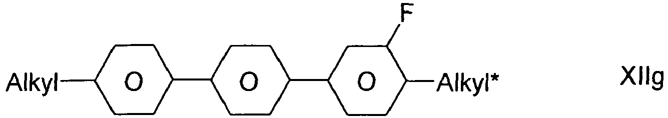 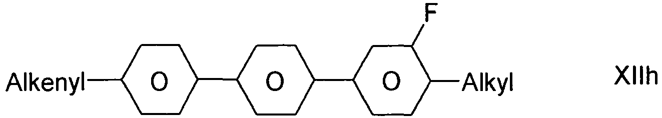 worin
- Alkyl und Alkyl*: jeweils unabhängig voneinander einen geradkettigen Alkylrest mit 1 bis 6 C-Atomen, und
- Alkenyl und Alkenyl*: jeweils unabhängig voneinander einen geradkettigen Alkenylrest mit 2 bis 6 C-Atomen
bedeuten.

Besonders bevorzugt sind die Verbindungen der Formel XXIIa bis Xlld. Ganz besonders bevorzugt sind Verbindungen der folgenden Formel 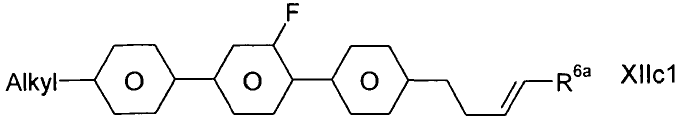 worin Alkyl die oben angegebene Bedeutung hat und R^{6a} H oder CH₃ bedeutet.
- FK-Medium, welches zusätzlich eine oder mehrere Verbindungen ausgewählt aus der Gruppe bestehend aus den folgenden Formeln enthält: 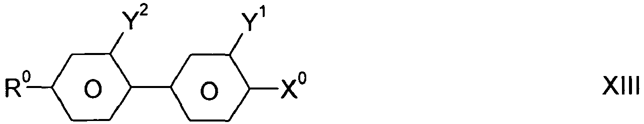 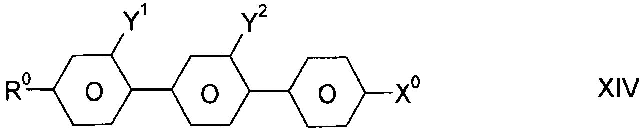 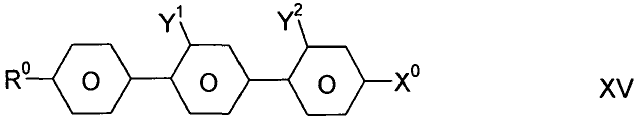 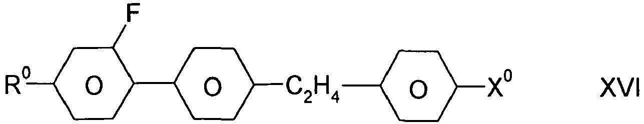
worin R⁰, X⁰, Y¹ und Y² die oben angegebenen Bedeutungen haben. Vorzugsweise bedeutet R⁰ Alkyl mit 1 bis 8 C-Atomen und X⁰ F oder CI;

Die Verbindungen der Formeln XIII und XIV sind vorzugsweise ausgewählt aus der Gruppe bestehend aus den folgenden Formeln: 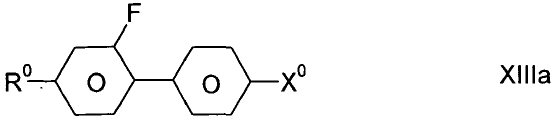 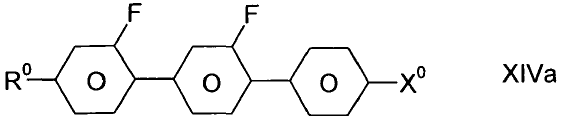 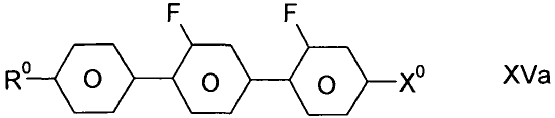 worin R⁰ und X⁰ die oben angegebenen Bedeutungen haben. Vorzugsweise bedeutet R⁰ Alkyl mit 1 bis 8 C-Atomen. In den Verbindungen der Formel XIII bedeutet X⁰ vorzugsweise F oder CI.
- FK-Medium, welches zusätzlich eine oder mehrere Verbindungen der Formel D1 und/oder D2 enthält: 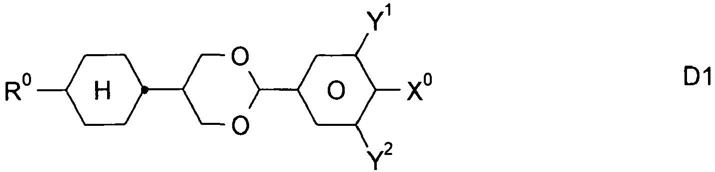 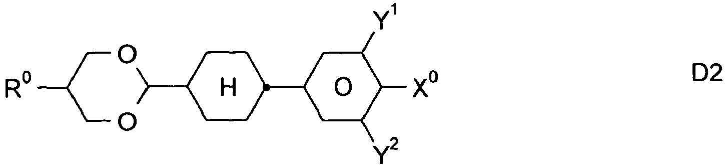 worin Y¹, Y², R⁰ und X⁰ die oben angegebene Bedeutung besitzen. Vorzugsweise bedeutet R⁰ Alkyl mit 1 bis 8 C-Atomen und X⁰ F. Besonders bevorzugt sind Verbindungen der folgenden Formeln: 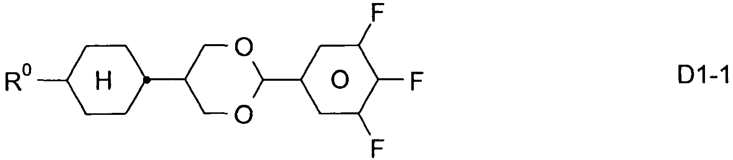 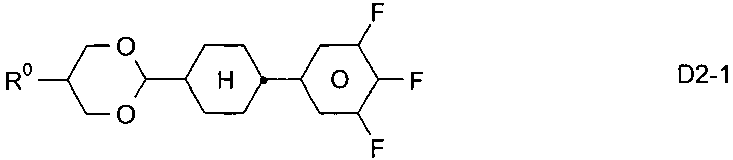 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
- FK-Medium, welches zusätzlich eine oder mehrere Verbindungen der folgenden Formel enthält: 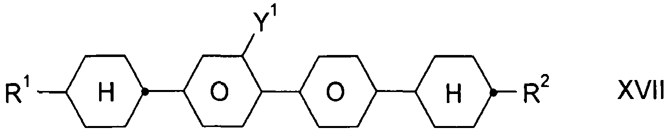 worin Y¹, R¹ und R² die oben angegebene Bedeutung besitzen. R¹ und R² bedeuten vorzugsweise jeweils unabhängig voneinander Alkyl mit 1 bis 8 C-Atomen;
- FK-Medium, welches zusätzlich eine oder mehrere Verbindungen der folgenden Formel enthält: 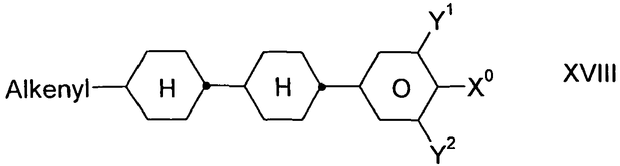 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 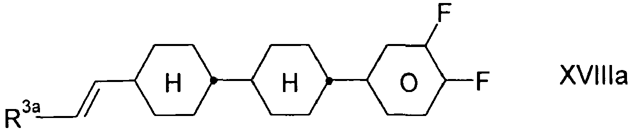 worin R^{3a} die oben angegebene Bedeutung hat und vorzugsweise H bedeutet;
- FK-Medium, welches zusätzlich eine oder mehrere Vierkern-Verbindungen ausgewählt aus der Gruppe bestehend aus den Formeln XIX bis XXV enthält: 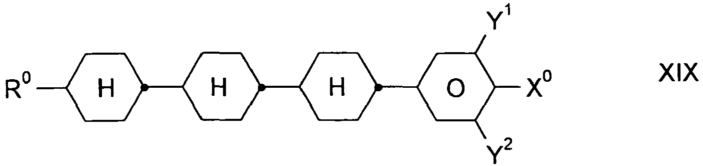 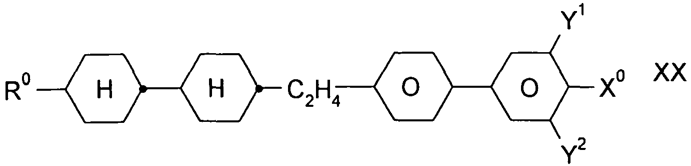 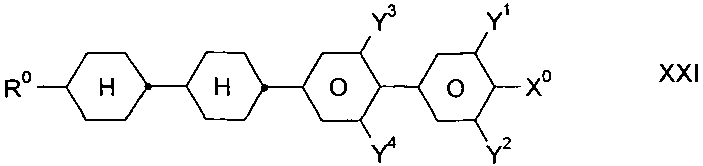 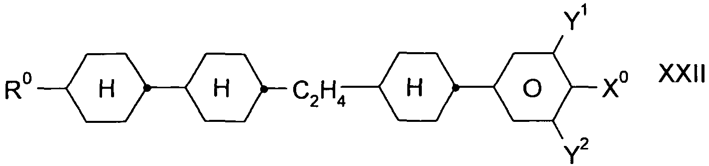 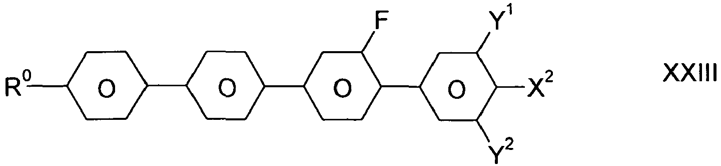 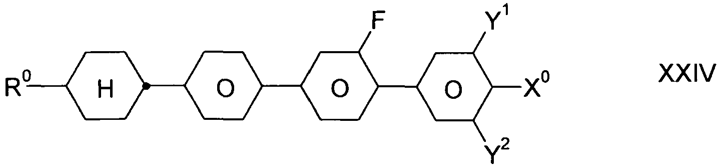 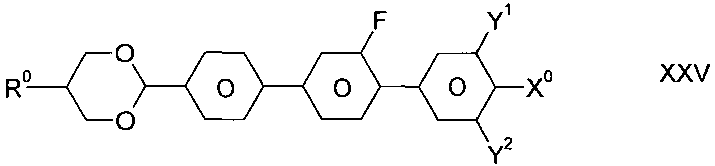 worin Y¹⁻⁴, R⁰ und X⁰ jeweils unabhängig voneinander eine der oben angegebenen Bedeutungen haben. X⁰ ist vorzugsweise F, CI, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- FK-Medium, welches zusätzlich eine oder mehrere Verbindungen der folgenden Formel enthält: 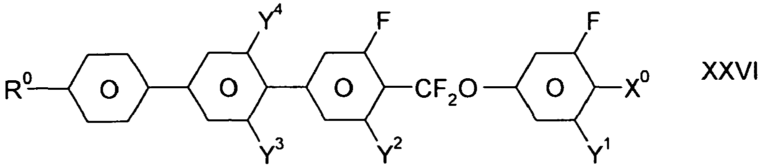 worin R⁰, X⁰ und Y¹⁻⁴ die oben angegebenen Bedeutungen besitzen. Besonders bevorzugt sind Verbindungen der folgenden Formel: 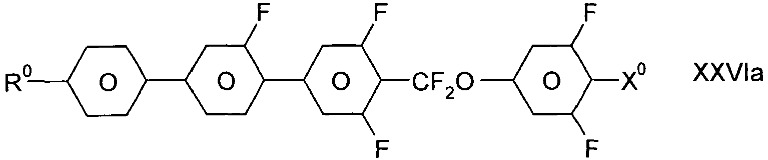
- FK-Medium, welches zusätzlich eine oder mehrere Verbindungen der folgenden Formel enthält: 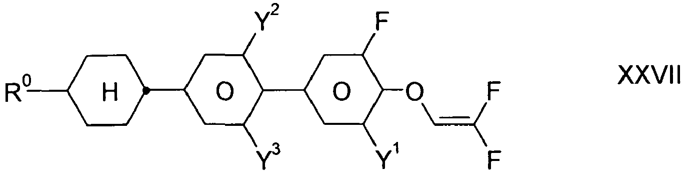 worin R⁰ und Y¹⁻³ die oben angegebenen Bedeutungen besitzen.

Besonders bevorzugt sind Verbindungen der folgenden Formeln: 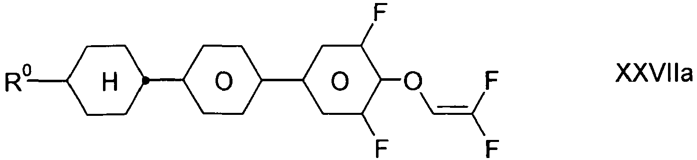 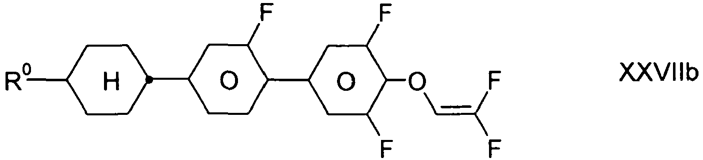 worin R⁰ die oben angegebene Bedeutung besitzt und vorzugsweise Alkyl, Alkoxy, Oxaalkyl, Fluoralkyl oder Alkenyl mit jeweils bis zu 8 C-Atomen bedeutet.
- FK-Medium, welches zusätzlich eine oder mehrere Verbindungen der folgenden Formel enthält: 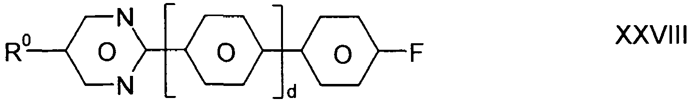 worin R⁰ die oben angegebene Bedeutung besitzt und vorzugsweise geradkettiges Alkyl mit 2-5 C-Atomen ist, und d 0 oder 1, vorzugsweise 1 bedeutet. Bevorzugte Mischungen enthalten 3 - 30 Gew.%, insbesondere 5 - 20 Gew.% dieser Verbindung(en).
- FK-Medium, welches zusätzlich eine oder mehrere Verbindungen der folgenden Formel enthält: 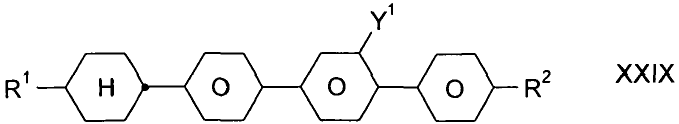 worin Y¹, R¹ und R² die oben angegebene Bedeutung besitzen. R¹ und R² bedeuten vorzugsweise jeweils unabhängig voneinander Alkyl mit 1 bis 8 C-Atomen. Y¹ bedeutet vorzugsweise F. Bevorzugte Mischungen enthalten 1 - 15 Gew.%, insbesondere 1 - 10 Gew.% dieser Verbindungen.
- 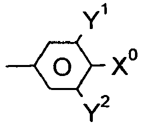 ist vorzugsweise 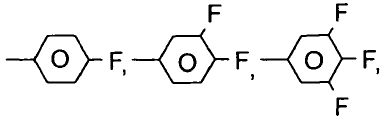 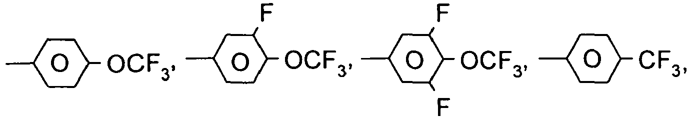 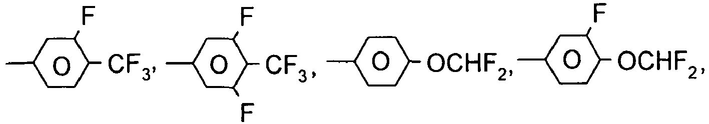 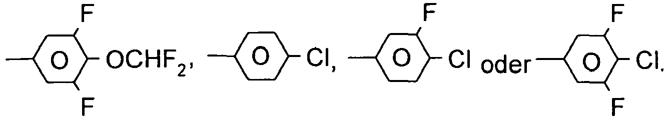
- R⁰ ist vorzugsweise geradkettiges Alkyl oder Alkenyl mit 2 bis 7 C-Atomen;
- X⁰ ist vorzugsweise F, ferner OCF₃, CI oder CF₃;
- Das Medium enthält vorzugsweise zwei oder mehr, besonders bevorzug drei oder mehr Verbindungen der Formel I bzw. ausgewählt aus den Formeln I1 bis I53;
- Das Medium enthält vorzugsweise eine oder mehrere Verbindungen ausgewählt aus der Gruppe der Verbindungen der Formeln II, III, VI-2, XI, XII, XIII, XIV, XXIV, XXV, XXVI, XXVII und XXIX.
- Das Medium enthält vorzugsweise mindestens 25 Gew.%, besonders bevorzugt 30-75 Gew.% an Verbindungen ausgewählt aus den Formeln XII, XIII, XIV, XV, XXIII, XXIV, XXV, XXVI und XXIX, insbesondere XII, XIII, XIV, XV, XXV und XXIX (ergeben z.B. vorteilhaft hohe Δn-Werte);
- Das Medium enthält vorzugsweise jeweils eine oder mehrere Verbindungen der Formel VI-2, XI und XXVI;
- Der Anteil an Verbindungen der Formeln II-XXVIII im Gesamtgemisch beträgt vorzugsweise mindestens 20 Gew.%;
- Das Medium enthält vorzugsweise mindestens 25 Gew.%, besonders bevorzugt 30-70 Gew.% an Verbindungen der Formel II und/oder III;
- Das Medium enthält vorzugsweise 5-50 Gew.%, besonders bevorzugt 25-60 Gew.% an Verbindungen der Formel IIa, insbesondere worin R^{3a} H bedeutet;
- Das Medium enthält vorzugsweise 2-20 Gew.%, besonders bevorzugt 3-15 Gew.% an Verbindungen der Formel VI-2;
- Das Medium enthält 2-20 Gew.%, besonders bevorzugt 3-15 Gew.% an Verbindungen der Formel XI;
- Das Medium enthält vorzugsweise 1-20 Gew.%, besonders bevorzugt 2-15 Gew.% an Verbindungen der Formel XXIV;
- Das Medium enthält vorzugsweise 1-20 Gew.%, besonders bevorzugt 2-15 Gew.% an Verbindungen der Formel XXV;
- Das Medium enthält vorzugsweise 1-25 Gew.%, besonders bevorzugt 2-20 Gew.% an Verbindungen der Formel XXVI;
- Das Medium enthält vorzugsweise 1-35 Gew.%, besonders bevorzugt 5-30 Gew.% an Verbindungen der Formel XXVII;
- Das Medium enthält vorzugsweise eine oder mehrere Verbindungen ausgewählt aus der Gruppe der Verbindungen der Formeln VI-2, VII-1a, VII-1b, IX, X, XI und XXVI (CF₂O-verbrückte Verbindungen).

Es wurde gefunden, dass bereits ein hoher Anteil an Verbindungen der Formel I im Gemisch mit üblichen Flüssigkristallmaterialien, insbesondere jedoch mit einer oder mehreren Verbindungen der Formeln II bis XXIX zu sehr hohen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Die Mischungen sind aufgrund der hohen Löslichkeit der Thiophenderivate auch bei tiefen Temperaturen einsetzbar. Gleichzeitig zeigen die Mischungen sehr niedrige Schwellenspannungen und gute Werte für die VHR bei UV-Belastung.

Der Ausdruck "Alkyl" bzw. "Alkyl*" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst in dieser Anmeldung geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ₋ worin n und m jeweils unabhängig voneinander 1 bis 6 bedeuten. m kann auch 0 bedeuten. Vorzugsweise ist n = 1 und m 1-6 oder m = 0 und n = 1-3.

Der Ausdruck "halogenierter Alkylrest" umfasst vorzugsweise ein- oder mehrfach fluorierte und/oder chlorierte Reste. Perhalogenierte Reste sind eingeschlossen. Besonders bevorzugt sind fluorierte Alkylreste, insbesondere CF₃, CH₂CF₃, CH₂CHF₂, CHF₂, CH₂F, CHFCF₃ und CF₂CHFCF₃.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxy-methyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch - CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Diese Reste können auch ein- oder mehrfach halogeniert sein.

Falls R⁰ einen mindestens einfach durch Halogen substituierten Alkyl- oder Alkenylrest bedeutet, so ist dieser Rest vorzugsweise geradkettig und Halogen ist vorzugsweise F oder CI. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, CI oder ein ein- oder mehrfach fluorierter Alkyl- oder Alkoxyrest mit 1, 2 oder 3 C-Atomen oder ein ein- oder mehrfach fluorierter Alkenylrest mit 2 oder 3 C-Atomen. X⁰ ist besonders bevorzugt F, Cl, CF₃, CHF₂, OCF₃, OCHF₂, OCFHCF₃, OCFHCHF₂, OCFHCH₂F, OCF₂CH₃, OCF₂CHF₂, OCF₂CH₂F, OCF₂CF₂CHF₂, OCF₂CF₂CH₂F, OCFHCF₂CF₃, OCFHCF₂CHF₂, OCH=CF₂, OCF=CF₂, OCF₂CHFCF₃, OCF₂CF₂CF₃, OCF₂CF₂CCIF₂, OCCIFCF₂CF₃, CF=CF₂, CF=CHF, oder CH=CF₂, ganz besonders bevorzugt F, OCF₃ oder OCH=CF₂.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel IV bis VIII, worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I, VI und XI zeichnen sich durch ihre niedrigen Schwellenspannungen aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. TN-, STN-, TFT-, OCB-, IPS-, FFS- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und high-Δn-TFT-Anwendungen wie z. B. PDAs, Notebooks, LCD-TV und Monitore geeignet.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 75 °C, gleichzeitig Rotationsviskositäten γ₁ von ≤ 100 mPa·s, besonders bevorzugt ≤ 70 mPa·s zu erreichen, wodurch hervorragende MFK-Anzeigen mit schnellen Schaltzeiten erzielt werden können.

Die dielektrische Anisotropie der erfindungsgemäßen Flüssigkristallmischungen Δε ist vorzugsweise ≥ +3, besonders bevorzugt ≥ +5. Die Mischungen sind außerdem durch kleine Operationsspannungen gekennzeichnet. Die Schwellenspannung der erfindungsgemäßen Flüssigkristallmischungen ist vorzugsweise ≤ 2 V, insbesondere ≤ 1,5 V.

Die Doppelbrechung Δn der erfindungsgemäßen Flüssigkristallmischungen ist vorzugsweise ≥ 0,11, besonders bevorzugt ≥ 0,14.

Der nematische Phasenbereich der erfindungsgemäßen Flüssigkristallmischungen ist vorzugsweise mindestens 80°, insbesondere mindestens 90° breit. Vorzugsweise erstreckt sich dieser Bereich mindestens von -20 °C bis +70 °C.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle den Verbindungen der Formel I Cyanophenylcyclohexane der Formel 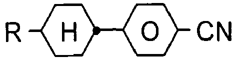 oder Ester der Formel 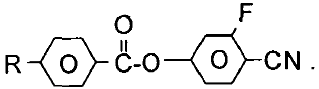 Die LC-Medien sind vorzugsweise zu 99 Gew.-%, besonders bevorzugt zu 100 Gew.-% frei von Benzonitrilderivaten.

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Die FK-Medien können auch weitere, dem Fachmann bekannte und in der Literatur beschriebene Zusätze, wie z. B. UV-Stabilisatoren wie Tinuvin^{®} der Fa. Ciba, Antioxidantien, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

Die einzelnen Komponenten der oben genannten bevorzugten Ausführungsformen der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Es versteht sich für den Fachmann von selbst, dass die erfindungsgemäßen FK-Medien auch Verbindungen enthalten können, worin beispielsweise H, N, O, Cl, F durch die entsprechenden Isotope ersetzt sind.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXVIII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*} R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCL | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

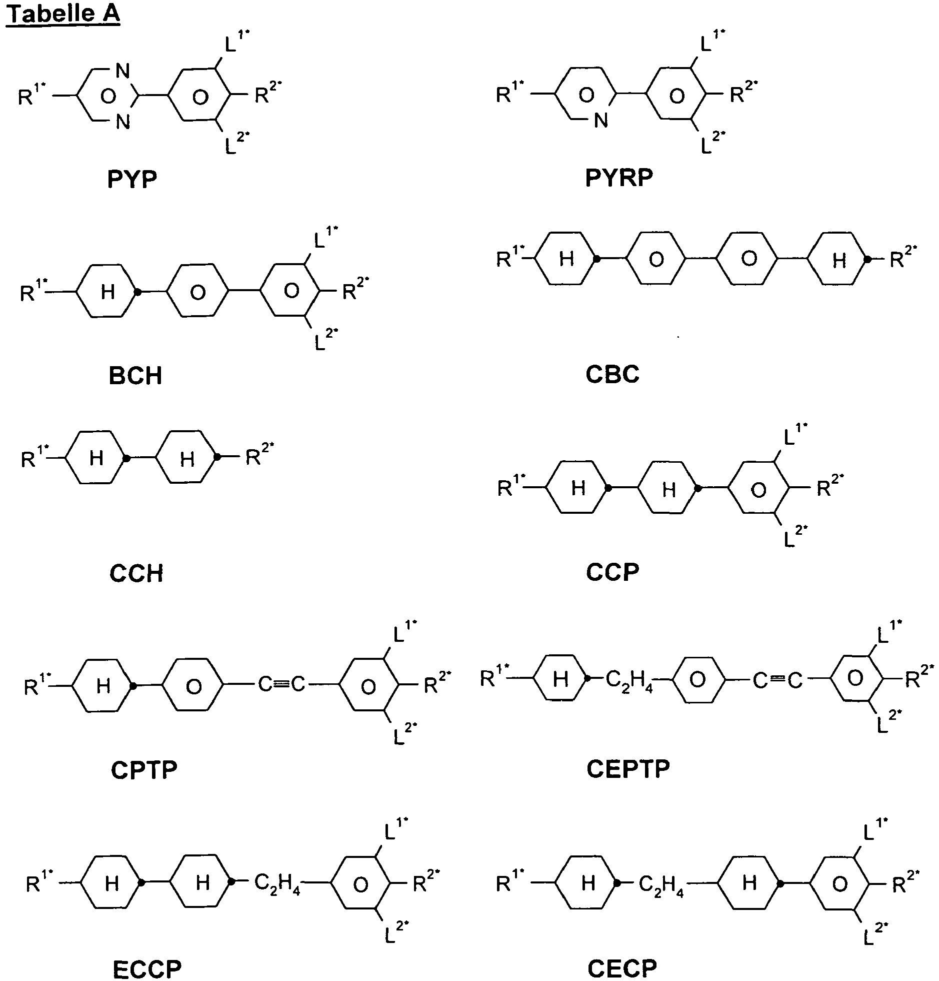

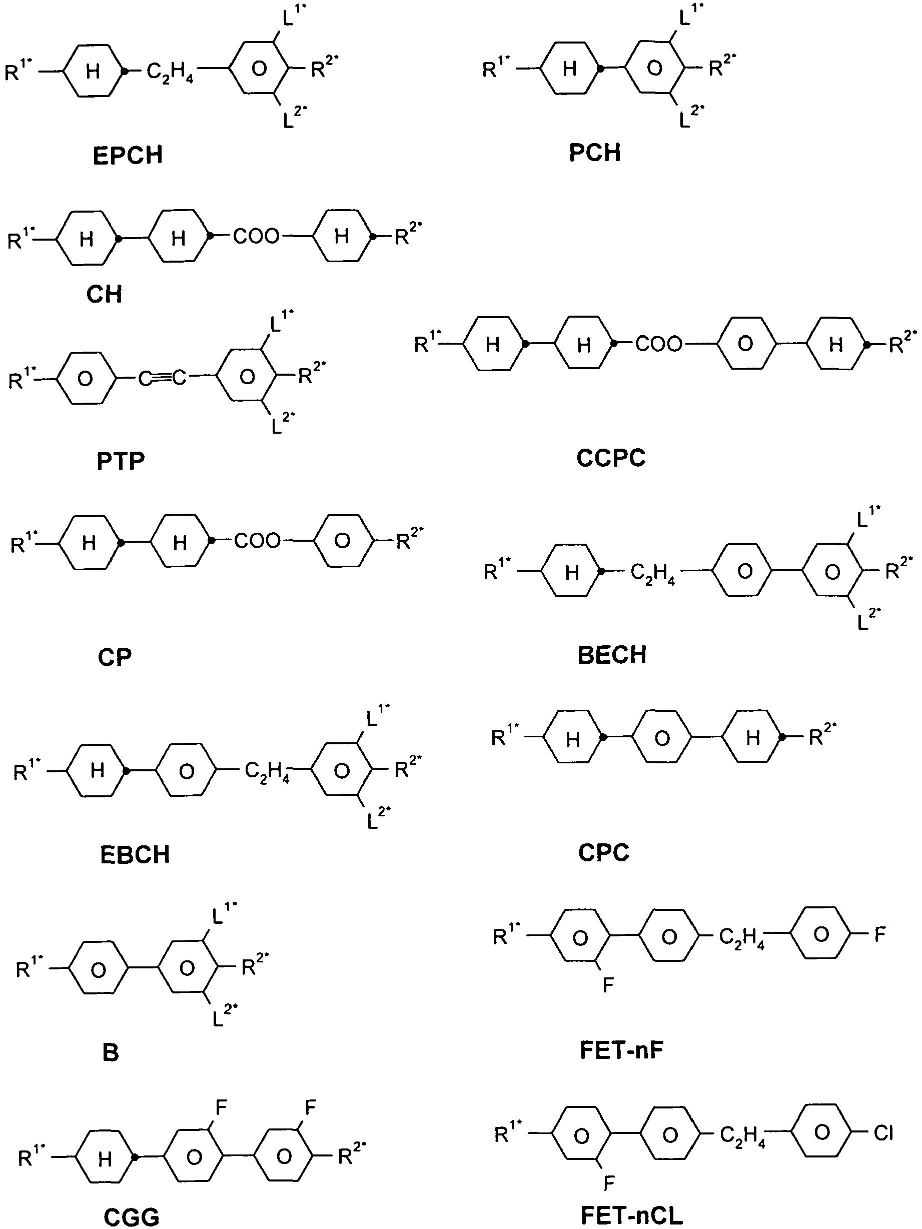

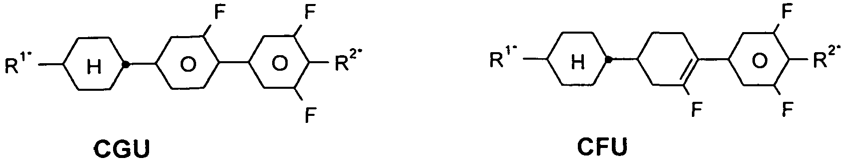

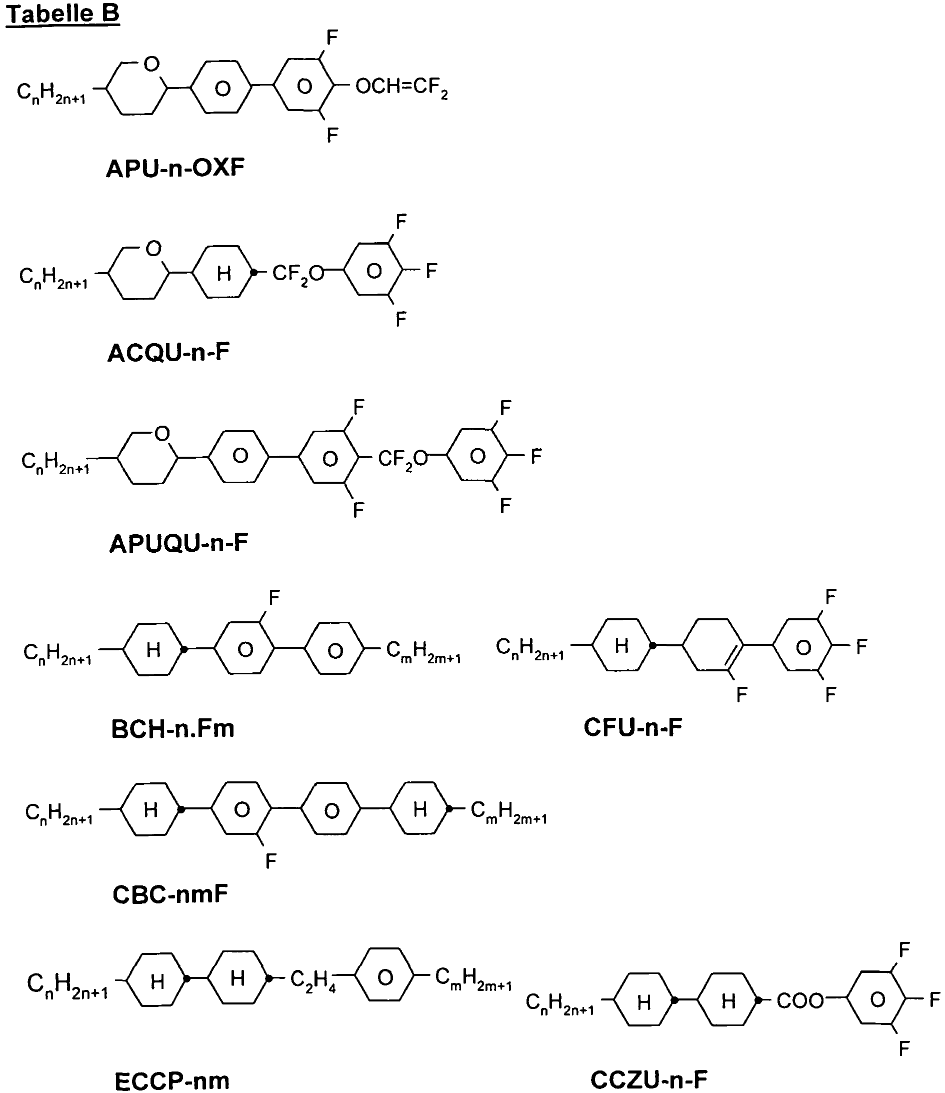

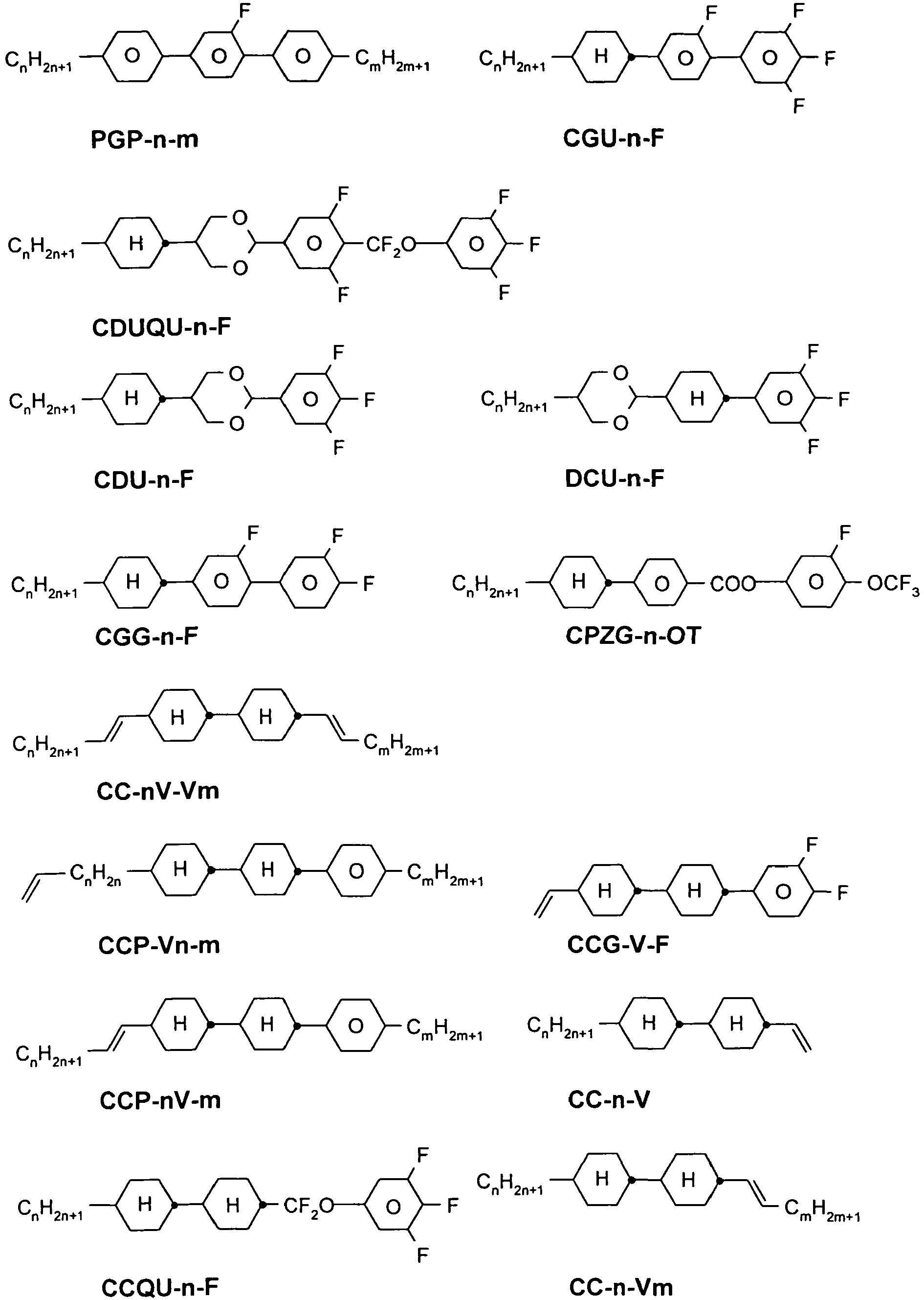

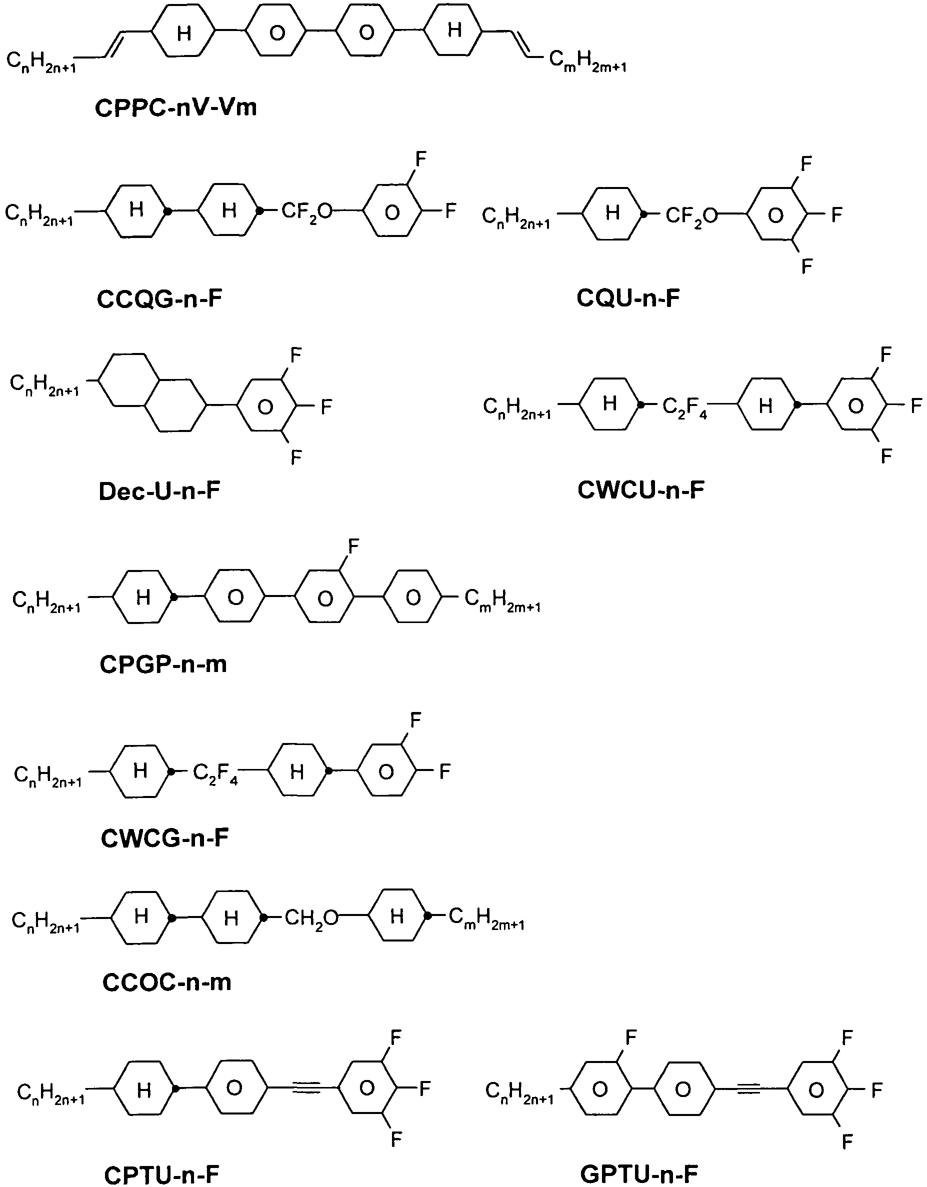

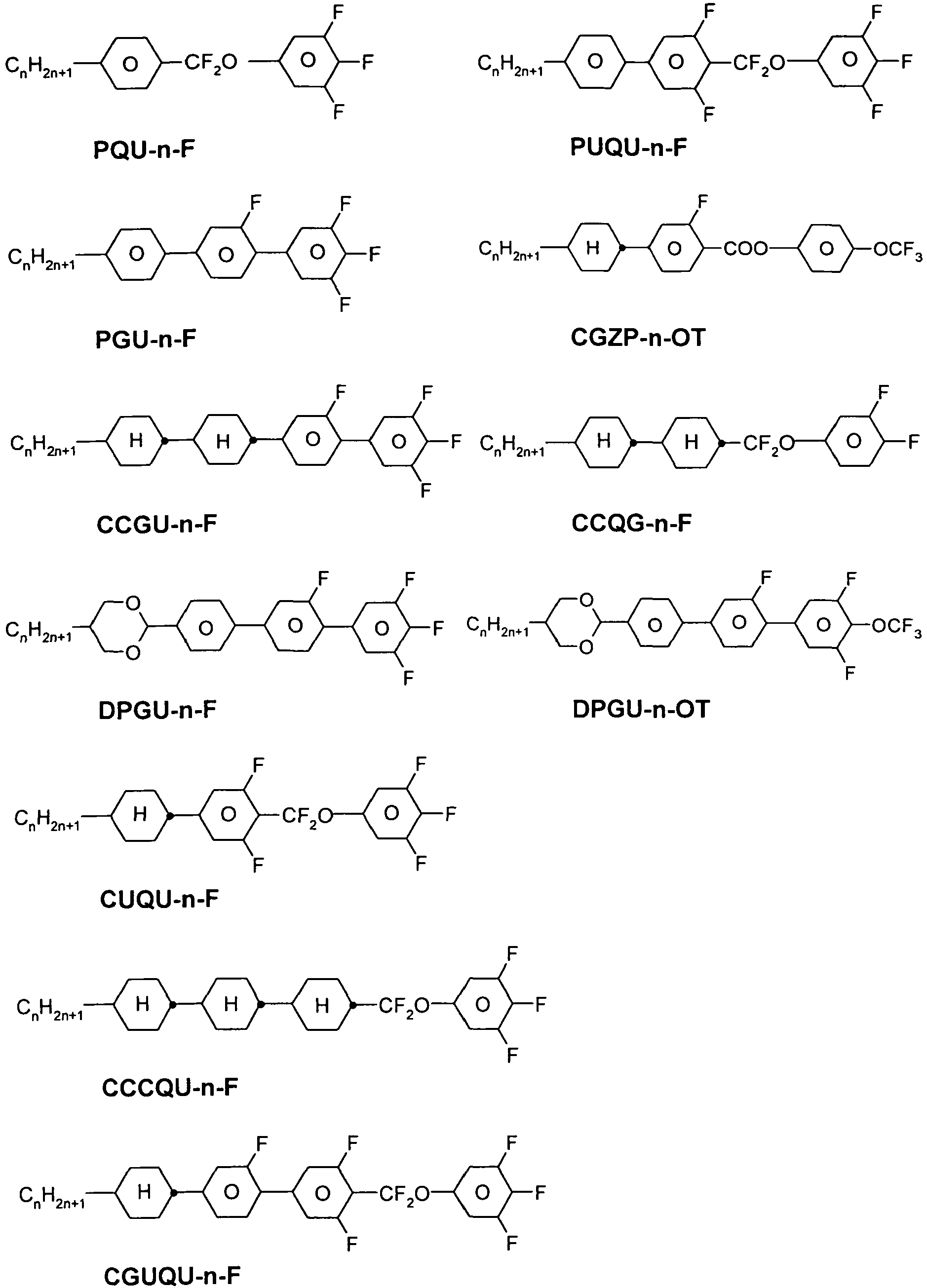

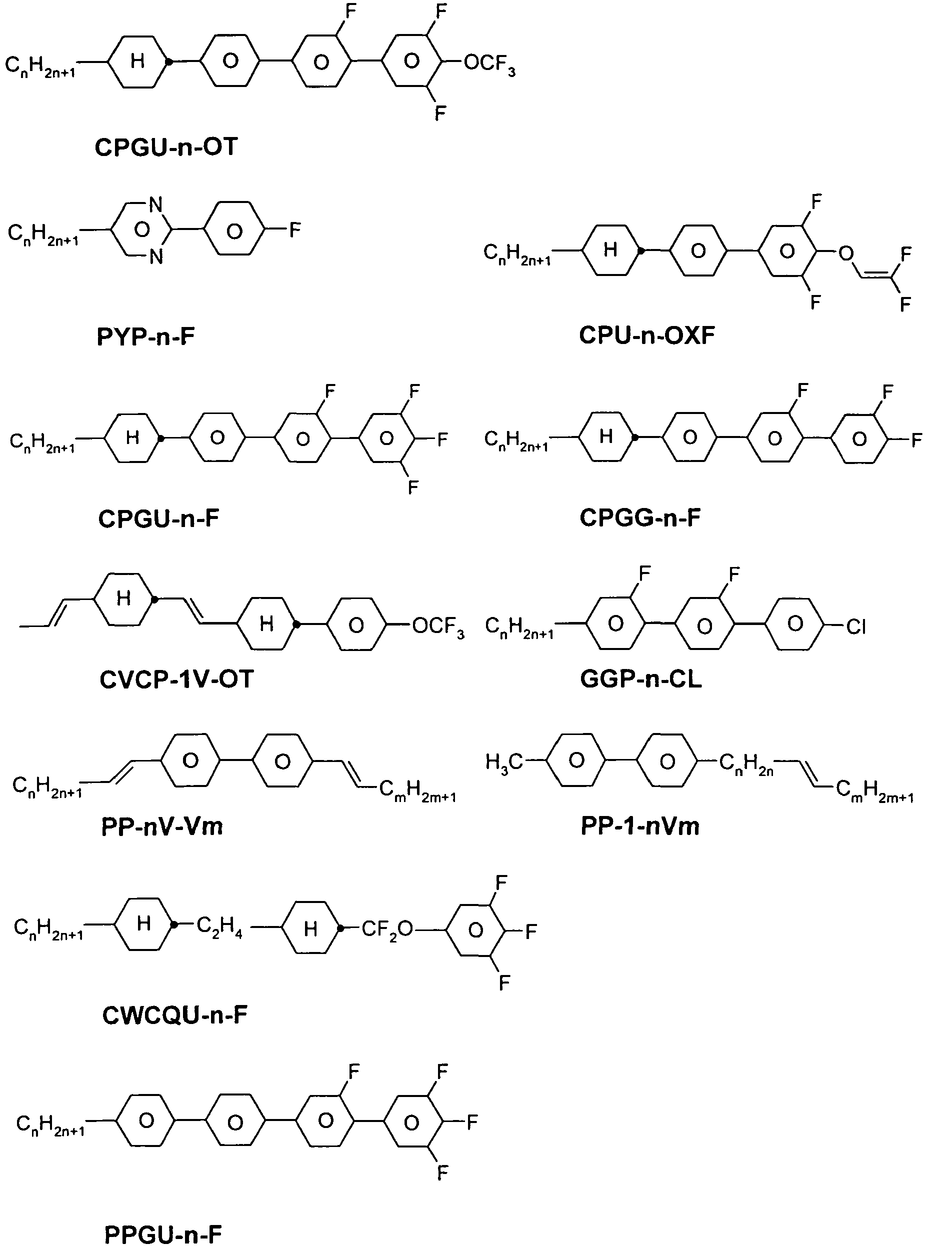

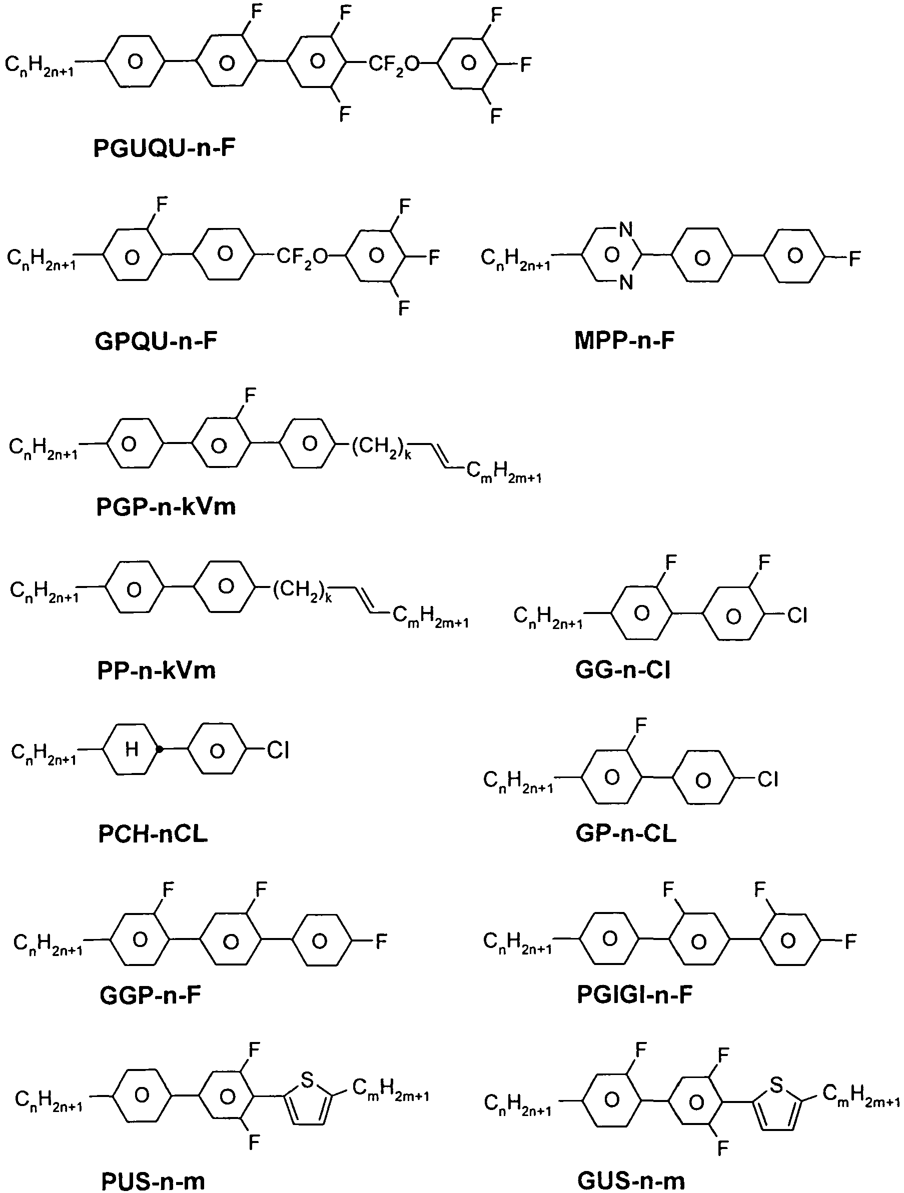

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A und B.

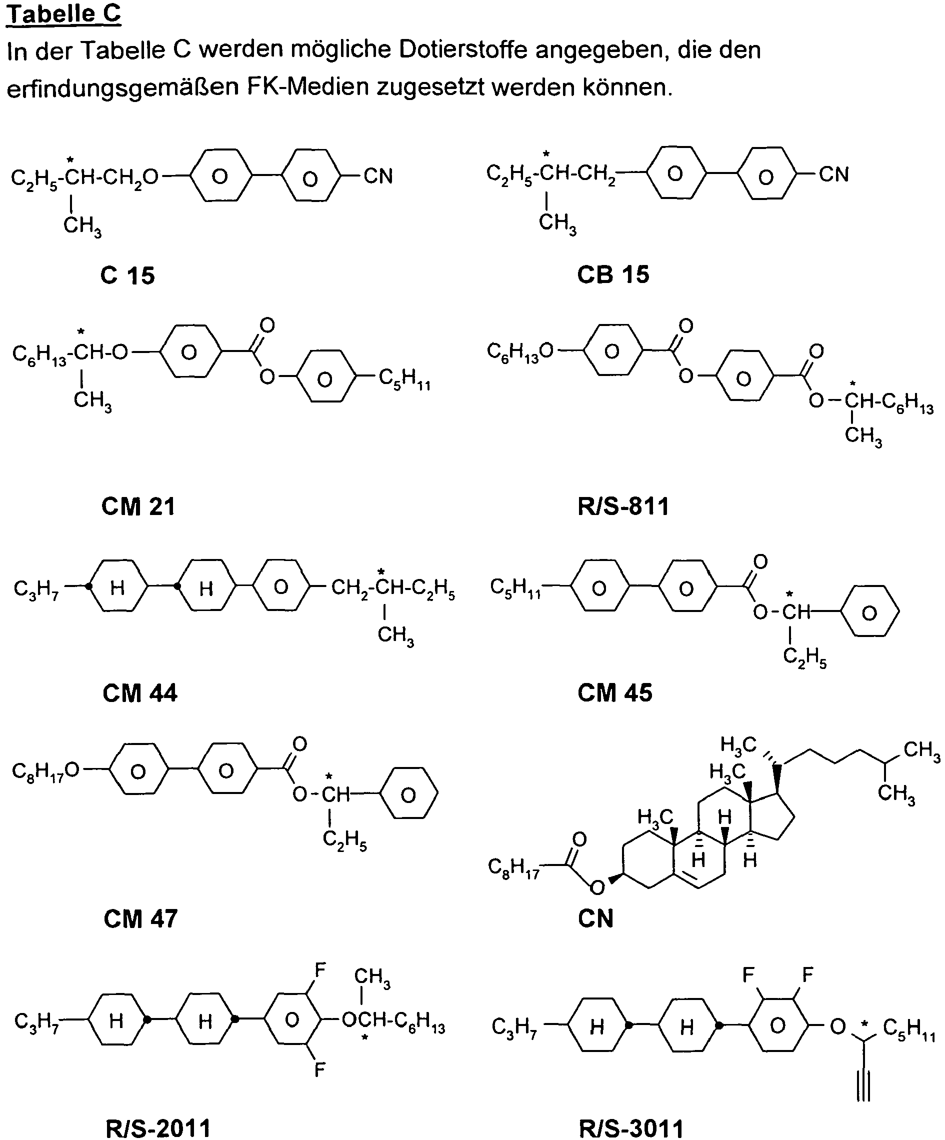

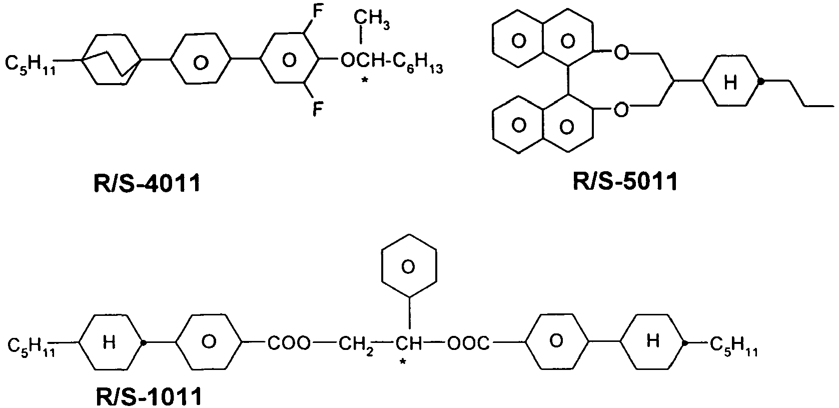

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Guppe bestehend aus Verbindungen der Tabelle C.

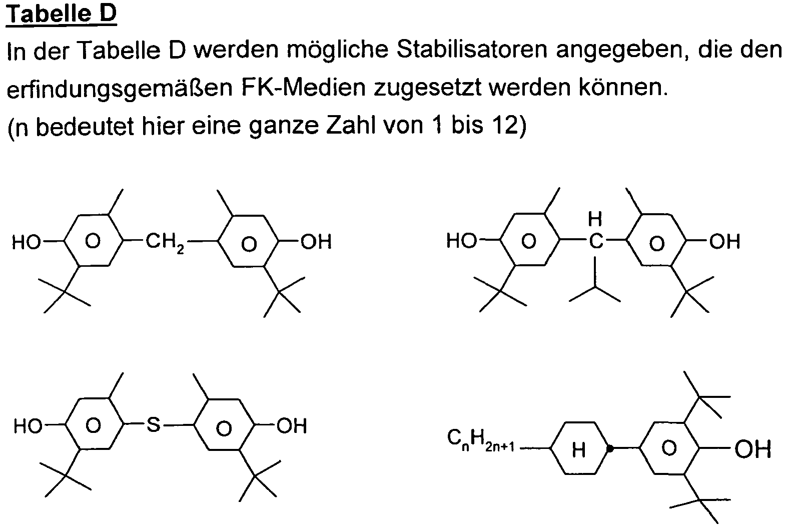

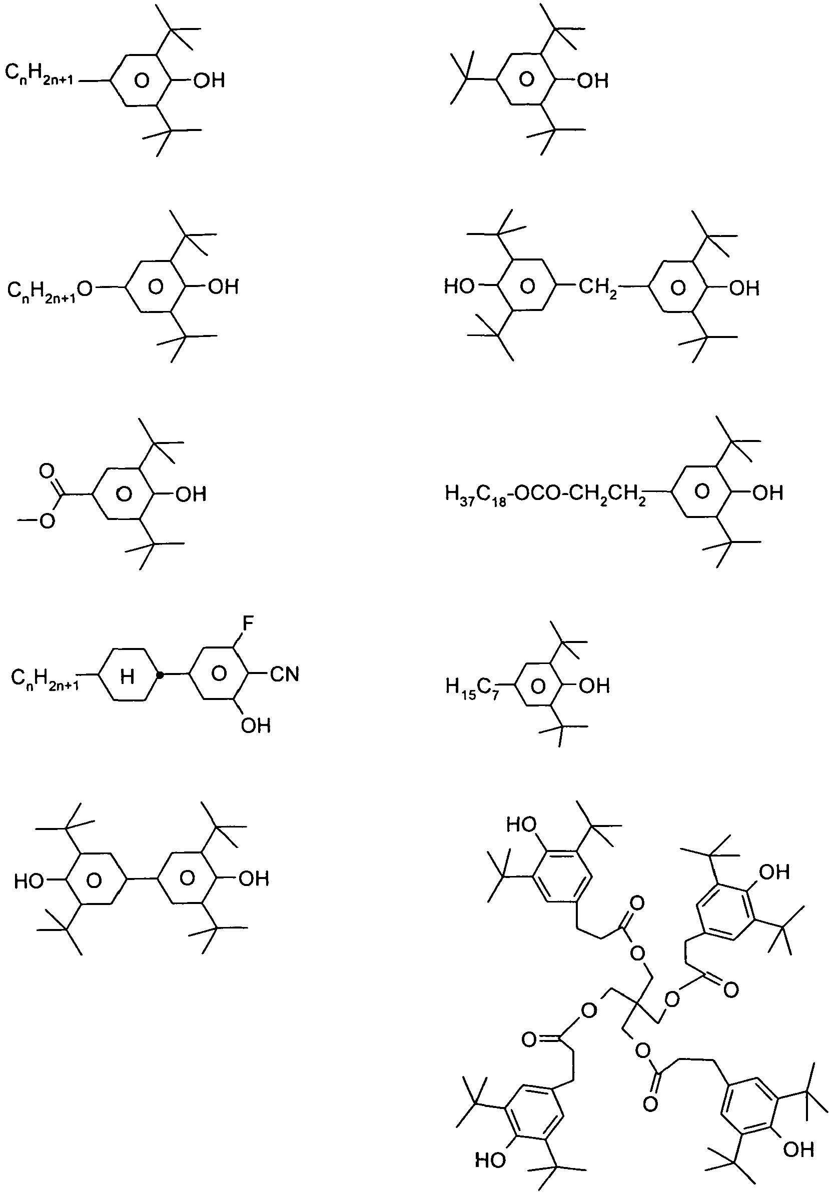

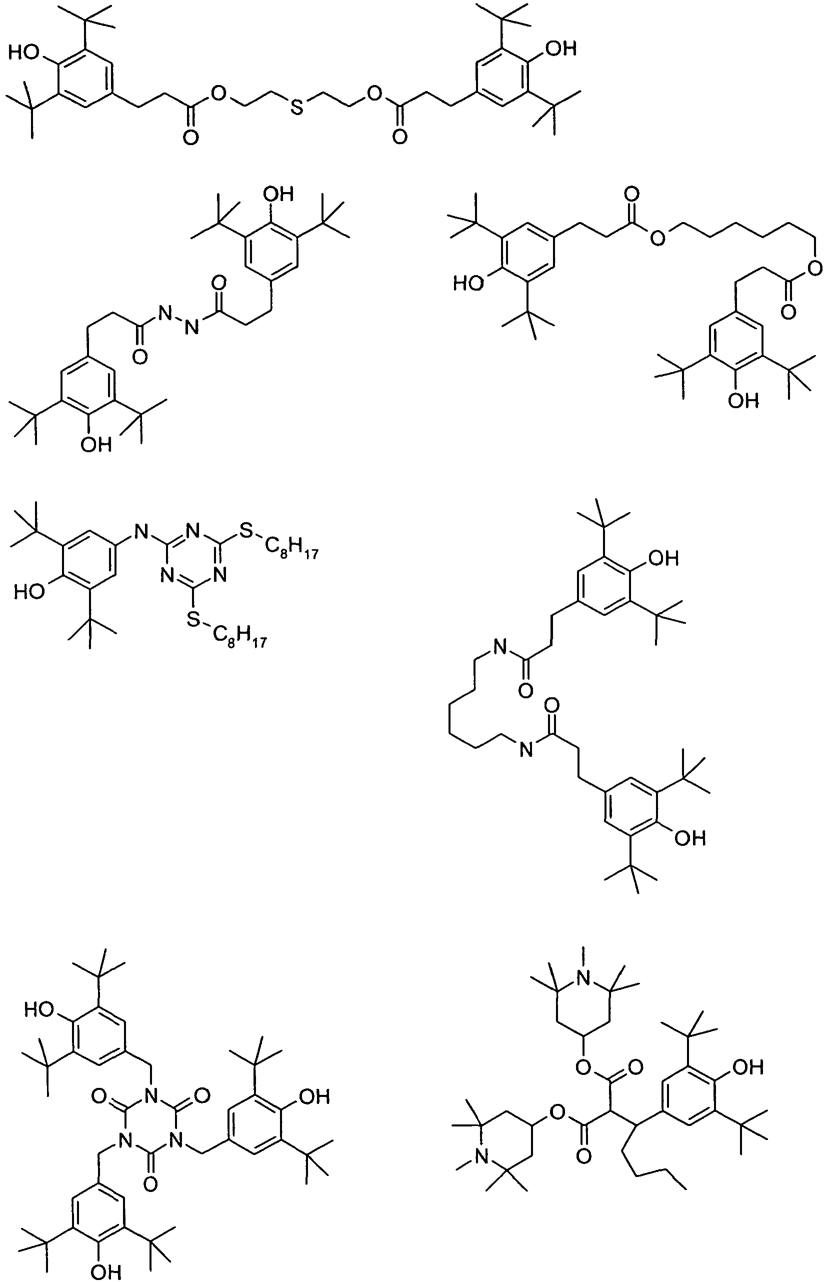

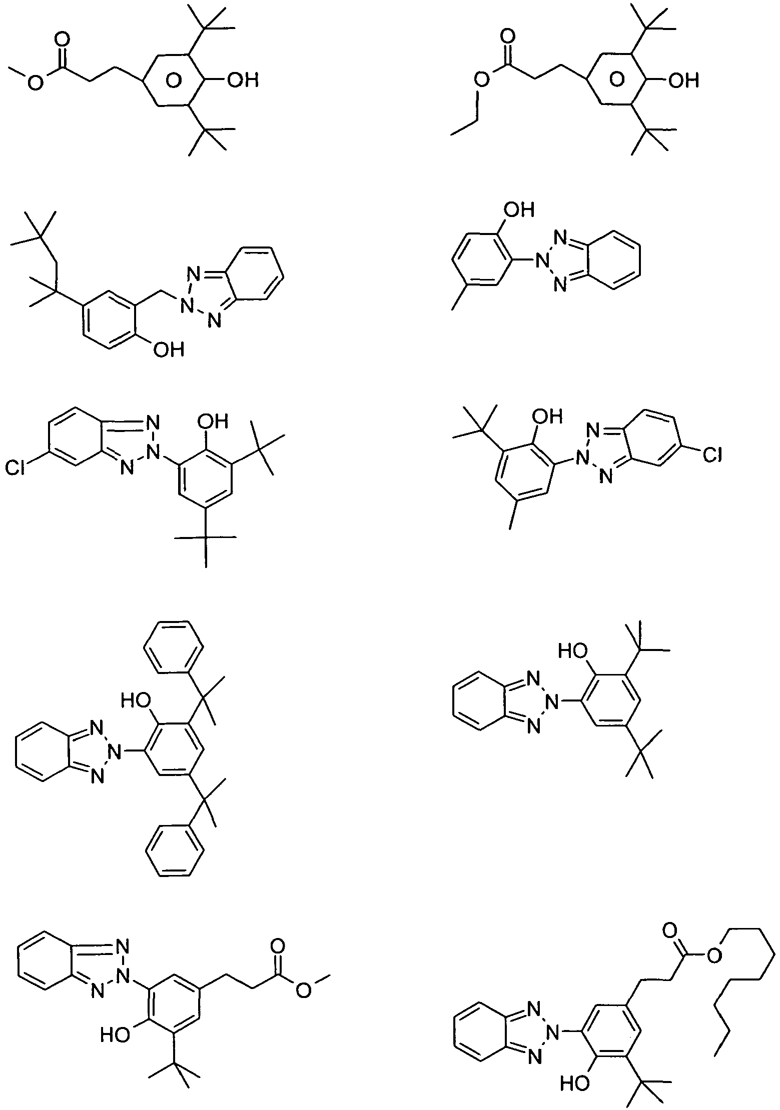

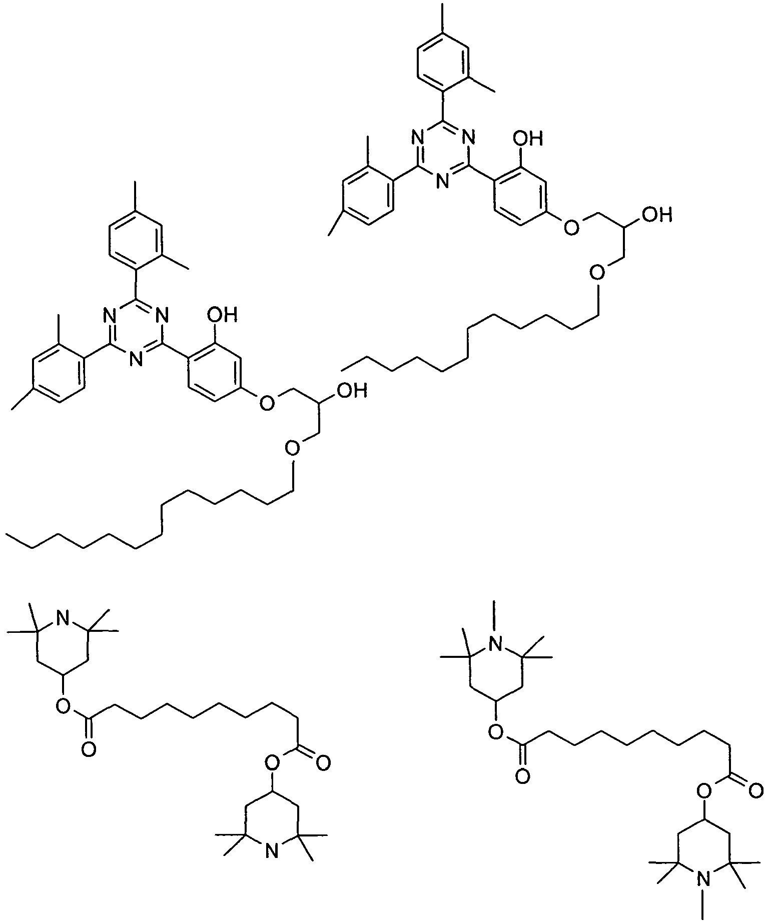

Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle D.

Außerdem werden folgende Abkürzungen und Symbole verwendet:
- Vₒ: Schwellenspannung, kapazitiv [V] bei 20°C,
- V₁₀: optische Schwelle für 10 % relativen Kontrast [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Suszeptibilität senkrecht zum Direktor bei 20°C und 1 kHz,
- ε_{∥}: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen in Gewichtsprozent angegeben und beziehen sich auf die entsprechende Gesamtmischung ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Darmstadt, Deutschland bestimmt und gelten für eine Temperatur von 20°C und Δn wird bei 589 nm und Δε bei 1 kHz bestimmt, sofern nicht jeweils explizit anders angegeben.

Die flüssigkristallinen Eigenschaften der Einzelverbindungen werden, soweit nicht anders angegeben, in der nematischen Wirtsmischung ZLI-4792 (kommerziell erhältlich von Merck KGaA, Darmstadt) bei einer Konzentration von 10% bestimmt.

"Raumtemperatur" bedeutet 20°C, falls nicht anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspanung V₀ sowie für V₁₀ verwendeten Testzellen sind aufgebaut aus Substraten bestehend aus Natriumglas (Sodalime Glas), die mit Polyimidorientierungsschichten (Durimid 32 mit Verdünner (70 % NMP + 30 % Xylol) im Verhältnis 1:4) der Firma Arch Chemicals beschichtet sind, welche antiparallel zueinander gerieben sind und einen Oberflächentilt von quasi 0 Grad aufweisen. Die Fläche der durchsichtigen, nahezu quadratischen Elektroden aus ITO, beträgt 1 cm². Zur Bestimmung der kapazitiven Schwellenspannung wird ein handelsübliches hochauflösendes LCR-Meter (z.B. LCR-Meter 4284A der Firma Hewlett Packard) eingesetzt.

### Beispiele

### Synthesebeispiele

### Beispiel 1: 2-(3,5-Difluor-4'-propyl-biphenyl-4-yl)-5-ethyl-thiophen (PUS-3-2)

Die Verbindung 2-(3,5-Difluor-4'-propyl-biphenyl-4-yl)-5-ethyl-thiophen (PUS-3-2) wird hergestellt wie nachfolgend beschrieben:

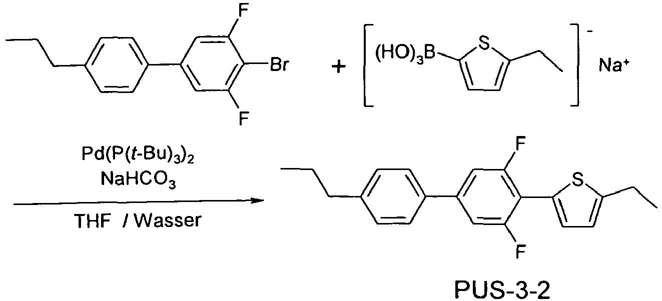

17,0 g (54,6 mmol) 4-Brom-3,5-difluor-4'-propyl-biphenyl, 16,1 g (82,1 mmol) 2-Ethylthiophen-5-hydroxyboronsäurenatriumsalz und 9,2 g (0,11 mol) Natriumhydrogencarbonat werden zusammen mit 700 mg (1,37 mmol) Bis(tri-*tert*-butylphosphin)palladium(0) in 250 ml THF-WasserGemisch (2 : 1) refluxiert. Nach 22 h wird die Mischung mit MTBE verdünnt, und die organische Phase wird abgetrennt. Die wässrige Phase wird mehrfach mit MTBE extrahiert, und die vereinigten organischen Phasen werden mit Wasser und gesättigter Natriumchloridlösung gewaschen. Die Lösung wird mit Natriumsulfat getrocknet und vollständig konzentriert. Das Rohprodukt wird säulenchromatographisch (SiO₂, *n*-Heptan) gereinigt. Die weitere Reinigung erfolgt durch Umkristallisation aus Ethanol und *n*-Heptan. 2-(3,5-Difluor-4'-propyl-biphenyl-4-yl)-5-ethyl-thiophen (PUS-3-2) wird als farbloser Feststoff (Schmp. 45 °C) erhalten.

Δε = +3,8
Δn = 0,294
γ₁ = 76 mPa·s
K 45 N 90 I

### Beispiel 2: 2-(3,5-Difluor-4'-propyl-biphenyl-4-y)-5-propyl-thiophen (PUS-3-3)

Die Verbindung 2-(3,5-Difluor-4'-propyl-biphenyl-4-yl)-5-propyl-thiophen (PUS-3-3) wird hergestellt wie nachfolgend beschrieben:

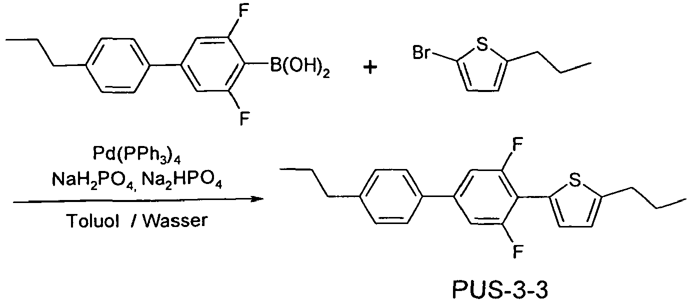

5,0 g (24,4 mmol) 2-Brom-5-propylthiophen, 7,40 g (26,8 mmol) 4'-Propyl-3,5-difluor-4-biphenylboronsäure und 2,82 g (2,44 mmol) Tetrakis-(triphenylphosphin)palladium(0) werden in 160 ml Toluol vorgelegt. Eine Lösung von 5,85 g (48,8 mmol) Natriumdihydrogenphosphat und 13,8 g (97,5 mmol) di-Natriumhydrogenphosphat-dodecahydrat in 50 ml Wasser wird zugegeben, und die Mischung wird 19 h zum Rückfluß erhitzt. Nach dem Abkühlen wird die organische Phase abgetrennt, und die wässrige Phase wird mehrfach mit Toluol extrahiert. Die vereinigten organischen Phasen werden mit Wasser und ges. Natriumchloridlsg. gewaschen. Die Lösung wird mit Natriumsulfat getrocknet und vollständig konzentriert. Der Rückstand wird säulenchromatographisch (SiO₂, *n*-Heptan) gereinigt. Weitere Reinigung erfolgt durch Umkristallisation aus Ethanol und *n*-Heptan; 2-(3,5-Difluor-4'-propyl-biphenyl-4-yl)-5-propyl-thiophen (PUS-3-3) wird als farbloser Feststoff (Schmp. 64 °C) erhalten.

Δε = +4,2
Δn = 0,283
γ₁ = 67 mPa·s
K 64 N 86 l

### Beispiel 3: 2-(3,5-Difluor-4'-ethyl-biphenyl-4-yl)-5-ethyl-thiophen (PUS-2-2)

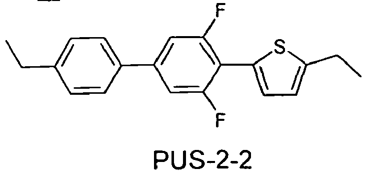

Die Verbindung 2-(3,5-Difluor-4'-ethyl-biphenyl-4-yl)-5-ethyl-thiophen (PUS-2-2) wird analog zu Beispiel 2 aus 4'-Ethyl-3,5-difluor-4-biphenylboronsäure und 2-Brom-5-ethylthiophen hergestellt.
Δε = +5,4
Δn = 0,297
γ₁ = 58 mPa·s
K 48 N 62 l

### Beispiel 4: 2-(3,5-Difluor-4'-ethyl-biphenyl-4-yl)-5-propyl-thiophen (PUS-2-3)

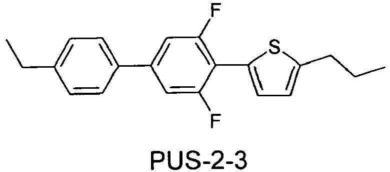

Die Verbindung 2-(3,5-Difluor-4'-ethyl-biphenyl-4-yl)-5-propyl-thiophen (PUS-2-3) wird analog zu Beispiel 2 aus 4'-Ethyl-3,5-difluor-4-biphenylboronsäure und 2-Brom-5-propylthiophen hergestellt.

Δε = +3,3
Δn = 0,283
γ₁ =61 mPa·s
K 50N61 l

### Beispiel 5: 2-(4'-Ethyl-2,6-difluor-biphenyl-4-yl)-5-propyl-thiophen (SUP-3-2)

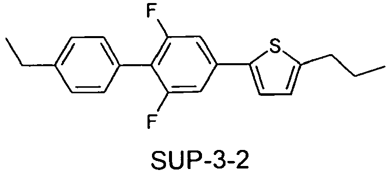

Die Verbindung 2-(4'-Ethyl-2,6-difluor-biphenyl-4-yl)-5-propyl-thiophen (SUP-3-2) wird analog zu Beispiel 1 aus 4'-Ethyl-2,6-difluor-4-biphenylboronsäure und 2-Brom-5-propylthiophen hergestellt.

Δε = +5,5
Δn = 0,233
γ₁ = 110 mPa·s
K 80 l

### Beispiel 6:2-(4'-Ethyl-2,6-difluor-biphenyl-4-yl)-5-ethyl-thiophen (SUP-2-2)

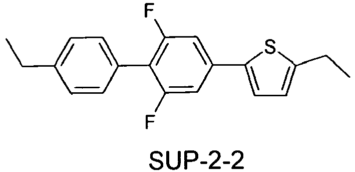

Die Verbindung 2-(4'-Ethyl-2,6-difluor-biphenyl-4-yl)-5-ethyl-thiophen (SUP-2-2) wird analog zu Beispiel 1 aus 4'-Ethyl-2,6-difluor-4-biphenylboronsäure und 2-Brom-5-etyhlthiophen hergestellt.

**MS (EI)**: m/z(%) = 328 (100, M⁺), 313 (89, [M - CH₃⁺).
Δε = +6,4
Δn = 0,302
γ₁ = 106 mPa·s
K1061 l

### Beispiel 7: 2-[2,6-Difluor-4-(4-propyl-cyclohexyl)-phenyl]-5-ethyl-thiophen (CUS-3-2)

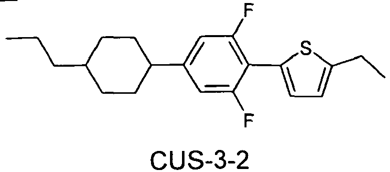

Die Verbindung 2-[2,6-Difluor-4-(4-propyl-cyclohexyl)-phenyl]-5-ethyl-thiophen ("CUS-3-2") wird analog zu Beispiel 3 aus 2,5-Difluor-4-(4-propylcyclohexyl)-benzolboronsäure und 2-Brom-5-etyhlthiophen hergestellt.

Δε = +3,0
Δn = 0,172
γ₁ = 107 mPa·s
K 34 N 97 l

### Beispiel 8: 2-(3,5-Difluor-4'-propyl-biphenyl-4-yl)-5-vinyl-thiophen (PUS-3-V)

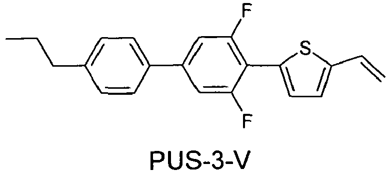

Die Verbindung 2-(3,5-Difluor-4'-propyl-biphenyl-4-yl)-5-vinyl-thiophen (PUS-3-V) wird analog zu Beispiel 3 aus 4'-Propyl-3,5-difluor-4-biphenylboronsäure und 2-Brom-5-vinylthiophen hergestellt.

Δε = +6, 5
Δn = 0,349
γ₁ = 163 mPa·s
K 69 N 111 l

### Beispiel 9: 2-(2-Fluor-4'-pentyl-biphenyl-4-yl)-5-hexyl-thiophen (PGIS-5-6)

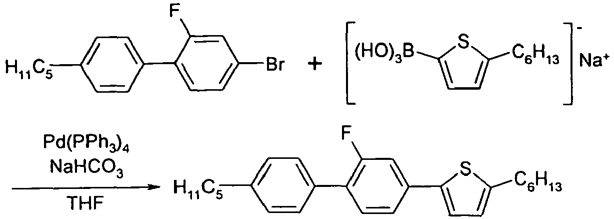

Eine Mischung aus 3,30 g (13,1 mmol) 5-Hexylthiophen-2-yl-hydroxyboronsäurenatriumsalz, 4,20 g (13,1 mmol) 4-Brom-2-fluor-4'-pentyl-biphenyl, 2,2 g (26,2 mmol) Natriumhydrogencarbonat und 0,70 g (0,61 mmol) Tetrakis-(triphenylphosphin)palladium(0) in THF/Wasser (1:1) wird 6 h zum Rückfluss erhitzt. Die Mischung wird mit MTBE verdünnt, und die organische Phase wird abgetrennt. Die wässrige Phase wird mit MTBE extrahiert. Die vereinigten organischen Phasen werden mit ges. Natriumchloridlsg. gewaschen und mit Natriumsulfat getrocknet. Die Lösung wird vollständig konzentriert, und der Rückstand wird säulenchromatographisch (SiO₂, *n*-Heptan) gereinigt. Die weitere Reinigung erfolgt durch Umkristallisation aus Methanol/Pentan (5 : 1). 2-(2-Fluor-4'-pentyl-biphenyl-4-yl)-5-hexyl-thiophen wird als farbloser Feststoff mit einem Schmp. von 44 °C erhalten.

Δε = +3,2
Δn = 0,231
γ₁ = 153 mPa·s
K 44 Sm (6) SmB (38) SmC 68 SmA 75 N 94 l

### Mischungsbeispiele

### Mischungsbeisniel 1

### Eine erfindungsgemäße nematische FK-Mischung wird wie folgt formuliert

| | | | |
|---|---|---|---|
| PCH-301 | 10 % | Kp. | + 93 °C |
| PUS-2-2 | 10 % | Δn | 0,243 |
| PUS-2-3 | 10 % | Δε | +6,2 |
| PUS-3-2 | 10 % | ε_{\|\|} | 10,2 |
| PGU-3-F | 3 % | | |
| GGP-3-CL | 9 % | | |
| GGP-5-CL | 21 % | | |
| FET-2CL | 4 % | | |
| FET-5CL | 7 % | | |
| PGIGI-3-F | 8 % | | |
| CPGP-4-3 | 3 % | | |
| CPGP-5-2 | 2 % | | |
| DPGU-4-F | 3 % | | |

### Mischungsbeispiel 2

### Eine erfindungsgemäße nematische FK-Mischung wird wie folgt formuliert

| | | | |
|---|---|---|---|
| PCH-301 | 10 % | Kp.[°C] | + 93,5 |
| PUS-2-2 | 15 % | Δn | 0,259 |
| PUS-2-3 | 15 % | Δε | +5,4 |
| PUS-3-2 | 20 % | ε_{\|\|} | 9,1 |
| PGU-3-F | 3 % | | |
| GGP-3-CL | 9 % | | |
| GGP-5-CL | 21 % | | |
| CPGP-4-3 | 3 % | | |
| CPGP-5-2 | 2 % | | |
| DPGU-4-F | 2 % | | |

### Mischungsbeispiel 3

### Eine erfindungsgemäße nematische FK-Mischung wird wie folgt formuliert

| | | | |
|---|---|---|---|
| GG-2-CL | 4 % | Kp. [°C] | + 93,5 |
| PUS-2-2 | 14 % | Δn | 0,267 |
| PUS-2-3 | 14 % | Δε | +6, 8 |
| PUS-3-2 | 16 % | ε_{\|\|} | 10,7 |
| PGU-3-F | 5 % | LTS | |
| GGP-3-CL | 9 % | (bulk, -30°C) | > 360 h |
| GGP-5-CL | 21 % | | |
| FET-5CL | 10 % | | |
| CPGP-4-3 | 4 % | | |
| CPGP-5-2 | 3 % | | |

Weitere Kombinationen der Ausführungsformen und Varianten der Erfindung ergeben sich aus den folgenden Ansprüchen.

## Patentansprüche

1. FK-Medium enthaltend 30 Gew.-% oder mehr an einer oder mehreren Verbindungen der Formel I 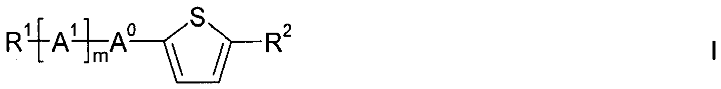 worin die einzelnen Reste folgende Bedeutung besitzen
R¹ und R² H, F, Cl, Br, -CN, -SCN, -NCS, SF₅ oder geradkettiges oder verzweigtes Alkyl mit 1 bis 12 C-Atomen, worin auch eine oder mehrere nicht benachbarte CH₂-Gruppen jeweils unabhängig voneinander durch -CH=CH-, -C≡C-, -O-, -CO-, -CO-O-, -O-CO-, -O-CO-O- so ersetzt sein können, dass O-Atome nicht direkt miteinander verknüpft sind, und worin auch ein oder mehrere H-Atome durch F, Cl oder Br ersetzt sein können,
A⁰ 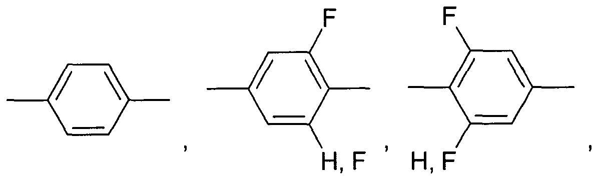 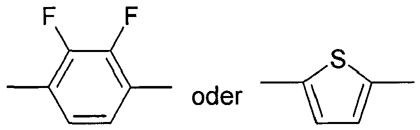
A¹ unabhängig voneinander Phenylen-1,4-diyl, worin auch eine oder zwei CH-Gruppen durch N ersetzt sein können und ein oder mehrere H-Atome durch Halogen, CN, CH₃, CHF₂, CH₂F, OCH₃, OCHF₂ oder OCF₃ ersetzt sein können, Cyclohexan-1,4-diyl, worin auch eine oder zwei nicht benachbarte CH₂ -Gruppen unabhängig voneinander durch O und/oder S ersetzt sein können, und ein oder mehrere H-Atome durch F ersetzt sein können, Cyclohexen-1,4-diyl, Bicyclo[1.1.1]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl,
m jeweils unabhängig voneinander 0, 1 oder 2.

2. FK-Medium nach Anspruch 1, **dadurch gekennzeichnet, dass** es eine oder mehrere Verbindungen ausgewählt aus der Gruppe bestehend aus folgenden Formeln enthält: 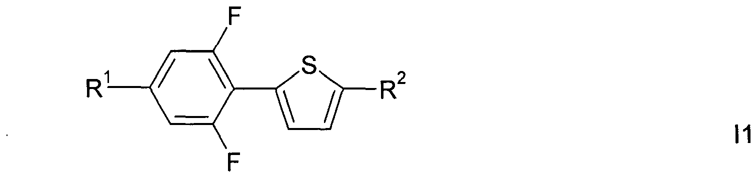 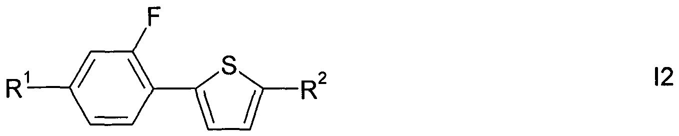 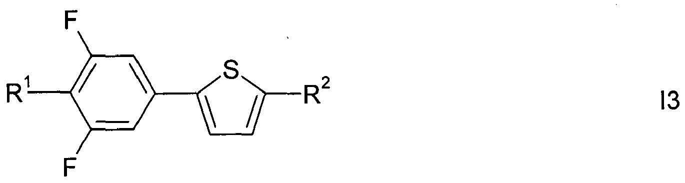 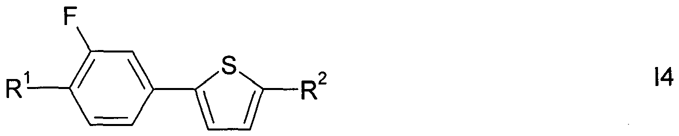 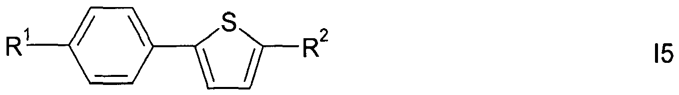 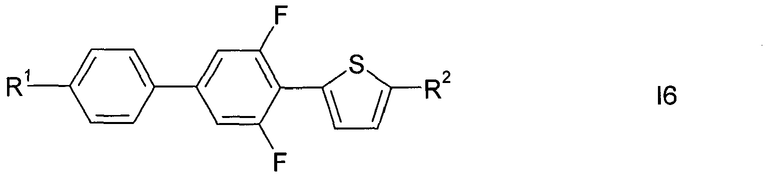 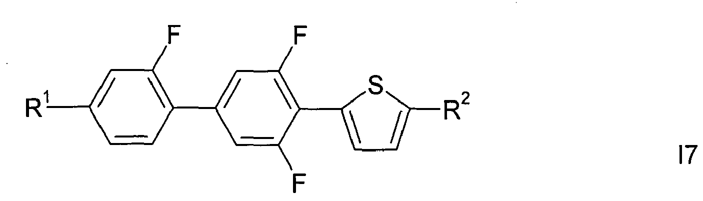 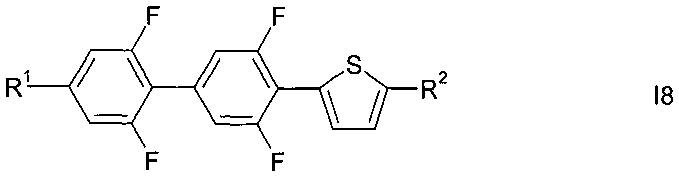 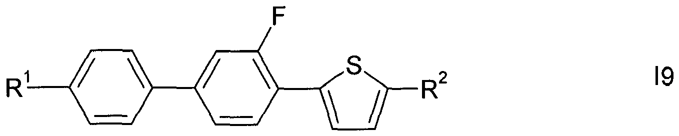 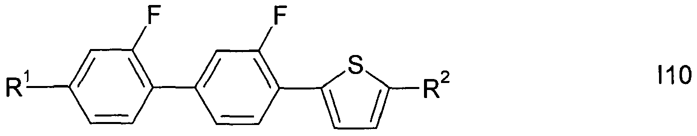 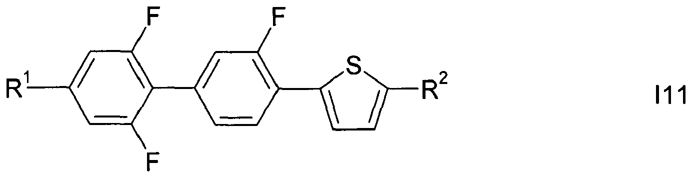 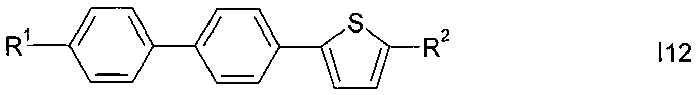 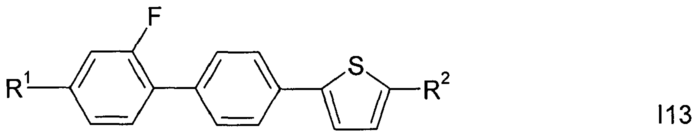 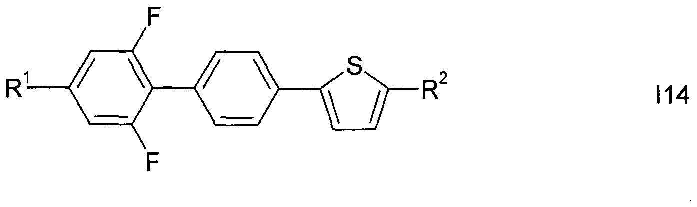 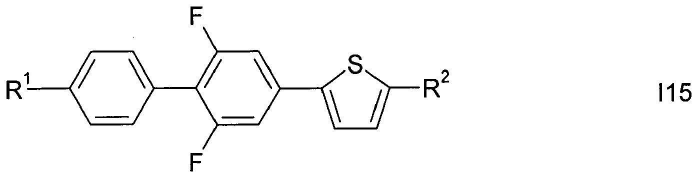 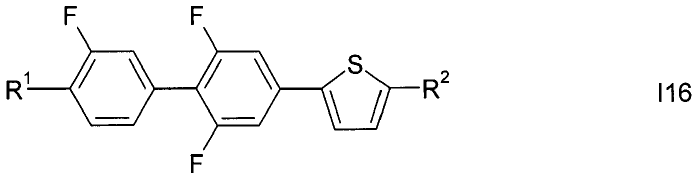 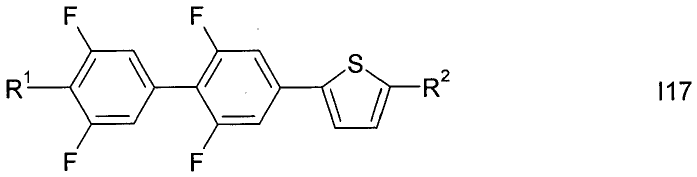 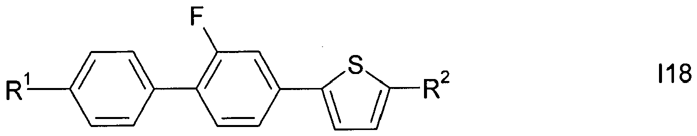 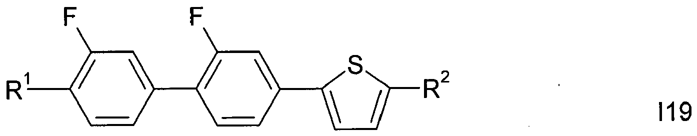 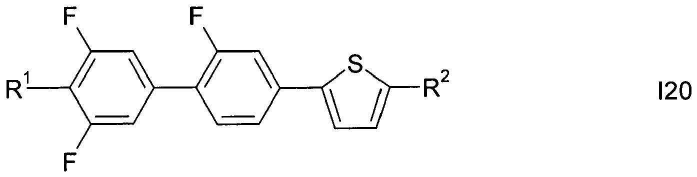 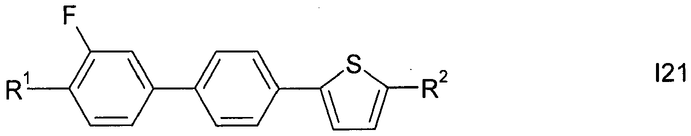 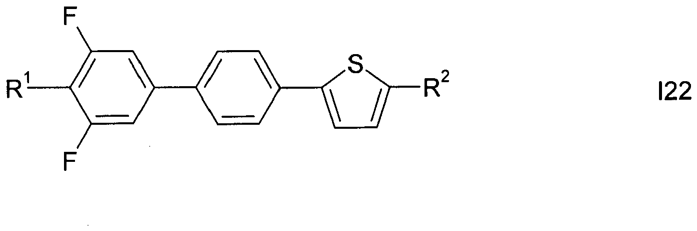 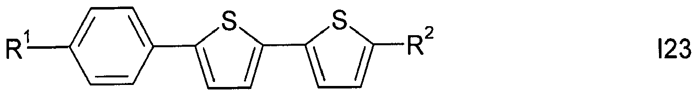 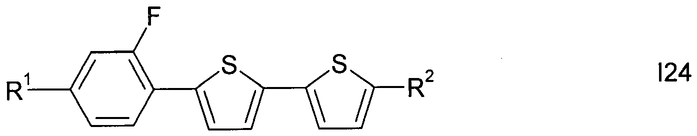 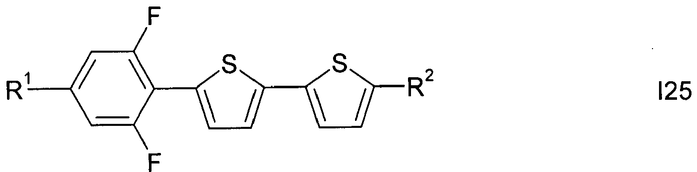 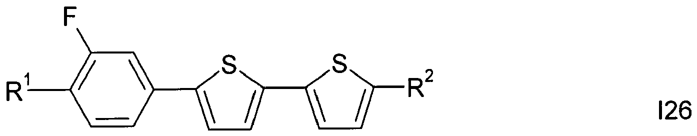 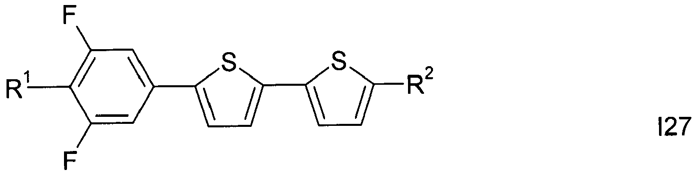 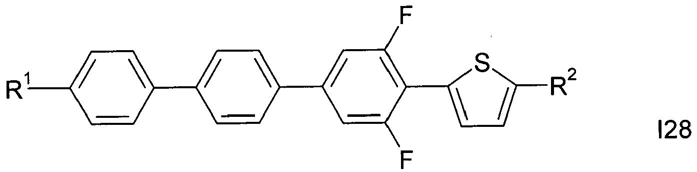 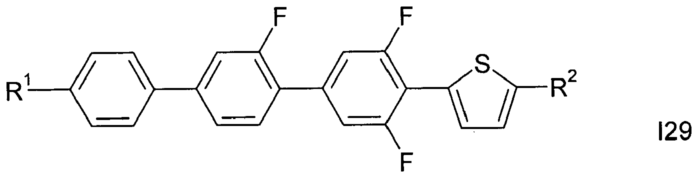 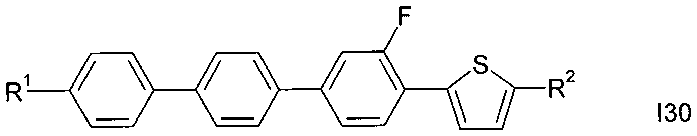 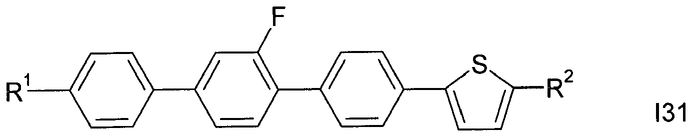 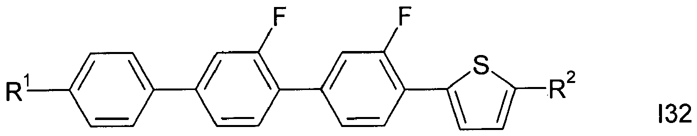 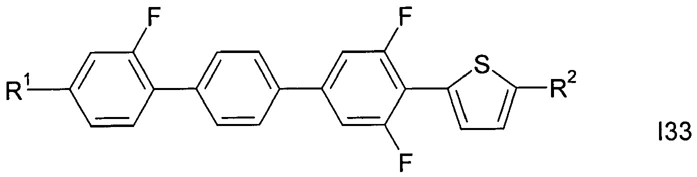 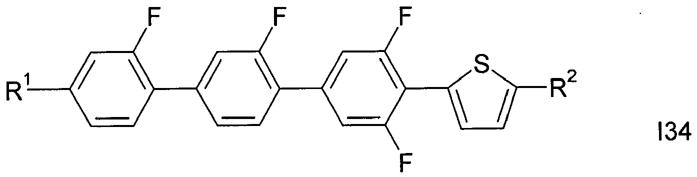 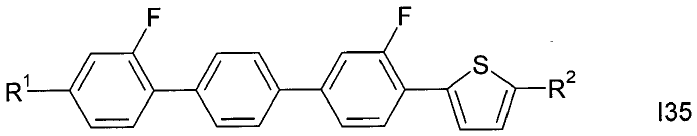 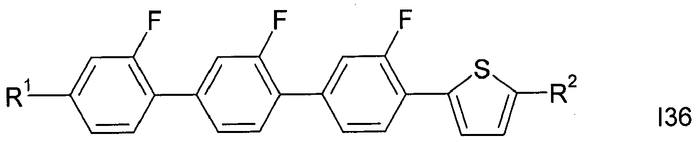 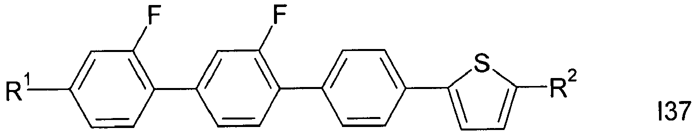 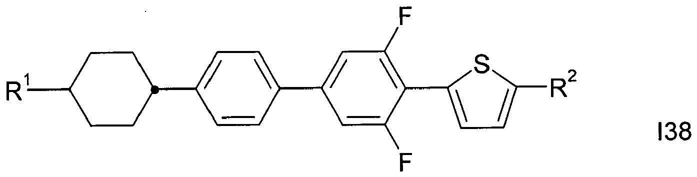 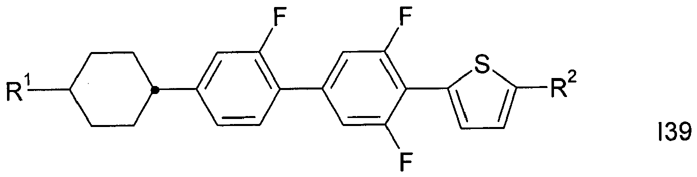 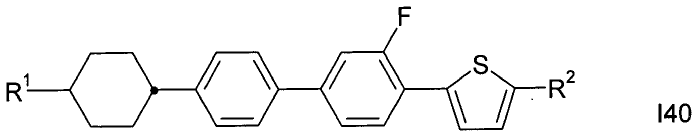 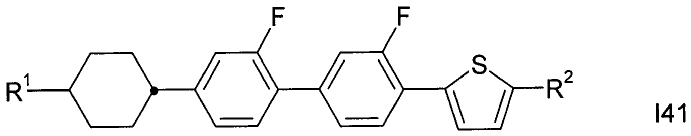 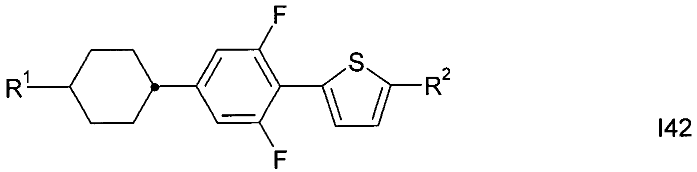 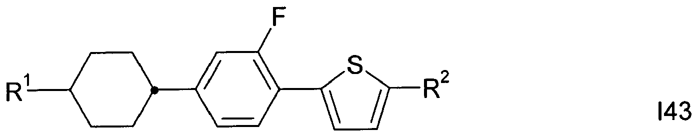 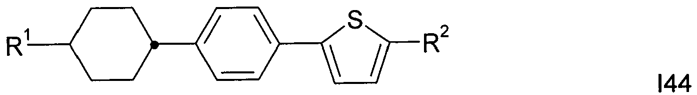 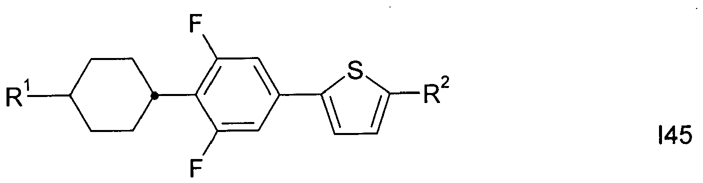 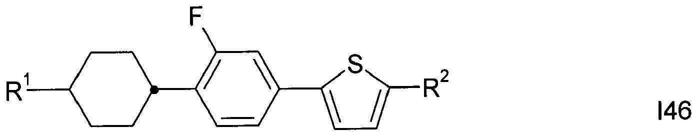 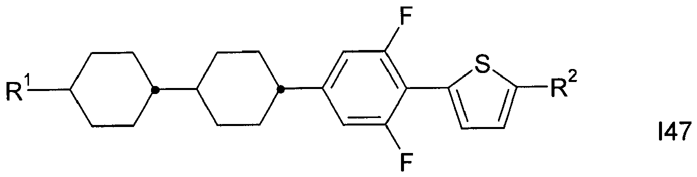 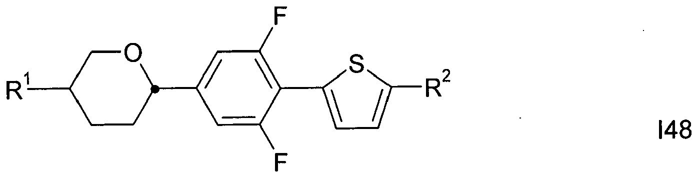 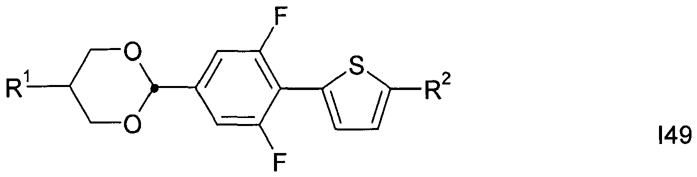 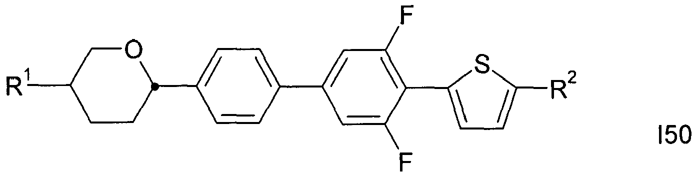 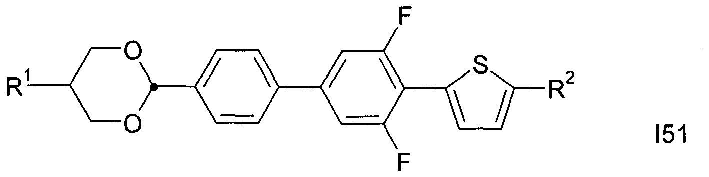 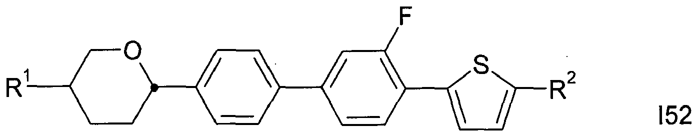 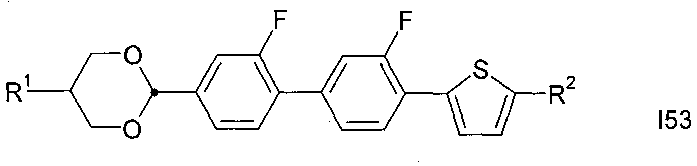 worin R¹ und R² die in Anspruch 1 angegebenen Bedeutungen besitzen.

3. FK-Medium nach Anspruch 1 oder 2, **dadurch gekennzeichnet, dass** es 40 Gew.-% oder mehr Gehalt an einer oder mehreren Verbindungen der Formel I oder einer oder mehreren Verbindungen ausgewählt aus den Formeln 11 bis 153 aufweist.

4. FK-Medium nach einem oder mehreren der Ansprüche 1 bis 3,
**dadurch gekennzeichnet, dass**
R¹ und R² unabhängig ein geradkettiges oder verzweigtes Alkyl mit 1 bis 7 C-Atomen, worin auch eine oder mehrere nicht benachbarte CH₂-Gruppen jeweils unabhängig voneinander durch -CH=CH-, -C≡C-, -O-, -CO-, -CO-O-, -O-CO- oder -O-CO-O- so ersetzt sein können, dass O-Atome nicht direkt miteinander verknüpft sind, bedeuten.

5. FK-Medium nach einem oder mehreren der Ansprüche 1 bis 4, **dadurch gekennzeichnet, dass** es bei Raumtemperatur eine nematische Phase aufweist.

6. FK-Medium nach einem oder mehreren der Ansprüche 1 bis 5, **dadurch gekennzeichnet, dass** es zusätzliche eine oder mehrere Verbindungen der Formel 11 und/oder III enthält: 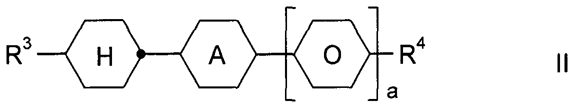 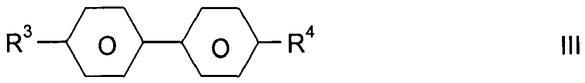 worin
A 1,4-Phenylen oder trans-1,4-Cyclohexylen bedeutet,
a 0 oder 1 ist,
R³ Alkyl oder Alkenyl mit 1 bis 8 bzw. 2 bis 9 C-Atomen bedeutet, und
R⁴ Alkyl mit 1 bis 12 C-Atomen, wobei auch eine oder zwei nicht benachbarte CH₂-Gruppen durch -O-, -CH=CH-, -CO-, -OCO- oder -COO- so ersetzt sein können, dass O-Atome nicht direkt miteinander verknüpft sind, bedeutet.

7. FK-Medium nach einem oder mehreren der Ansprüche 1 bis 6, **dadurch gekennzeichnet, dass** es zusätzlich eine oder mehrere Verbindungen ausgewählt aus der Gruppe bestehend aus folgenden Formeln enthält 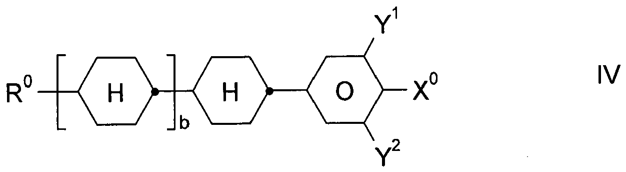 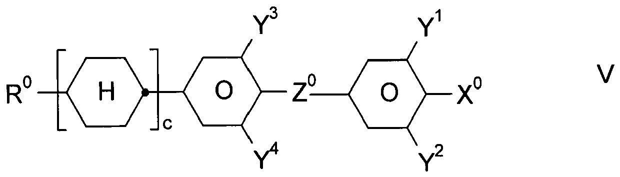 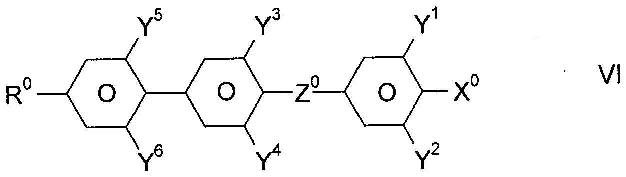 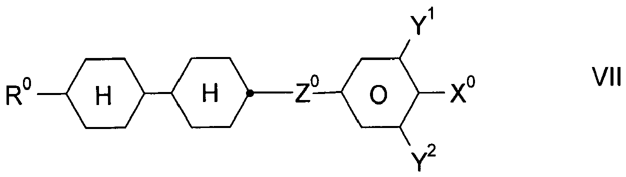 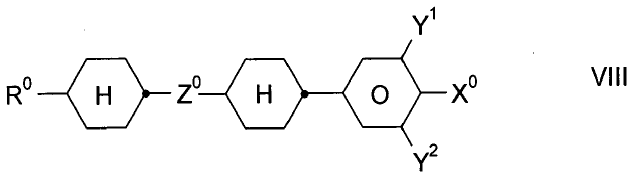 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 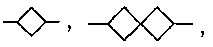 -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰ F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
Y¹⁻⁶ jeweils unabhängig voneinander H oder F,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
b und c jeweils unabhängig voneinander 0 oder 1
bedeuten.

8. FK-Medium nach einem oder mehreren der Ansprüche 1 bis 7, **dadurch gekennzeichnet, dass** es zusätzlich eine oder mehrere Verbindungen ausgewählt aus der Gruppe bestehend aus folgenden Formeln enthält 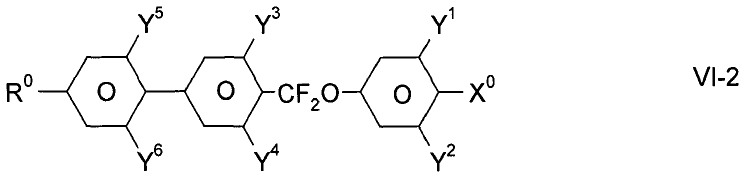 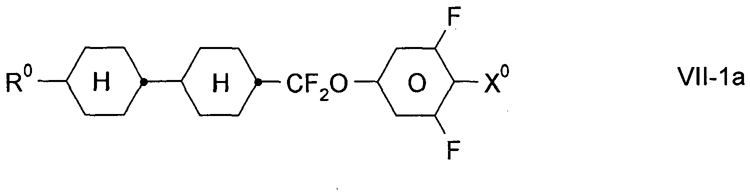 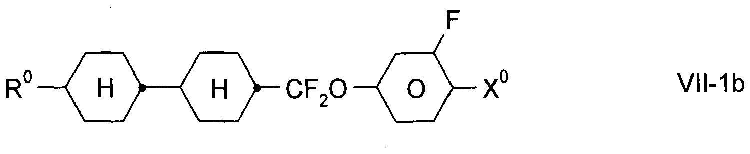 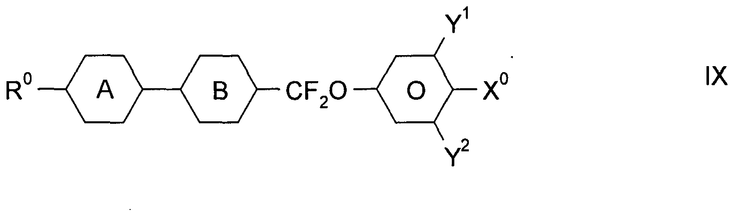 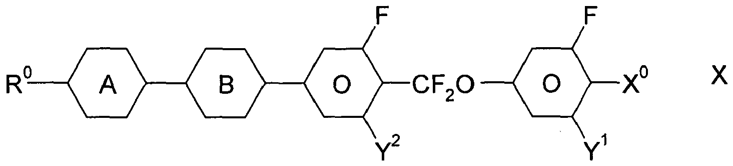 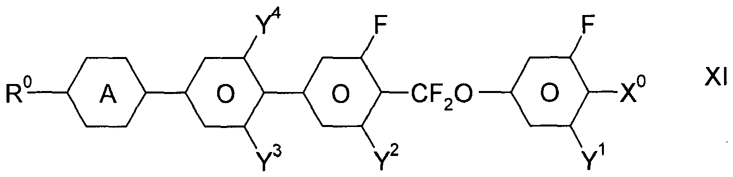 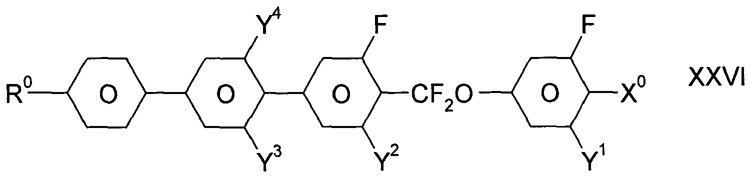 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 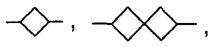 -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰ F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
Y¹⁻⁶ jeweils unabhängig voneinander H oder F, und 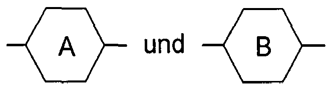 jeweils unabhängig voneinander 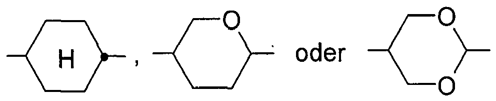 bedeuten, wobei in Formel IX die Ringe A und B nicht beide gleichzeitig Cyclohexylen bedeuten.

9. FK-Medium nach einem oder mehreren der Ansprüche 1 bis 8, **dadurch gekennzeichnet, dass** es zusätzlich eine oder mehrere Verbindungen der folgenden Formel enthält: 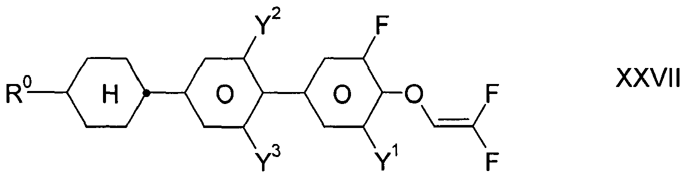 worin R⁰ und Y¹⁻³ die in Anspruch 8 angegebenen Bedeutungen besitzen.

10. Verfahren zur Herstellung eine FK-Mediums nach einem oder mehreren der Ansprüche 1 bis 9, **dadurch gekennzeichnet, dass** man eine oder mehrere Verbindungen der Formel I mit einer oder mehreren Verbindungen der Formeln II-XI, XXVI oder mit weiteren flüssigkristallinen Verbindungen und/oder Additiven mischt.

11. Verwendung eines FK-Mediums nach einem oder mehreren der Ansprüche 1 bis 9 für elektrooptische Zwecke.

12. Elektrooptische Vorrichtung enthaltend ein FK-Medium nach einem oder mehreren der Ansprüche 1 bis 9.

13. Vorrichtung nach Anspruch 12, **dadurch gekennzeichnet, dass** die Vorrichtung eine Anzeigevorrichtung oder schaltbare Linse ist.

## Claims

1. LC medium comprising 30% by weight or more of one or more compounds of the formula I 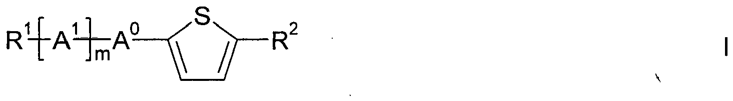 in which the individual radicals have the following meaning:
R¹ and R² denote H, F, Cl, Br, -CN, -SCN, -NCS, SF₅ or straight-chain or branched alkyl having 1 to 12 C atoms, in which, in addition, one or more non-adjacent CH₂ groups may each be replaced, independently of one another, by -CH=CH-, -C≡C-, -O-, -CO-, -CO-O-, -O-CO-, -O-CO-O- in such a way that O atoms are not linked directly to one another, and in which, in addition, one or more H atoms may be replaced by F, Cl or Br,
A⁰ denotes 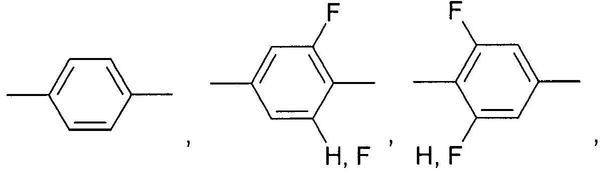 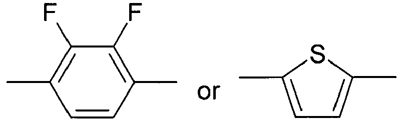
A¹, independently of one another, denotes phenylene-1,4-diyl, in which, in addition, one or two CH groups may be replaced by N and one or more H atoms may be replaced by halogen, CN, CH₃, CHF₂, CH₂F, OCH₃, OCHF₂ or OCF₃, cyclohexane-1,4-diyl, in which, in addition, one or two non-adjacent CH₂ groups may be replaced, independently of one another, by O and/or S and one or more H atoms may be replaced by F, or denotes cyclohexene-1,4-diyl, bicyclo[1.1.1]pentane-1,3-diyl, bicyclo[2.2.2]octane-1,4-diyl, spiro[3.3]-heptane-2,6-diyl, tetrahydropyran-2,5-diyl or 1,3-dioxane-2,5-diyl,
m in each case, independently of one another, denotes 0, 1 or 2.

2. LC medium according to Claim 1, **characterised in that** it comprises one or more compounds selected from the group consisting of the following formulae: 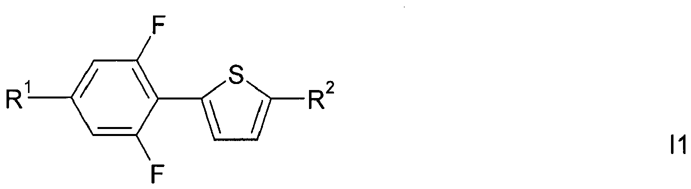 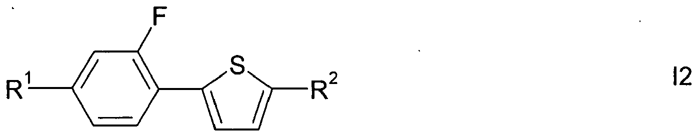 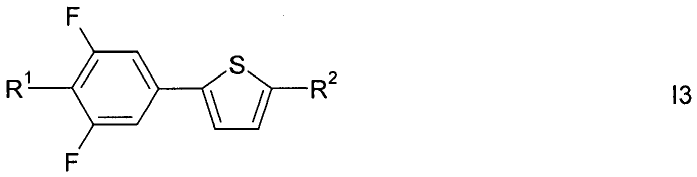 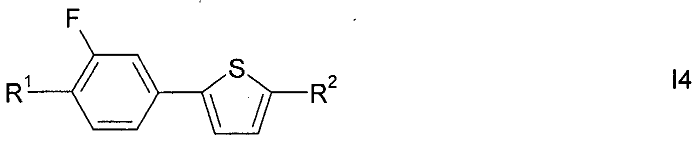 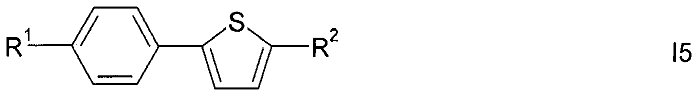 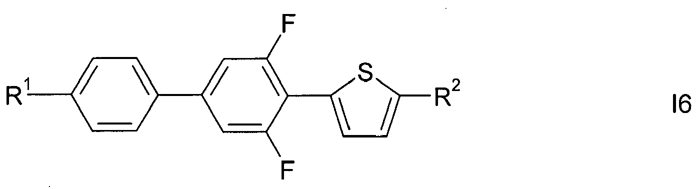 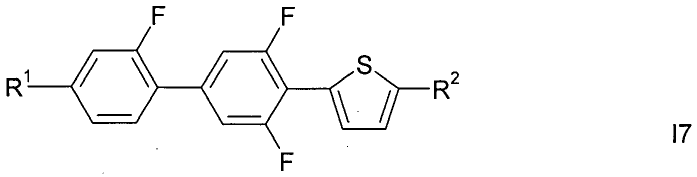 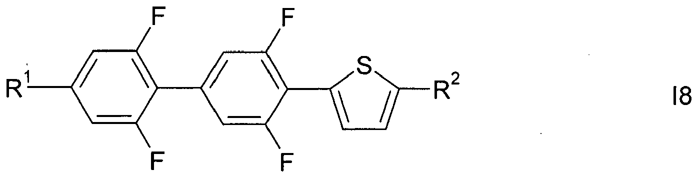 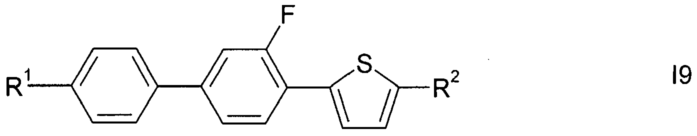 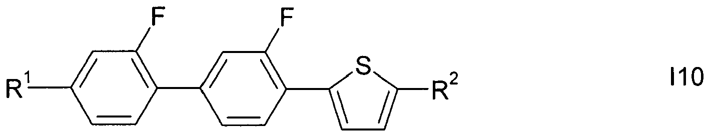 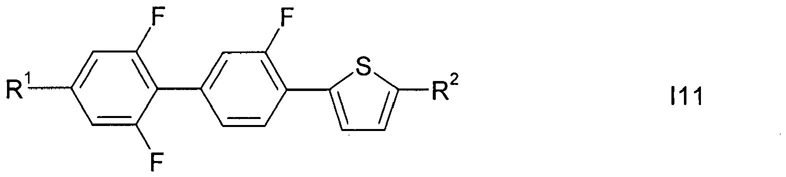 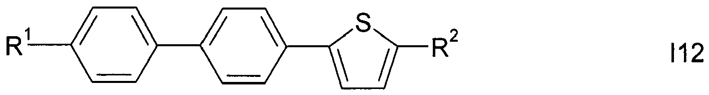 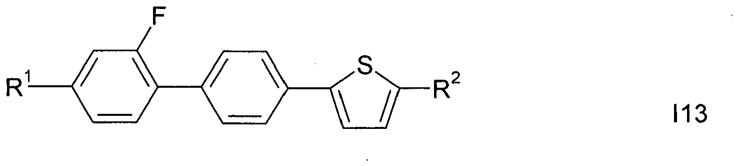 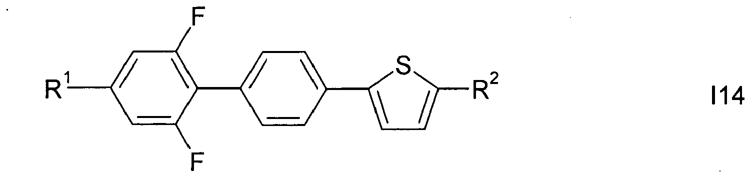 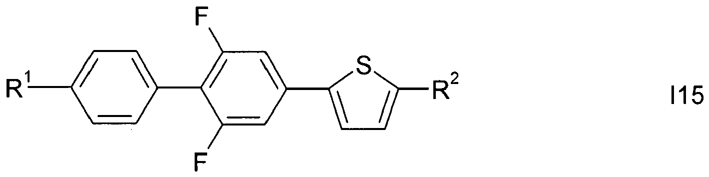 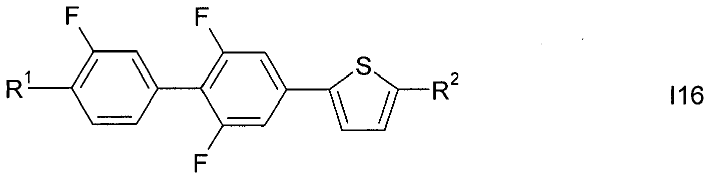 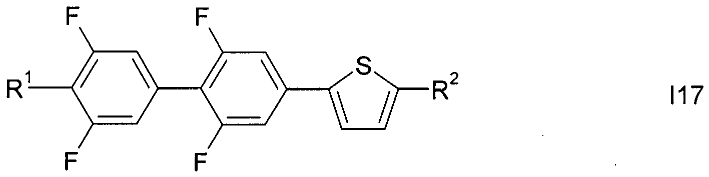 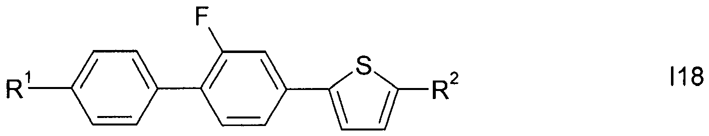 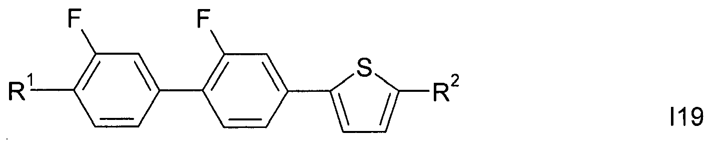 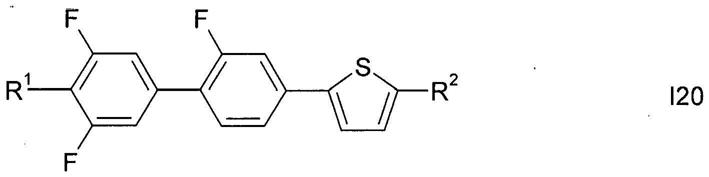 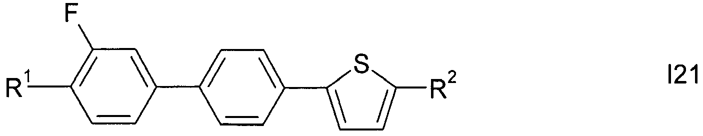 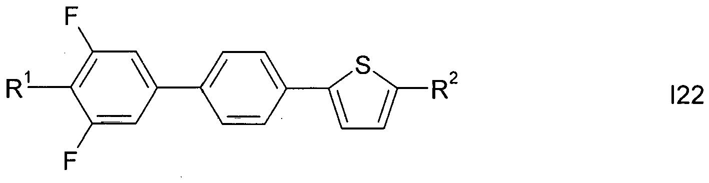 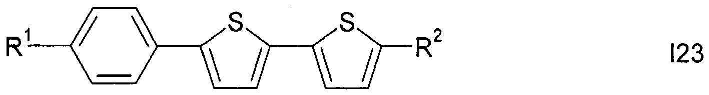 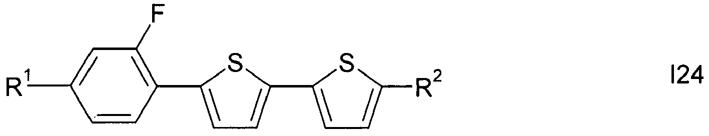 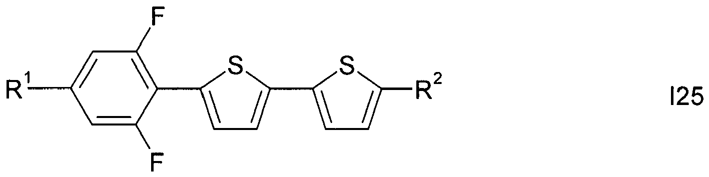 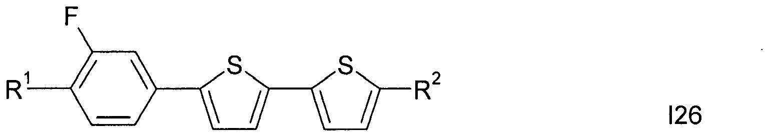 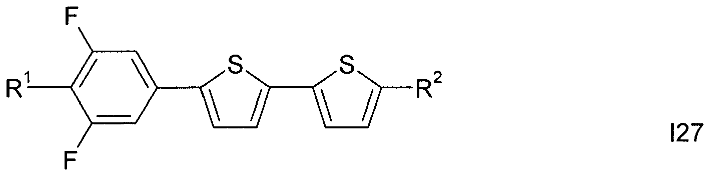 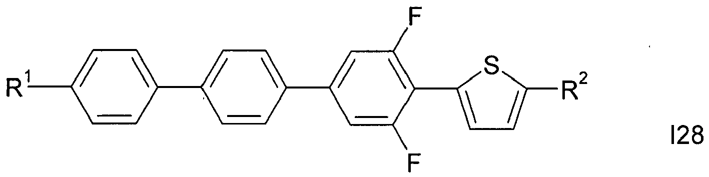 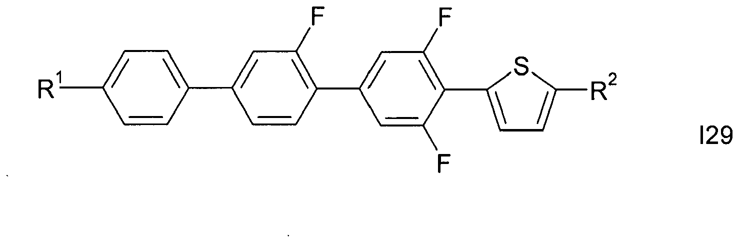 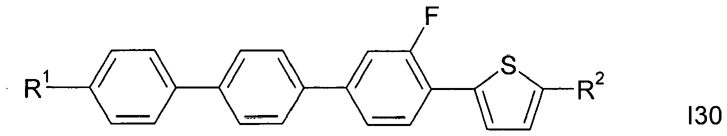 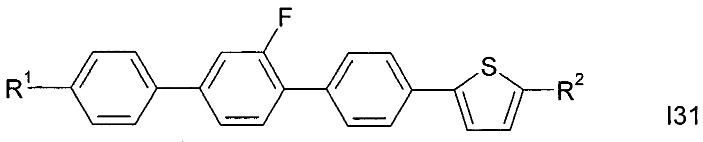 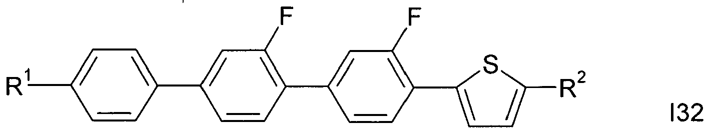 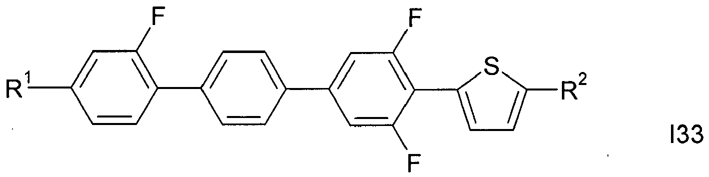 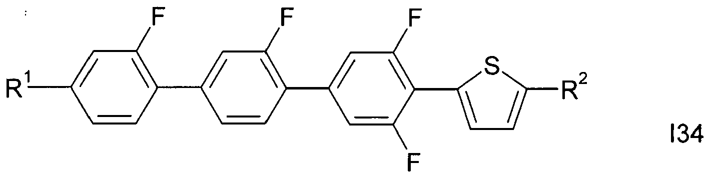 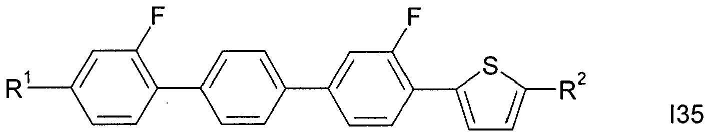 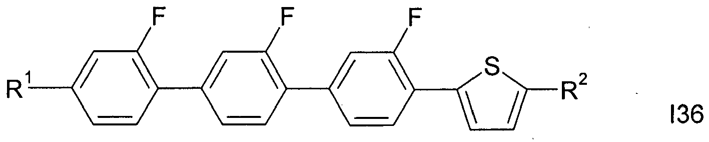 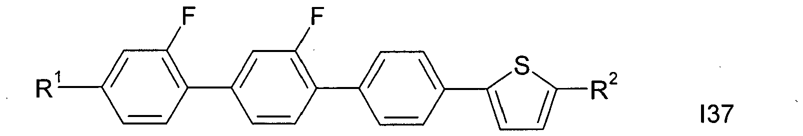 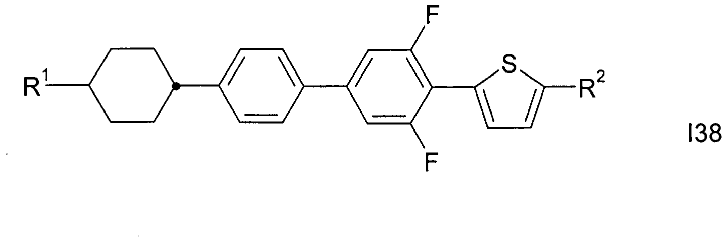 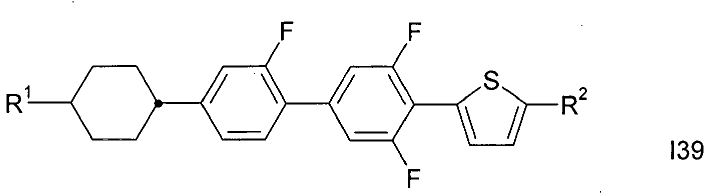 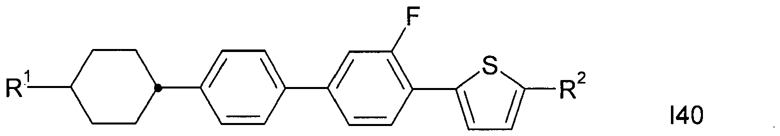 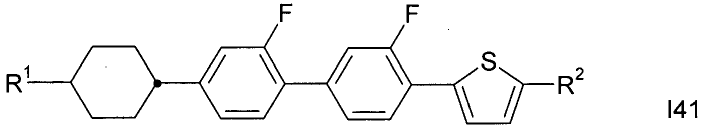 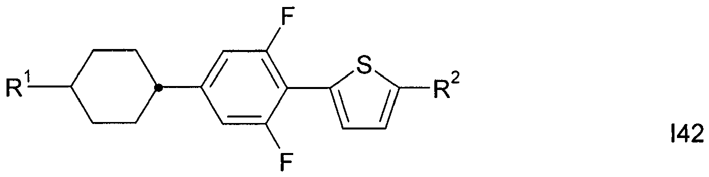 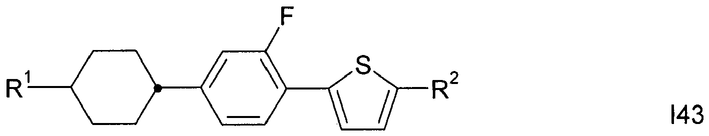 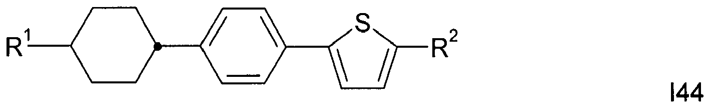 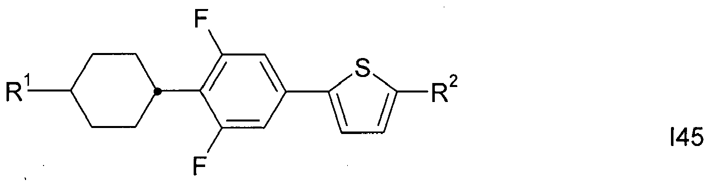 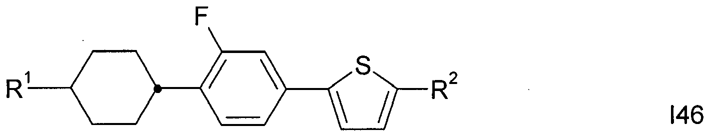 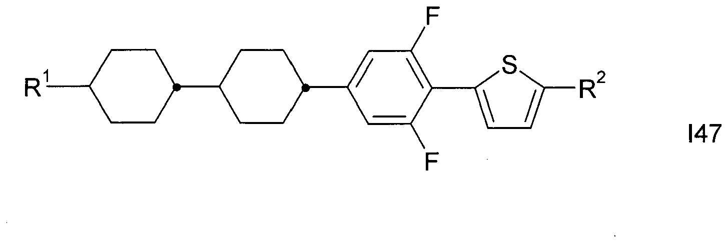 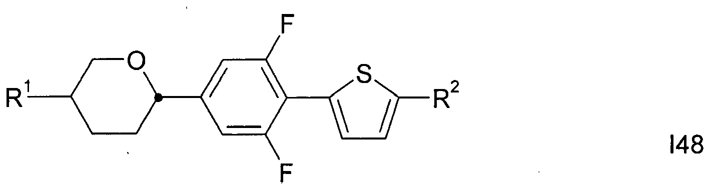 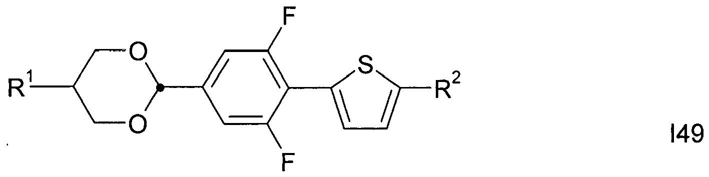 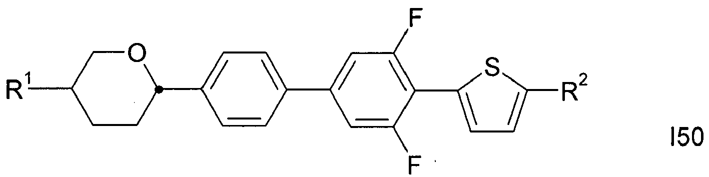 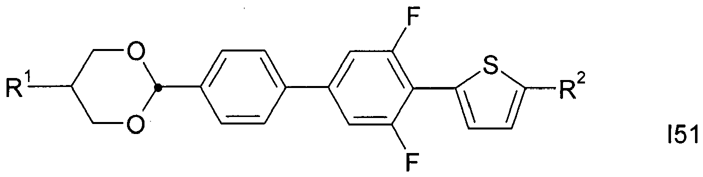 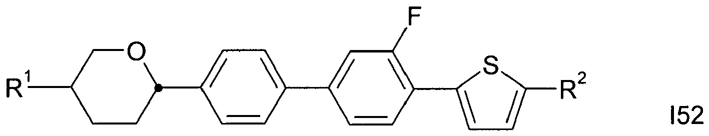 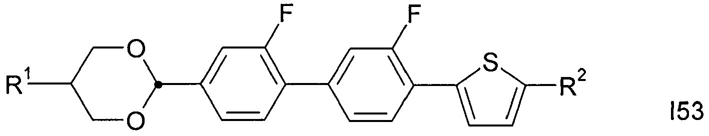 in which R¹ and R² have the meanings indicated in Claim 1.

3. LC medium according to Claim 1 or 2, **characterised in that** it has a content of 25% by weight or more of one or more compounds of the formula I or one or more compounds selected from the formulae I1 to I53.

4. LC medium according to one or more of Claims 1 to 3, **characterised in that**
R¹ and R² independently denote a straight-chain or branched alkyl having 1 to 7 C atoms, in which, in addition, one or more non-adjacent CH₂ groups may each be replaced, independently of one another, by -CH=CH-, -C≡C-, -O-, -CO-, -CO-O-, -O-CO- or -O-CO-O- in such a way that O atoms are not linked directly to one another.

5. LC medium according to one or more of Claims 1 to 4, **characterised in that** it has a nematic phase at room temperature.

6. LC medium according to one or more of Claims 1 to 5, **characterised in that** it additionally comprises one or more compounds of the formula II and/or III: 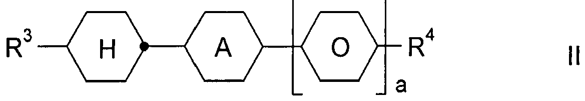 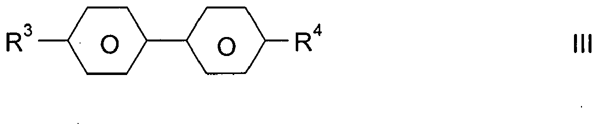 in which
A denotes 1,4-phenylene or trans-1,4-cyclohexylene,
a is 0 or 1,
R³ denotes alkyl or alkenyl having 1 to 8 or 2 to 9 C atoms respectively, and
R⁴ denotes alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another.

7. LC medium according to one or more of Claims 1 to 6, **characterised in that** it additionally comprises one or more compounds selected from the group consisting of the following formulae: 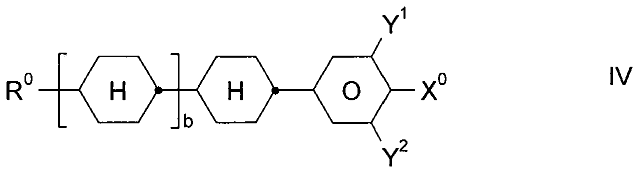 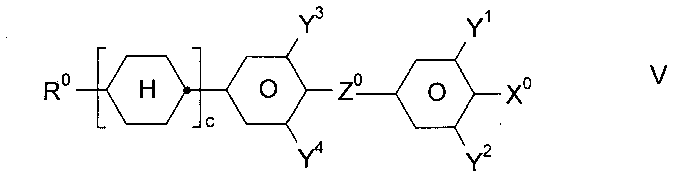 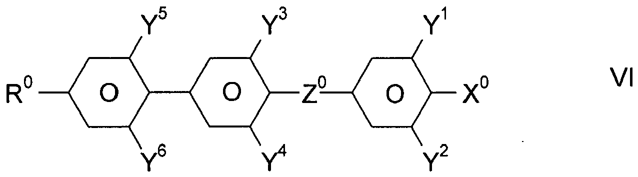 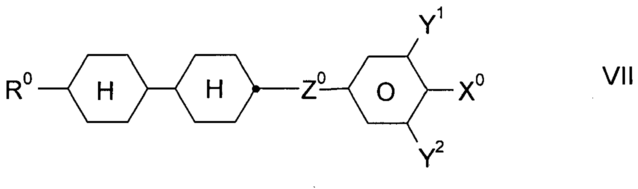 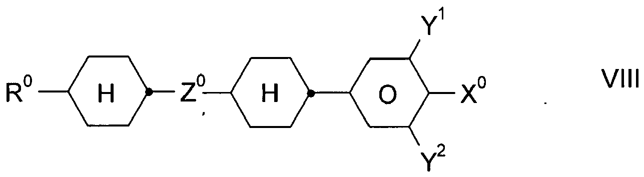 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 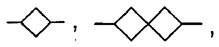 -O-, -CO-O- or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, each having up to 6 C atoms,
Y¹⁻⁶ each, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in the formulae V and VI also a single bond, and
b and c each, independently of one another, denote 0 or 1.

8. LC medium according to one or more of Claims 1 to 7, **characterised in that** it additionally comprises one or more compounds selected from the group consisting of the following formulae: 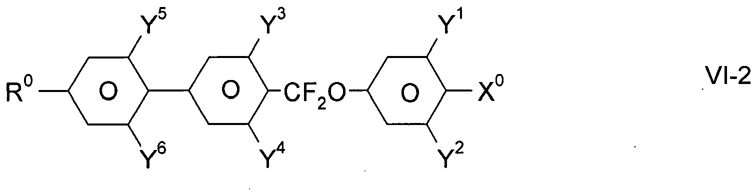 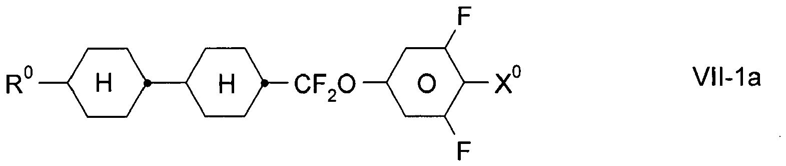 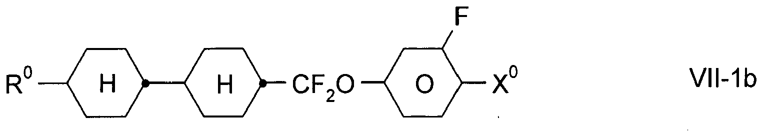 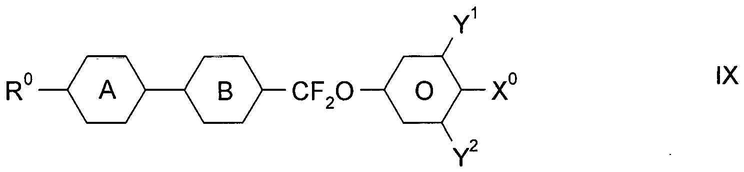 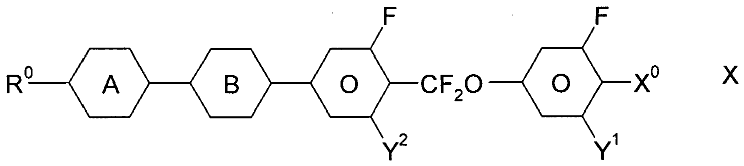 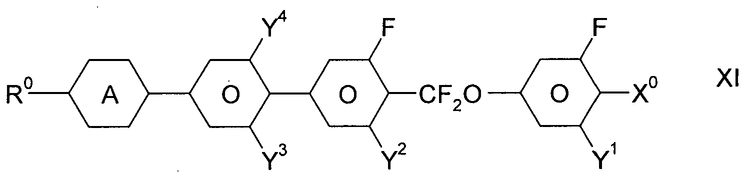 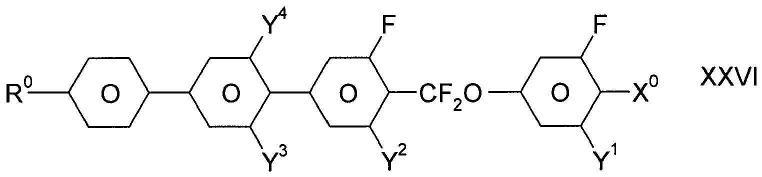 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 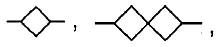 -O-, -CO-O- or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, each having up to 6 C atoms,
Y¹⁻⁶ each, independently of one another, denote H or F, and 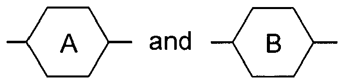 each, independently of one another, denote 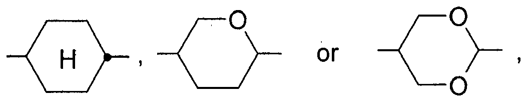 where the rings A and B in formula IX do not both simultaneously denote cyclohexylene.

9. LC medium according to one or more of Claims 1 to 8, **characterised in that** it additionally comprises one or more compounds of the following formula: 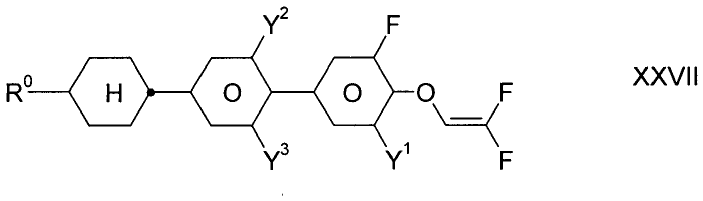 in which R⁰ and Y¹⁻³ have the meanings indicated in Claim 8.

10. Process for the preparation of an LC medium according to one or more of Claims 1 to 9, **characterised in that** one or more compounds of the formula I are mixed with one or more compounds of the formulae II-XI, XXVI or with further liquid-crystalline compounds and/or additives.

11. Use of an LC medium according to one or more of Claims 1 to 9 for electro-optical purposes.

12. Electro-optical device containing an LC medium according to one or more of Claims 1 to 9.

13. Device according to Claim 12, **characterised in that** the device is a display device or a switchable lens.

## Revendications

1. Milieu LC comprenant 30% en poids ou plus d'un ou de plusieurs composé(s) de la formule I : 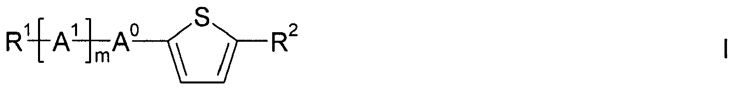 dans laquelle les radicaux individuels présentent la signification qui suit :
R¹ et R² représentent H, F, Cl, Br, -CN, -SCN, -NCS, SF₅ ou alkyle en chaîne droite ou ramifié comportant 1 à 12 atome(s) de C, où, en outre, un ou plusieurs groupe(s) CH₂ non adjacents peut/peuvent chacun être remplacé(s), indépendamment les uns des autres, par -CH=CH-, -C≡C-, -O-, -CO-, -CO-O-, -O-CO-, -O-CO-O-de telle sorte que des atomes de O ne soient pas liés directement les uns aux autres, et où, en outre, un ou plusieurs atome(s) de H peut/peuvent être remplacé(s) par F, Cl ou Br,
A⁰ représente 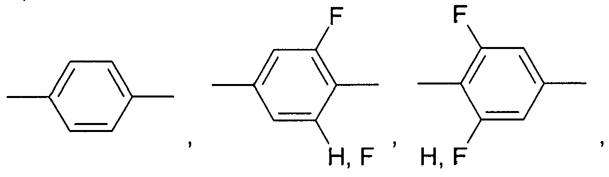 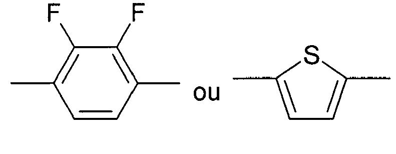
A¹ représente, indépendamment les uns des autres, phénylène-1,4-diyle, où, en outre, un ou deux groupe(s) CH peut/peuvent être remplacé(s) par N et un ou plusieurs atome(s) de H peut/peuvent être remplacé(s) par halogène, CN, CH₃, CHF₂, CH₂F, OCH₃, OCHF₂ ou OCF₃, cyclohexane-1,4-diyle, où, en outre, un ou deux groupe(s) CH₂ non adjacents peut/peuvent être remplacé(s), indépendamment l'un de l'autre, par O et/ou S et un ou plusieurs atome(s) de H peut/ peuvent être remplacé(s) par F, ou représente cyclo-hexène-1,4-diyle, bicyclo[1.1.1]pentane-1,3-diyle, bicyclo[2.2.2]octane-1,4-diyle, spiro[3.3]heptane-2,6-diyle, tétrahydropyran-2,5-diyle ou 1,3-dioxane-2,5-diyle,
m représente, dans chaque cas, indépendamment les uns des autres, 0, 1 ou 2.

2. Milieu LC selon la revendication 1, **caractérisé en ce qu'**il comprend un ou plusieurs composé(s) choisi(s) parmi le groupe constitué par les formules qui suivent : 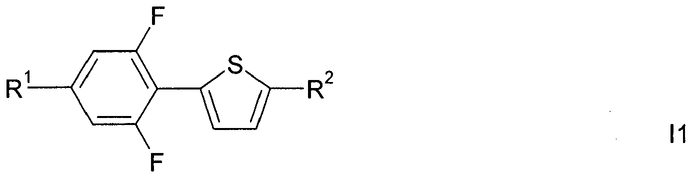 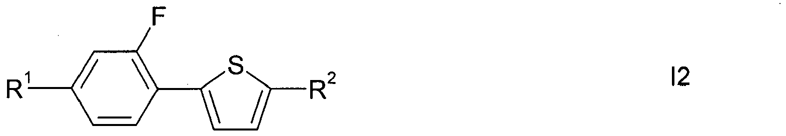 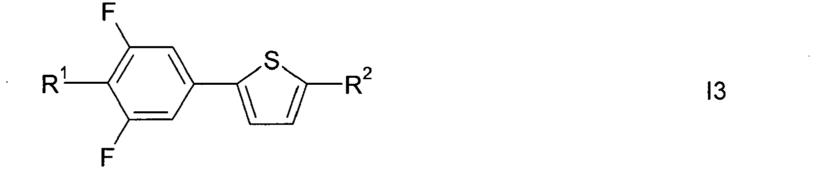 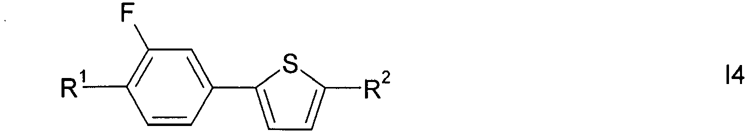 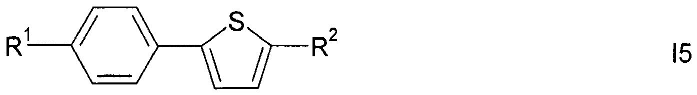 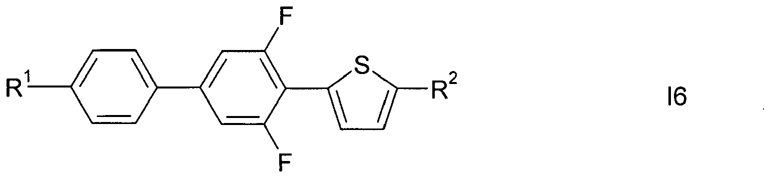 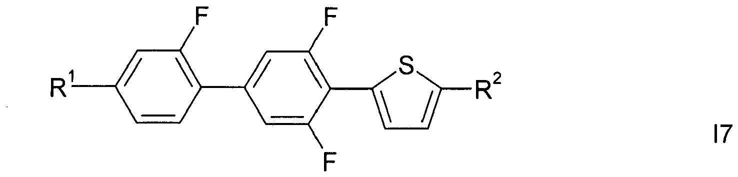 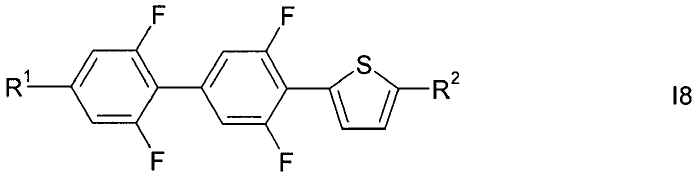 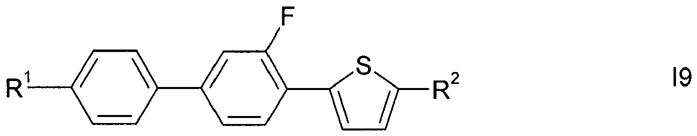 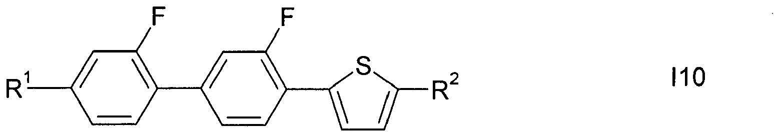 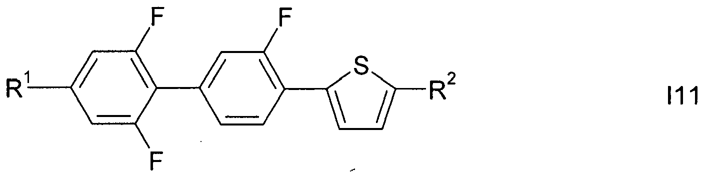 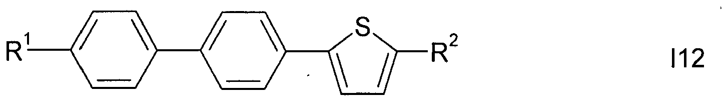 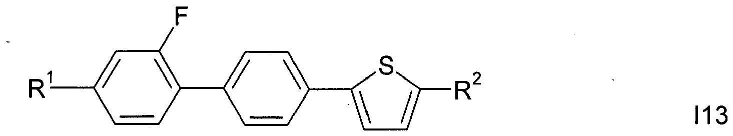 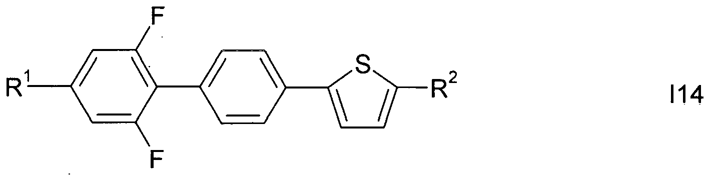 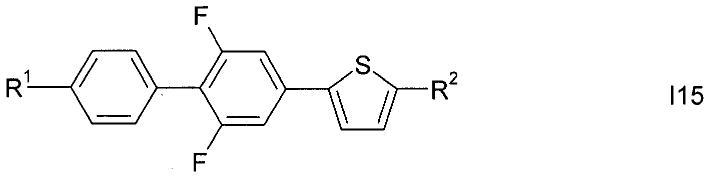 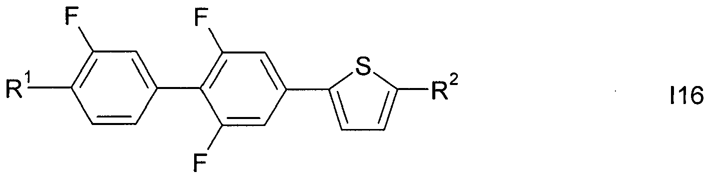 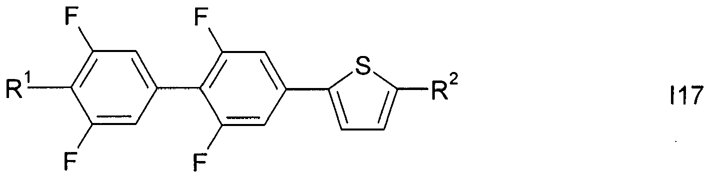 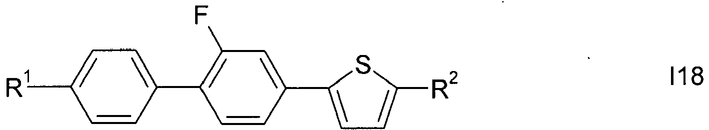 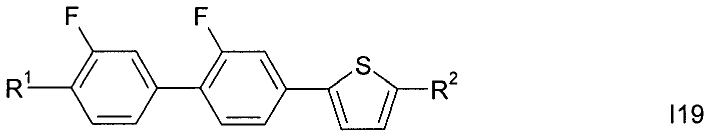 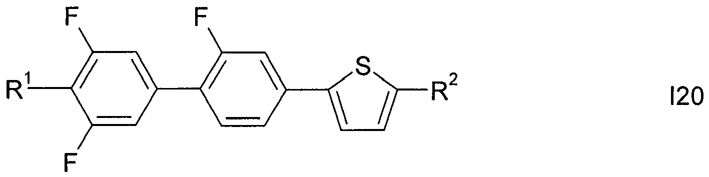 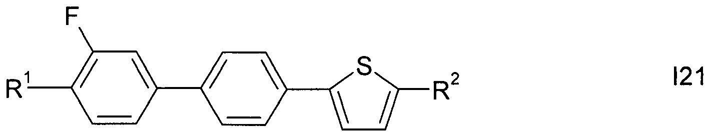 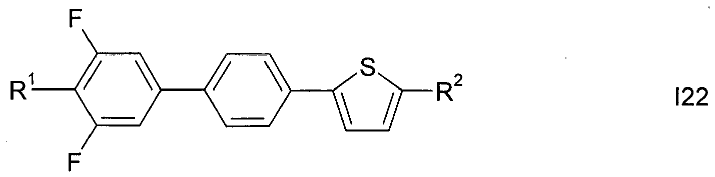 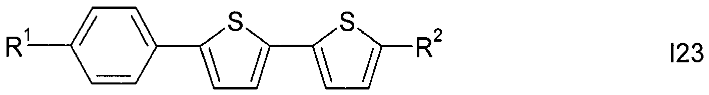 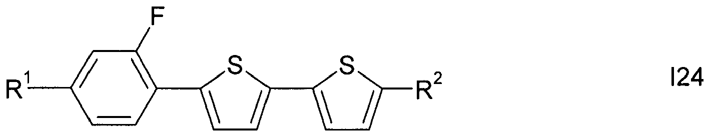 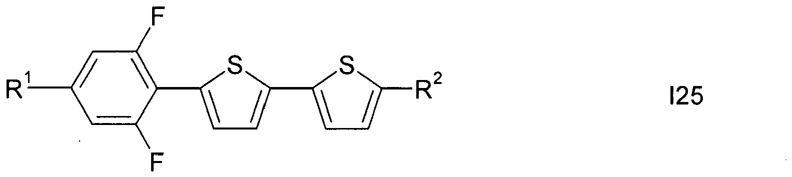 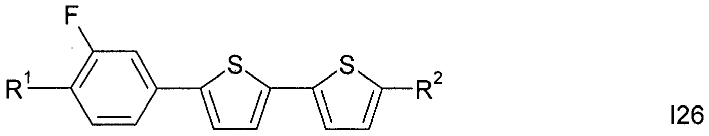 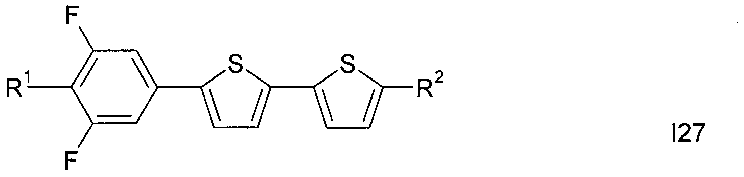 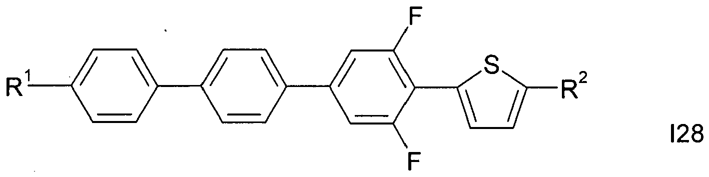 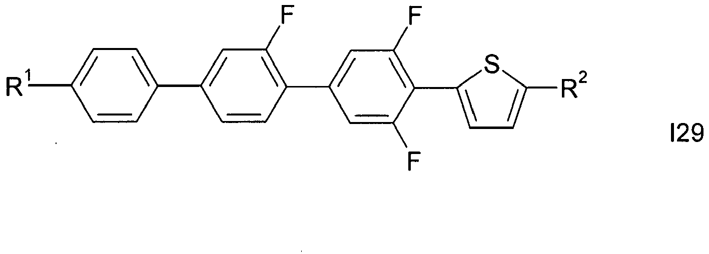 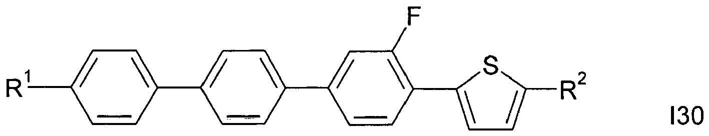 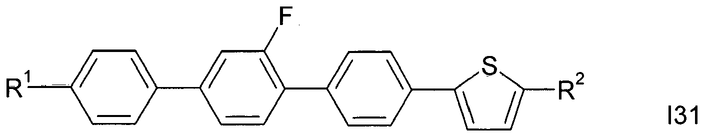 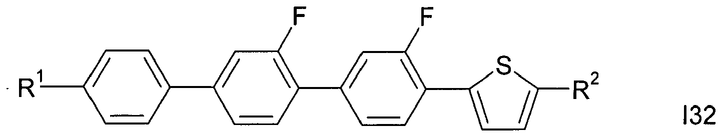 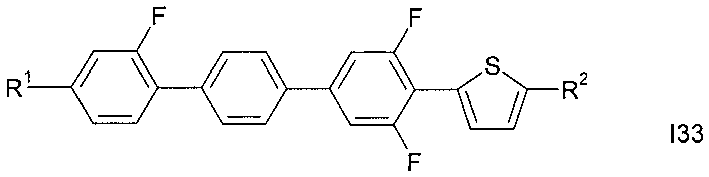 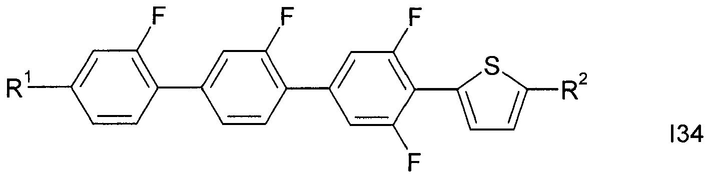 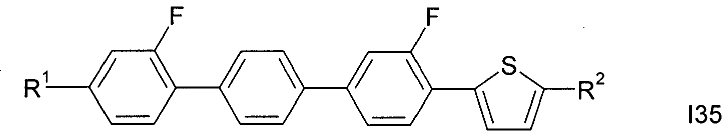 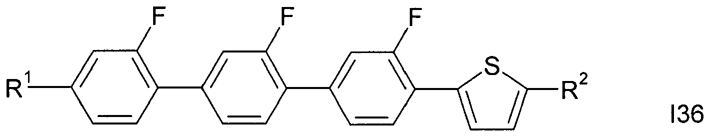 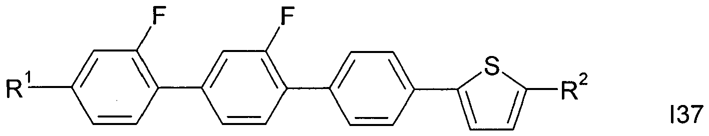 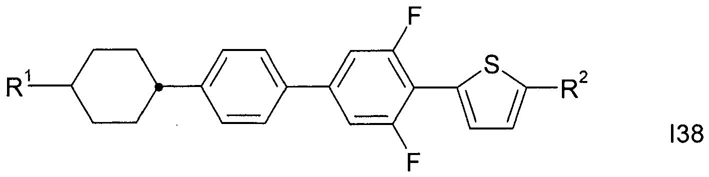 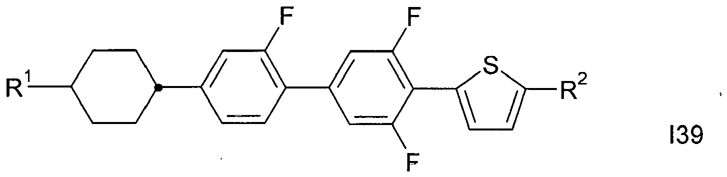 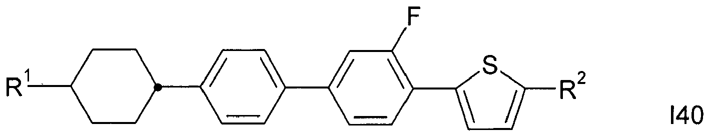 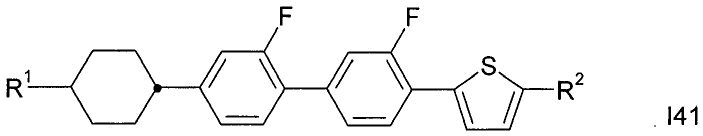 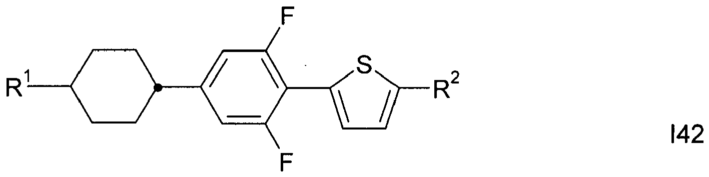 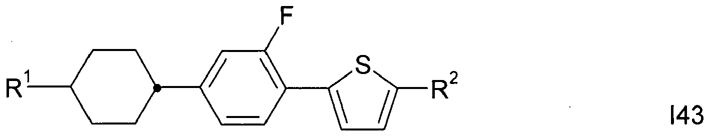 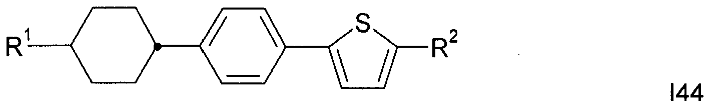 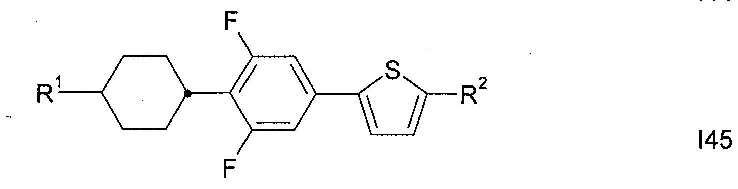 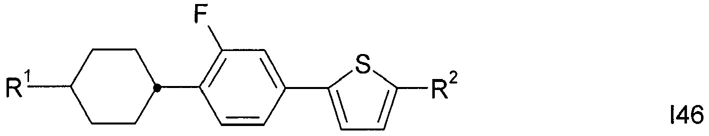 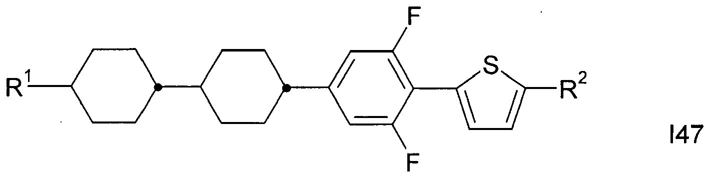 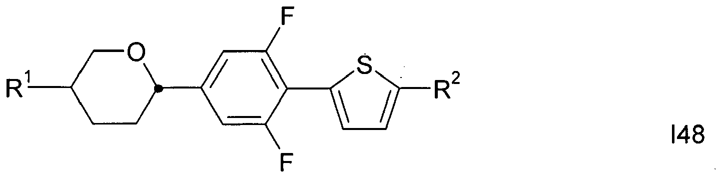 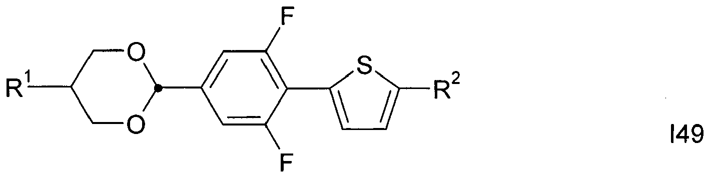 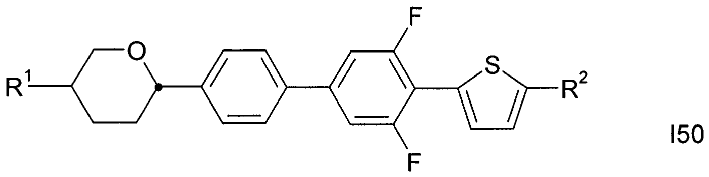 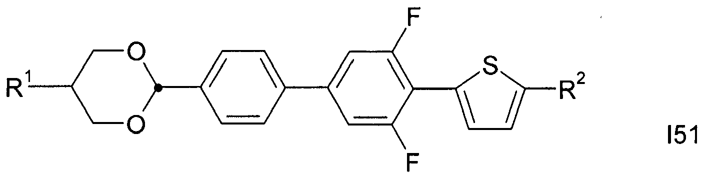 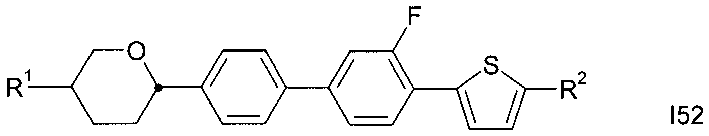 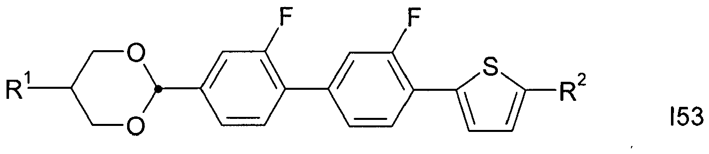 dans lesquelles R¹ et R² présentent les significations indiquées selon la revendication 1.

3. Milieu LC selon la revendication 1 ou 2, **caractérisé en ce qu'**il présente une teneur de 25% en poids ou plus d'un ou de plusieurs composé(s) de la formule I ou d'un ou de plusieurs composé(s) choisi(s) parmi les formules I1 à I53.

4. Milieu LC selon une ou plusieurs des revendications 1 à 3, **caractérisé en ce que** :
R¹ et R² représentent, de manière indépendante, alkyle en chaîne droite ou ramifié comportant 1 à 7 atome(s) de C, où, en outre, un ou
plusieurs groupe(s) CH₂ non adjacents peut/peuvent chacun être remplacé(s), indépendamment les uns des autres, par -CH=CH-, -C≡C-, -O-, -CO-, -CO-O-, -O-CO- ou -O-CO-O- de telle sorte que des atomes de O ne soient pas liés directement les uns aux autres.

5. Milieu LC selon une ou plusieurs des revendications 1 à 4, **caractérisé en ce qu'**il présente une phase nématique à température ambiante.

6. Milieu LC selon une ou plusieurs des revendications 1 à 5, **caractérisé en ce qu'**il comprend de façon additionnelle un ou plusieurs composé(s) de la formule II et/ou III : 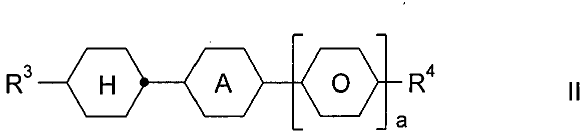 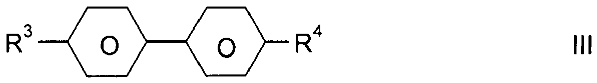 dans lesquelles :
A représente 1,4-phénylène ou trans-1,4-cyclohexylène,
a est 0 ou 1,
R³ représente alkyle ou alkényle comportant respectivement 1 à 8 ou 2 à 9 atome(s) de C, et
R⁴ représente alkyle comportant 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres.

7. Milieu LC selon une ou plusieurs des revendications 1 à 6, **caractérisé en ce qu'**il comprend de façon additionnelle un ou plusieurs composé(s) choisi(s) parmi le groupe constitué par les formules qui suivent : 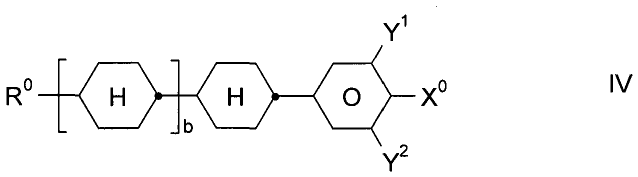 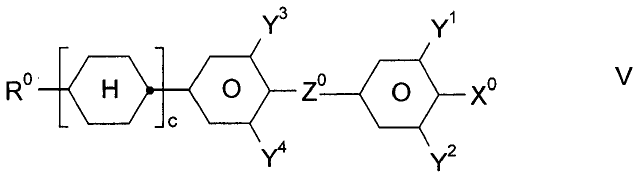 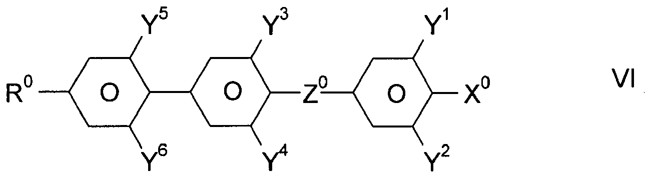 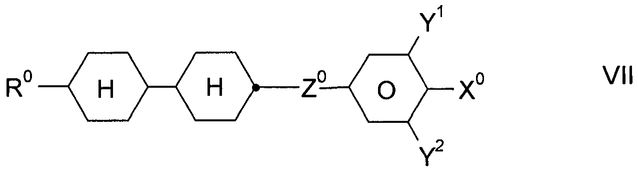 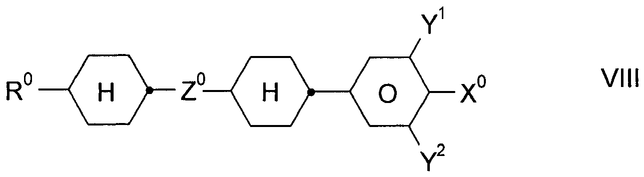 dans lesquelles :
R⁰ représente un radical alkyle ou alcoxy comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -CH=CH-, 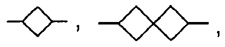 -O-, -CO-O- ou -O-CO- de telle sorte que des atomes de O ne soient pas liés directement les uns aux autres, et où, en outre, un ou plusieurs atome(s) de H peut/ peuvent être remplacé(s) par halogène,
X⁰ représente F, Cl, CN, SF₅, SCN, NCS, un radical alkyle halogéné, un radical alkényle halogéné, un radical alcoxy halogéné ou un radical alkényloxy halogéné, chacun comportant jusqu'à 6 atomes de C,
Y¹⁻⁶ représentent, chacun indépendamment les uns des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- ou -OCF₂-, dans les formules V et VI également une liaison simple, et
b et c représentent, chacun indépendamment de l'autre, 0 ou 1.

8. Milieu LC selon une ou plusieurs des revendications 1 à 7, **caractérisé en ce qu'**il comprend de façon additionnelle un ou plusieurs composé(s) choisi(s) parmi le groupe constitué par les formules qui suivent : 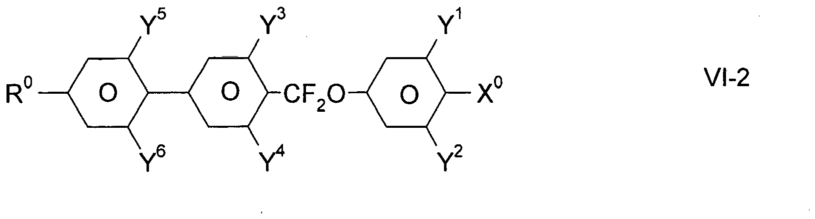 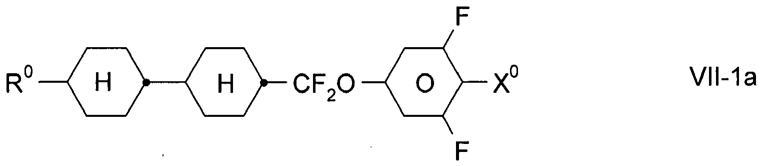 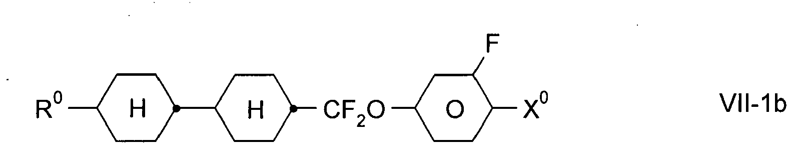 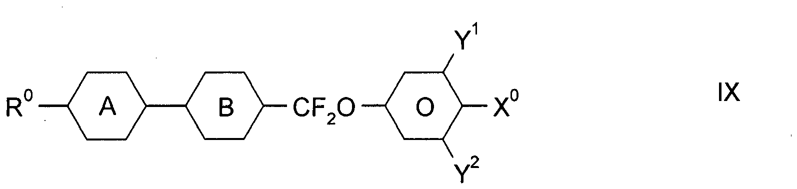 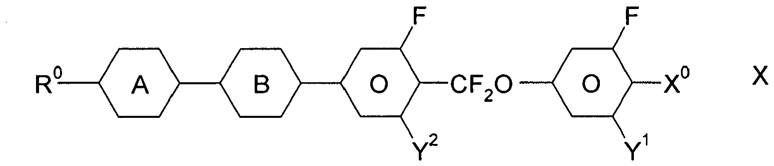 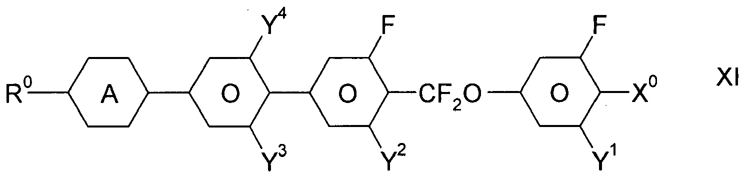 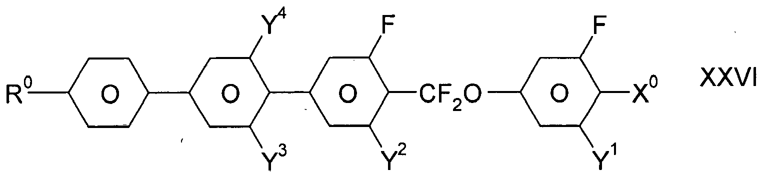 dans lesquelles :
R⁰ représente un radical alkyle ou alcoxy comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -CH=CH-, 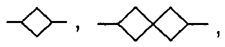 -O-, -CO-O- ou -O-CO- de telle sorte que des atomes de O ne soient pas liés directement les uns aux autres, et où, en outre, un ou plusieurs atome(s) de H peut/ peuvent être remplacé(s) par halogène,
X⁰ représente F, Cl, CN, SF₅, SCN, NCS, un radical alkyle halogéné, un radical alkényle halogéné, un radical alcoxy halogéné ou un radical alkényloxy halogéné, chacun comportant jusqu'à 6 atomes de C,
Y¹⁻⁶ représentent, chacun indépendamment des autres, H ou F, et 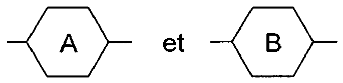 chacun indépendamment de l'autre, représentent 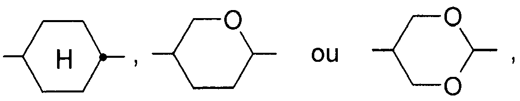 où les cycles A et B dans la formule IX ne représentent pas simultanément cyclohexylène.

9. Milieu LC selon une ou plusieurs des revendications 1 à 8, **caractérisé en ce qu'**il comprend de façon additionnelle un ou plusieurs composé(s) de la formule qui suit : 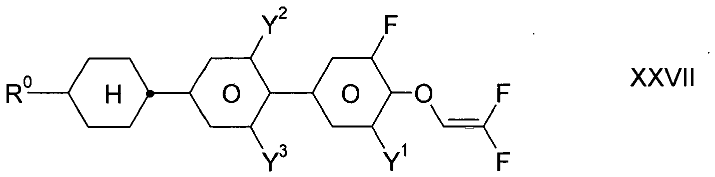 dans laquelle R⁰ et Y¹⁻³ présentent les significations indiquées selon la revendication 8.

10. Procédé pour la préparation d'un milieu LC selon une ou plusieurs des revendications 1 à 9, **caractérisé en ce qu'**un ou plusieurs composé(s) de la formule I est/sont mélangé(s) avec un ou plusieurs composé(s) des formules II-XI, XXVI ou avec d'autres composés cristallins liquides et/ou additifs.

11. Utilisation d'un milieu LC selon une ou plusieurs des revendications 1 à 9 à des fins électro-optiques.

12. Dispositif électro-optique contenant un milieu LC selon une ou plusieurs des revendications 1 à 9.

13. Dispositif selon la revendication 12, **caractérisé en ce que** le dispositif est un dispositif d'affichage ou une lentille commutable.
